# EUROPÄISCHE PATENTANMELDUNG

(11) **EP 1 270 145 A2**
(43) Veröffentlichungstag der Anmeldung: **02.01.2003**
(21) Anmeldenummer: 02013041.5
(22) Anmeldetag: 13.06.2002
(51) Int. Cl.: B23Q 39/02, B23Q 1/62

(54) **Werkzeugmaschine mit einem drehbaren Mehrfachwerkzeugträger**

(30) Priorität: 22.06.2001 DE 10130760; 22.03.2002 DE 10213778
(71) Anmelder: Traub Drehmaschinen GmbH, 73262 Reichenbach (DE)
(72) Erfinder: Baumann, Ulrich, 73252 Lenningen (DE)
(74) Vertreter: Hoeger, Stellrecht & Partner

(57) **Zusammenfassung**

Um eine Werkzeugmaschine umfassend ein Maschinengestell (10) eine an dem Maschinengestell gehaltene und um eine Spindelachse (28) drehbare Arbeitsspindel (26), zur Aufnahme eines Werkstücks (W), einen ersten Werkzeugträger (30) mit einem um eine Achse (62) gegenüber einem Lagergehäuse (58) drehbaren Werkzeugträgerkopf (60), wobei die Arbeitsspindel und der Werkzeugträgerkopf relativ zueinander mittels einer Steuerung mindestens in Richtung einer quer zur Spindelachse verlaufenden Querbewegungsachse und einer parallel zur Spindelachse verlaufenden Längsbewegungsachse gesteuert bewegbar sind und die Arbeitsspindel um die Spindelachse als gesteuerte C-Achse drehpositionierbar ist, derart zu verbessern, Werkstücke in möglichst kurzer Zeit und möglichst komplett zu bearbeiten, wird vorgeschlagen, daß die Achse quer zu einer durch die Querbewegungsachse und die Längsbewegungsachse aufgespannten Ebene (56) verläuft und daß der Werkzeugträgerkopf mehrere Werkzeuge (80,84,98) aufweist, die durch Drehen des Werkzeugträgerkopfes um die Achse relativ zum in der Arbeitsspindel aufgenommenen Werkstück in eine Arbeitsstellung bringbar sind.

## Beschreibung

Die Erfindung betrifft eine Werkzeugmaschine umfassend ein Maschinengestell, eine an dem Maschinengestell gehaltene und um eine Spindelachse drehbare Arbeitsspindel zur Aufnahme eines Werkstücks, einen ersten Werkzeugträger mit einem um eine Achse gegenüber einem Lagergehäuse drehbaren Werkzeugträgerkopf, wobei die Arbeitsspindel und der Werkzeugträgerkopf relativ zueinander mittels einer Steuerung mindestens in Richtung einer quer zur Spindelachse verlaufenden Querbewegungsachse und einer parallel zur Spindelachse verlaufenden Längsbewegungsachse gesteuert bewegbar sind und die Arbeitsspindel um die Spindelachse als gesteuerte C-Achse drehbar positionierbar ist.

Derartige Werkzeugmaschinen sind aus dem Stand der Technik bekannt.

Bei derartigen Werkzeugmaschinen besteht generell das Problem, Werkstücke in möglichst kurzer Zeit und möglichst komplett zu bearbeiten.

Diese Aufgabe wird bei einer Werkzeugmaschine der eingangs beschriebenen Art erfindungsgemäß dadurch gelöst, daß die Achse, um die der Werkzeugträgerkopf drehbar ist, quer zu einer durch die Querbewegungsachse und die Längsbewegungsachse aufgespannten Ebene verläuft und daß der Werkzeugträgerkopf mehrere Werkzeuge aufweist, die durch Drehen des Werkzeugträgerkopfes um die Achse relativ zum in der Arbeitsspindel aufgenommenen Werkstück in eine Arbeitsstellung bringbar ist.

Der Vorteil der erfindungsgemäßen Lösung ist darin zu sehen, daß mit dieser in einfacher Weise eine möglichst große Zahl von Werkzeugen in möglichst vielfältiger Weise am Werkstück eingesetzt werden kann.

Insbesondere besteht bei der erfindungsgemäßen Lösung durch geeignete Drehung des Werkzeugträgerkopfes die Möglichkeit, die Werkzeuge an einer Umfangsseite oder einer Stirnseite des Werkstücks einzusetzen.

Um einerseits möglichst viele Werkzeuge zur Verfügung zu haben, andererseits das Kollisionsrisiko möglichst gering zu halten, ist vorzugsweise vorgesehen, daß der Werkzeugträgerkopf auf mindestens zwei unterschiedlichen Seiten Werkzeugaufnahmen für Werkzeuge trägt.

Noch besser ist es, wenn der Werkzeugträgerkopf auf mindestens drei unterschiedlichen Seiten Werkzeugaufnahmen für Werkzeuge trägt.

Um die Zahl der einsetzbaren Werkzeuge noch weiter zu steigern, ist es noch vorteilhafter, wenn der Werkzeugträgerkopf auf mindestens vier unterschiedlichen Seiten Werkzeugaufnahmen für Werkzeuge trägt.

Die unterschiedlichen Seiten des Werkzeugträgerkopfes werden dabei vorzugsweise durch Seitenflächen des Werkzeugträgerkopfes gebildet, wobei die Seitenflächen so angeordnet sind, daß Flächennormalen derselben in unterschiedliche Richtungen weisen. Die Seitenflächen können dabei gewölbt sein. Besonders günstig ist es jedoch, wenn die Seitenflächen ebene Flächen sind.

Hinsichtlich der Ausbildung des Werkzeugträgerkopfes sind die unterschiedlichsten geometrischen Formen denkbar. Beispielsweise wäre es denkbar, den Werkzeugträgerkopf kugelförmig oder ellipsoidförmig oder auch konusförmig auszubilden, wobei diese Körperformen auch mit zusätzlichen Abflachungen versehen sein können.

Eine für die räumlichen Verhältnisse in einer Werkzeugmaschine besonders günstige Form sieht vor, daß der Werkzeugträgerkopf als prismatischer Körper ausgebildet ist und die Achse den prismatischen Körper parallel zu einer Seitenfläche verlaufend durchsetzt. Vorzugsweise verläuft dabei die Achse parallel zur Mittelachse des prismatischen Körpers.

Geometrisch besonders günstig ist es dabei, wenn der prismatische Körper in Richtung der Achse eine Ausdehnung aufweist, die mindestens so groß ist wie in jeder Richtung quer zu der Achse.

Noch besser ist es, wenn der prismatische Körper in Richtung der Achse eine Ausdehnung aufweist, die mindestens dem 1,5-fachen der maximalen Ausdehnung quer zu der Achse entspricht.

Die Grundfläche des prismatischen Körpers kann die unterschiedlichsten Formen haben. Beispielsweise kann die Grundfläche auch eine runde oder elliptische Form haben.

Eine besonders günstige Lösung sieht vor, daß der prismatische Körper als Grundfläche ein Vieleck aufweist.

Vorzugsweise ist dabei das Vieleck maximal ein Sechseck, noch vorteilhafter sind Grundflächen in Form eines Fünfecks oder eines Vierecks, um einerseits möglichst viele Werkzeugaufnahmen vorsehen zu können und andererseits die Werkzeuge noch mit möglichst geringer Kollisionsgefahr einsetzen zu können.

Hinsichtlich der Ausdehnung des Werkzeugträgerkopfes wurden bislang keine näheren Angaben gemacht. Damit der Werkzeugträgerkopf jedoch hinsichtlich seiner Größe die Baugröße der Werkzeugmaschine nicht negativ beeinflußt, ist vorzugsweise vorgesehen, daß der Werkzeugträgerkopf quer zu der Achse eine maximale Ausdehnung aufweist, welche höchstens dem 8-fachen eines maximalen Werkstückdurchmessers entspricht.

Noch besser ist es, wenn der Werkzeugträgerkopf quer zur Achse eine maximale Ausdehnung aufweist, welche höchstens dem 6-fachen eines maximalen Werkstückdurchmessers entspricht.

Sollte der Werkzeugträgerkopf Seitenflächen aufweisen, so ist vorzugsweise vorgesehen, daß die Seitenflächen in einem Abstand von der Achse angeordnet sind, welcher maximal dem 4-fachen des maximalen Werkstückdurchmessers entspricht.

Noch besser ist es, wenn der Abstand der Seitenflächen von der Achse maximal dem 2-fachen des maximalen Werkstückdurchmessers entspricht.

Darüber hinaus sieht eine besonders günstige Form eines erfindungsgemäßen Werkzeugträgerkopfs vor, daß dieser einander gegenüberliegende Seitenflächen aufweist und daß die einander gegenüberliegenden Seitenflächen jeweils einen maximalen Abstand voneinander aufweisen, der höchstens dem 6-fachen des maximalen Werkstückdurchmessers entspricht.

Noch besser ist es, wenn dieser maximale Abstand höchstens dem 4-fachen des maximalen Werkstückdurchmessers entspricht, da dann der Werkzeugträgerkopf noch kompakter aufgebaut ist.

Hinsichtlich der Ausdehnung des Werkzeugträgerkopfes in Richtung der Achse wurden bislang ebenfalls keine näheren Angaben gemacht. So sieht eine konstruktiv besonders geeignete Lösung vor, daß der Werkzeugträgerkopf in Richtung der Achse eine Ausdehnung aufweist, welche mindestens dem 6-fachen des maximalen Werkstückdurchmessers entspricht.

Hinsichtlich der Drehbarkeit des Werkzeugträgerkopfes um die Achse wurden ebenfalls im Zusammenhang mit der erfindungsgemäßen Lösung keine näheren Angaben gemacht. So wäre es beispielsweise denkbar, den Werkzeugträgerkopf auf zwei unterschiedlichen Seiten jeweils mit Werkzeugen zu bestücken und eine Drehbarkeit des Werkzeugträgerkopfes von maximal 180° vorzusehen.

Noch vorteilhafter ist es jedoch, insbesondere, um die Werkzeuge optimal einsetzen zu können, wenn der Werkzeugträgerkopf um die Achse um mindestens 270° drehbar ist, so daß auf mehreren Seiten des Werkzeugträgerkopfes Werkzeuge angeordnet werden können, die dann durch Drehung des Werkzeugträgerkopfes in Eingriff mit dem Werkstück gebracht werden können.

Noch vorteilhafter ist es, wenn der Werkzeugträgerkopf um die Achse um mindestens 360° drehbar ist, so daß eine optimale Flexibilität bei der Bestückung des Werkzeugträgerkopfes mit Werkzeugen und beim Einsatz dieser Werkzeuge gegeben ist.

Hinsichtlich der Drehbarkeit des Werkzeugträgerkopfes um die Achse sind die unterschiedlichsten Möglichkeiten denkbar. Eine bevorzugte Lösung sieht vor, daß der Werkzeugträgerkopf um die Achse in diskrete Drehstellungen drehbar ist.

Beispielsweise können die Drehstellungen durch Hauptrichtungen der an dem Werkzeugträgerkopf vorgesehenen Werkzeuge vorgegeben sein und den Hauptrichtungen der Werkzeuge entsprechen, so daß sich jedes Werkzeug mit seiner Hauptrichtung in Arbeitsstellung bringen läßt.

Besonders günstig ist es hinsichtlich der diskreten Drehstellungen, wenn die diskreten Drehstellungen in demselben Winkelabstand voneinander angeordnet sind, so daß für die Festlegung des Werkzeugträgerkopfes Fixiervorrichtungen mit entsprechender mehrzähliger Symmetrie vorgesehen sein können.

Noch vorteilhafter ist es, wenn der Werkzeugträgerkopf mehr diskrete Drehstellungen aufweist als Hauptrichtungen, in welche sich in die Werkzeugaufnahmen am Werkzeugträgerkopf einsetzbare Werkzeuge erstrecken können.

Damit besteht die Möglichkeit, die einzelnen Werkzeuge auch in Ausrichtungen einzusetzen, in denen sich die Hauptrichtungen nicht parallel zur X-Achse oder parallel zur Z-Achse erstrecken, sondern auch in mindestens einem Winkel zu diesen.

Eine besonders günstige Lösung sieht vor, daß Winkelabstände zwischen den diskreten Drehstellungen des Werkzeugträgerkopfes kleiner als 10° sind.

Noch vorteilhafter ist es, wenn die Winkelabstände ein ganzzahliges Vielfaches von 1,25° betragen, das heißt 1,25° oder 2,5° oder 5°.

Alternativ oder ergänzend zum Vorsehen diskreter Drehstellungen sieht ein besonders vorteilhaftes Ausführungsbeispiel vor, daß der Werkzeugträgerkopf um die Achse als durch die Steuerung gesteuerte B-Achse drehbar ist und somit die Steuerung die Möglichkeit hat, den Werkzeugträgerkopf in beliebige Drehstellungen zu drehen, um in diesen Drehstellungen analog der bekannten B-Achse das Werkstück bearbeiten zu können.

Hinsichtlich der Lagerung des Werkzeugträgerkopfes wurden bislang keine näheren Angaben gemacht. So wäre es beispielsweise denkbar, den Werkzeugträgerkopf auf dem Lagergehäuse drehbar zu lagern.

Besonders günstig läßt sich jedoch der Werkzeugträgerkopf dann lagern, wenn dieser zwischen Armen einer Haltegabel um die Achse drehbar gelagert ist, so daß eine ausreichend stabile und für eine Werkzeugmaschine raumsparende Bauweise möglich ist.

Dabei ist zweckmäßigerweise vorgesehen, daß der Werkzeugträgerkopf mit montierten Werkzeugen kollisionsfrei gegenüber der Haltegabel drehbar ist.

Hinsichtlich der Anordnung der Werkzeuge selbst wurden im Zusammenhang mit der bisherigen Erläuterung der einzelnen Ausführungsbeispiele der erfindungsgemäßen Lösung keinerlei nähere Angaben gemacht.

So können beispielsweise die Werkzeugaufnahmen für die Werkzeuge beliebig am Werkzeugträgerkopf verteilt sein. Eine besonders für die Steuerung und auch die Kollisionsfreiheit beim Einsatz des Werkzeugträgerkopfes günstige Lösung sieht vor, daß der Werkzeugträgerkopf mindestens zwei Aufnahmen für Werkzeuge trägt, die mit ihren Hauptrichtungen in einer gemeinsamen, sich senkrecht zur Achse erstreckenden Werkzeugebene liegen. Mit derart angeordneten Werkzeugaufnahmen lassen sich in besonders günstiger Weise mehrere Werkzeuge anordnen und Kollisionen vermeiden.

Noch optimaler lassen sich mehrere Werkzeuge an dem Werkzeugträgerkopf dann anordnen, wenn dieser mindestens zwei, in Richtung der Achse im Abstand voneinander angeordnete Werkzeugebenen aufweist, in welchen sich jeweils die Hauptrichtungen von in die mehreren Werkzeugaufnahmen eingesetzten Werkzeugen erstrecken.

Dabei ist es, um die Werkzeuge der unterschiedlichen Werkzeugebenen einfach wechseln zu können günstig, wenn der Werkzeugträgerkopf in eine quer zu den Werkzeugebenen verlaufenden Werkzeugwechselrichtung relativ zur X/Z-Ebene bewegbar ist.

Besonders zweckmäßig ist es, wenn dabei die Werkzeugwechselrichtung parallel zu der Achse verläuft, um die der Werkzeugträgerkopf drehbar ist.

Besonders zweckmäßig ist es, wenn der Werkzeugträgerkopf pro Werkzeugebene auf gegenüberliegenden Seiten der Achse angeordnete Werkzeugaufnahmen aufweist.

Um beim Einsatz der einzelnen Werkzeuge die Kollisionsgefahr der nicht eingesetzten Werkzeuge mit dem Werkstück oder anderen Werkzeugen oder Werkzeugträgern möglichst gering zu halten, ist vorzugsweise vorgesehen, daß der Werkzeugträgerkopf derart angeordnete Werkzeugaufnahmen aufweist, daß in diesen eingesetzte Werkzeuge in Hauptrichtungen weisen, die in der jeweiligen Werkzeugebene in der Richtung, in der sie zerspanend wirken, einen Winkelabstand bezüglich der Achse von mindestens 60° voneinander aufweisen, so daß durch diesen Winkelabstand ausreichend Raum zum in Azimutalrichtung benachbarten Werkzeug besteht.

Ein derartiger Aufbau hat neben der Reduzierung der Kollisionsgefahr auch den Vorteil, daß dadurch der Werkzeugträgerkopf möglichst klein und kompakt ausgebildet sein kann und somit insgesamt die Werkzeugspitzen möglichst nahe bei der Achse liegen, so daß die bei der Bearbeitung auftretenden Drehmomente um die Achse aufgrund des möglichst kleinen Hebelarms für den Werkzeugträgerkopf vorgesehenen Fixiereinrichtung problemlos aufgenommen werden können.

Noch besser ist es, wenn die Werkzeuge derart am Werkzeugträgerkopf angeordnet sind, daß die Hauptrichtungen in der jeweiligen Werkzeugebene in der Richtung, in der die Werkzeuge zerspanend wirken, einen Winkelabstand von mindestens 90° voneinander aufweisen.

Im Zusammenhang mit der bisherigen Erläuterung einzelner vorteilhafter Ausführungsbeispiele wurde lediglich auf die Anordnung von Werkzeugen mit derart eingegangen, daß deren Hauptrichtungen in mindestens einer senkrecht zur Achse verlaufenden Werkzeugebene liegen.

Alternativ oder ergänzend dazu ist es vorteilhaft, wenn der Werkzeugträgerkopf mehrere Werkzeugträgeraufnahmen aufweist, die so angeordnet sind, daß Hauptrichtungen von in diese eingesetzten Werkzeugen in einer sich parallel zur Achse erstreckenden Ausrichtebene liegen.

Die Ausrichtebene kann dabei in unterschiedlichster Art und Weise verlaufen.

So sieht eine vorteilhafte Lösung vor, daß die Ausrichtebene durch die Achse hindurch verläuft.

Eine andere Lösung sieht vor, daß die Ausrichtebene gegenüber der Achse seitlich versetzt verläuft.

Eine besonders vorteilhafte Lösung sieht vor, daß der Werkzeugträgerkopf Werkzeugaufnahmen aufweist, die so angeordnet sind, daß Hauptrichtungen von in diese eingesetzten Werkzeugen in zwei parallel zur Achse und quer zueinander verlaufenden Ausrichtebenen liegen.

Damit können die beiden Ausrichtebenen durch die Achse verlaufen oder nicht durch die Achse verlaufen. Eine besonders zweckmäßige Lösung sieht jedoch vor, daß eine erste, parallel zu der Achse verlaufende Ausrichtebene durch diese hindurchverläuft und mindestens eine zweite, parallel zur Achse verlaufende Ausrichtebene quer zu dieser und im Abstand von der Achse verläuft.

Dabei kann die zweite Ausrichtebene prinzipiell in beliebigen Winkeln zur ersten Ausrichtebene verlaufen. Besonders günstig ist es, wenn die zweite Ausrichtebene senkrecht zur ersten Ausrichtebene verläuft.

Hinsichtlich der Ausbildung der Werkzeugaufnahmen für die Werkzeuge wurden bislang keine näheren Angaben gemacht. So können grundsätzlich die Werkzeugaufnahmen Aufnahmen für stationäre Werkzeuge sein.

Da für eine Komplettbearbeitung in vielen Fällen rotierend angetriebene Werkzeuge erforderlich sind, ist vorzugsweise vorgesehen, daß der Werkzeugträgerkopf mit mindestens einer Werkzeugaufnahme für ein rotierend angetriebenes Werkzeug versehen ist.

Diese Werkzeugaufnahme kann in unterschiedlichster Art und Weise ausgerichtet sein. Besonders günstig ist es, wenn eine Rotationsachse der Werkzeugaufnahme für das rotierend angetriebene Werkzeug in der Arbeitsstellung sich parallel zu der von der Querbewegungsachse und der Längsbewegungsachse aufgespannten Ebene erstreckt.

Ferner wurden hinsichtlich der Ausrichtung der Rotationsachse zu der Werkzeugebene keinerlei Angaben gemacht. So ist es besonders günstig, wenn die Rotationsachse in einer Werkzeugebene liegt.

Als besonders vorteilhaft hat es sich bei erfindungsgemäßen Lösung erwiesen, wenn mindestens eine der rotierend antreibbaren Werkzeugaufnahme als Werkzeugaufnahme für ein Schwerlastwerkzeug ausgebildet ist. Ein derartiges Schwerlastwerkzeug kann beispielsweise ein Werkzeug für Verzahnungsfräsen, Mehrkantfräsen oder ein Schruppfräser sein.

Besonders günstig läßt sich eine Werkzeugaufnahme für ein rotierend angetriebenes Werkzeug dann realisieren, wenn der Werkzeugträgerkopf eine diesen quer zu der Achse durchsetzende Werkzeugspindel mit mindestens einer Werkzeugaufnahme aufweist.

Eine derartige, im Werkzeugträgerkopf gelagerte Spindel ist insbesondere geeignet für Schwerlastwerkzeuge, beispielsweise schwere Fräswerkzeuge, die für eine möglichst schnell auszuführende Komplettbearbeitung von Vorteil sind.

Besonders vorteilhaft ist es dabei, wenn die Werkzeugspindel an beiden gegenüberliegenden Enden jeweils eine Werkzeugaufnahme aufweist.

Noch vorteilhafter ist es, insbesondere für eine Komplettbearbeitung, wenn der Werkzeugträgerkopf mehrere Werkzeugaufnahmen für rotierend angetriebene Werkzeuge aufweist, so daß mehrere unterschiedliche rotierend angetriebene Werkzeuge eingesetzt werden können.

Die Werkzeugaufnahmen für die mehreren rotierend angetriebenen Werkzeuge könnten prinzipiell durch jeweils eigene Antriebe antrieben werden.

Um jedoch den Werkzeugträgerkopf möglichst kompakt und möglichst klein ausführen zu können und andererseits eine möglichst hohe Antriebsleistung für den Antrieb der einzelnen Werkzeugaufnahmen zur Verfügung zu haben, ist vorteilhafterweise vorgesehen, daß die mehreren Werkzeugaufnahmen für rotierend angetriebene Werkzeuge durch einen gemeinsamen Antrieb antreibbar sind.

Dabei kann im einfachsten Fall der Antrieb so ausgebildet sein, daß dieser alle Werkzeugaufnahmen ständig antreibt, wobei allerdings nur das Werkzeug einer der rotierend angetriebenen Werkzeugaufnahmen im Einsatz ist und die anderen Werkzeuge frei mitlaufen. Es ist aber auch denkbar, Werkzeugaufnahmen zu- und abschaltbar auszuführen, wobei in diesem Fall eine lösbare Ankupplung der einzelnen Werkzeugaufnahmen erforderlich ist.

Eine weitere vorteilhafte Lösung sieht vor, daß die einzelnen Werkzeugaufnahmen mit unterschiedlicher Drehzahl angetrieben sind. Dabei wird beispielsweise bei Schwerlastwerkzeugen eine geringere Drehzahl gewählt, als bei üblichen rotierend angetriebenen Werkzeugen, wie beispielsweise üblichen Bohrern und Fräsen. Um diese unterschiedlichen Drehzahlen mit einem gemeinsamen Antrieb realisieren zu können, ist vorzugsweise vorgesehen, daß durch den gemeinsamen Antrieb mindestens eine der Werkzeugaufnahmen mit größerer Untersetzung antreibbar ist als mindestens eine andere der Werkzeugaufnahmen.

Hinsichtlich der Realisierung eines Antriebsmotors wurden bislang keine näheren Angaben gemacht. So wäre es beispielsweise denkbar, auch den Antriebsmotor im Werkzeugträgerkopf anzuordnen. Noch vorteilhafter ist es jedoch, wenn der Antriebsmotor des gemeinsamen Antriebs an dem Lagergehäuse angeordnet ist. Beispielsweise läßt sich dabei der Antriebsmotor an der Haltegabel für den Werkzeugträgerkopf anordnen, so daß ein direkt in den Werkzeugträgerkopf geführter Antriebsstrang koaxial zu der Achse realisierbar ist.

Hinsichtlich der Bewegbarkeit des Werkzeugträgerkopfes relativ zur Arbeitsspindel wurden bislang keine näheren Angaben gemacht.

So ist es für die bei der erfindungsgemäßen Werkzeugmaschine vorgesehene Komplettbearbeitung von Vorteil, wenn der Werkzeugträgerkopf relativ zur Arbeitsspindel derart bewegbar ist, daß in einer Arbeitsstellung eines der Werkzeuge die diesem zugeordnete Seite des Werkzeugträgerkopfes einer Umfangsseite des Werkstücks zugewandt ist und daß in einer weiteren Arbeitsstellung von einem der Werkzeuge die diesem zugeordnete Seite des Werkzeugträgerkopfes einer Stirnseite des Werkzeuges zugewandt ist, so jeweils das in Arbeitsstellung stehende Werkzeug mit seiner Hauptrichtung so ausgerichtet sein kann, daß dieses quer zur Umfangsseite oder quer zur Stirnseite des Werkstücks verläuft und damit die auf den Werkzeugträgerkopf wirkenden Kräfte zumindest ein geringes Drehmoment um die Achse bewirkt, um welche der Werkzeugträgerkopf drehbar ist.

Eine besonders günstige Lösung sieht dabei vor, daß der Werkzeugträgerkopf relativ zur Arbeitsspindel derart bewegbar ist, daß in einer Arbeitsstellung von einem der Werkzeuge mit quer zur Längsbewegungsachse verlaufender Hauptrichtung das Werkstück umfangsseitig bearbeitet werden kann und daß in einer Arbeitsstellung von einem der Werkzeuge mit quer zur Querbewegungsachse verlaufender Hauptrichtung das Werkstück stirnseitig bearbeitet werden kann.

Um besonders vorteilhaft mit dem der erfindungsgemäßen Werkzeugmaschinen zugeordneten Werkzeugträgerkopf arbeiten zu können, ist vorgesehen, daß der Werkzeugträgerkopf über eine der Spindelachse zugewandte Seite des Lagergehäuses überstehend am Lagerkörper angeordnet ist, so daß keinerlei Kollisionen zwischen Lagergehäuse und Spindelgehäuse entstehen.

Noch besser ist es, insbesondere um weitere Kollisionen, beispielsweise im Fall einer Gegenspindelmaschine, zu vermeiden, wenn der Werkzeugträgerkopf über eine in dieselbe Richtung wie das Werkstück W mit seiner Stirnseite weisende Seite des Lagergehäuses überstehend angeordnet ist.

Ferner läßt sich vorzugsweise der den Werkzeugträgerkopf aufweisende erste Werkzeugträger besonders günstig dann anordnen, wenn das Lagergehäuse in allen möglichen Stellungen des Werkzeugträgerkopfes relativ zur Arbeitsspindel stets auf derselben Seite einer durch die Spindelachse hindurch und quer zur durch die Querbewegungsachse und die Längsbewegungsachse aufgespannten Ebene verlaufenden Mittelebene angeordnet ist. Damit läßt sich die Führung des ersten Werkzeugträgers besonders günstig gestalten.

Insbesondere ist dabei vorteilhafterweise vorgesehen, daß in allen möglichen Stellungen des Werkzeugträgerkopfes ein den ersten Werkzeugträger tragendes Schlittensystem auf derselben Seite einer durch die Spindelachse hindurch und quer zur durch die Querbewegungsachse und die Längsbewegungsachse aufgespannten verlaufenden Mittelebene angeordnet ist.

Um mit möglichst vielen Werkzeugen am Werkstück arbeiten zu können, ist vorzugsweise vorgesehen, daß das Lagergehäuse des ersten Werkzeugträgers und ein Lagergehäuse eines zweiten Werkzeugträgers auf einander gegenüberliegenden Seiten einer durch die Spindelachse und parallel zur durch die Querbewegungsachse und die Längsbewegungsachse aufgespannten verlaufenden Mittelebene angeordnet sind.

Darüber hinaus ist es - um eine möglichst große Präzision bei der Bearbeitung der Werkstücke zu erreichen - von Vorteil, wenn das Maschinengestell einen Maschinenbettkörper umfaßt, an dessen einer Seite die Arbeitsspindel angeordnet ist und an dessen weiterer Seite ein Schlittensystem angeordnet ist, welches den ersten Werkzeugträger mit dem um die Achse drehbaren Werkzeugträgerkopf trägt.

Eine besonders zweckmäßige Lösung bei Vorsehen eines zweiten Werkzeugträgers sieht vor, daß ein Schlittensystem, welches den zweiten Werkzeugträger trägt, an einer der weiteren Seite gegenüberliegenden Seite des Maschinenbettkörpers angeordnet ist.

Vorzugsweise ist dabei der Maschinenbettkörper ein langgestreckter prismatischer Körper, an dessen unterschiedlichen Längsseiten die Arbeitsspindel und das Schlittensystem angeordnet sind.

Insbesondere beim Vorsehen eines derartigen Maschinenbettkörpers ist zweckmäßigerweise vorgesehen, daß ein die Arbeitsspindel aufnehmendes Spindelgehäuse stationär oder nur in Richtung der Längsbewegungsachse bewegbar am Maschinengestell, insbesondere am Maschinenbettkörper, angeordnet ist.

Im Zusammenhang mit der bisherigen Beschreibung der erfindungsgemäßen Lösung wurde lediglich davon ausgegangen, daß die Arbeitsspindel und der Werkzeugträgerkopf relativ zueinander in Richtung der Querbewegungsachse und der Längsbewegungsachse gesteuert bewegbar sind. Noch vorteilhafter ist es jedoch, wenn die Arbeitsspindel und der Werkzeugträgerkopf relativ zueinander auch noch zusätzlich in Richtung einer quer zur Querbewegungsachse und zur Längsbewegungsachse verlaufenden weiteren Querbewegungsachse gesteuert bewegbar sind.

Eine derartig gesteuerte Bewegbarkeit in Richtung der weiteren Querbewegungsachse läßt vorteilhafterweise die Möglichkeit zu, die Werkzeuge unterschiedlicher Werkzeugebenen durch Verfahren des Werkzeugträgerkopfes in dieser Richtung in Einsatz am Werkstück zu bringen.

Um die Arbeitsmöglichkeiten mit dem erfindungsgemäßen Werkzeugträgerkopf optimal ausnutzen zu können, ist vorzugsweise vorgesehen, daß die Verfahrwege in Richtung der Querbewegungsachse und der Richtung der Längsbewegungsachse derart groß sind, daß der Werkzeugträgerkopf zur Bearbeitung des Werkstücks auf einer der Arbeitsspindel abgewandten Seite des Werkstücks positionierbar ist und somit in günstiger Art und Weise eine einfache stirnseitige Bearbeitung des Werkstücks möglich ist.

Besonders vorteilhaft lassen sich Bearbeitungen auf einer erfindungsgemäßen Werkzeugmaschine dann durchführen, wenn der Arbeitsspindel gegenüberliegend eine Gegenspindel angeordnet ist, so daß eine Bearbeitung des Werkstücks auf einer ersten Seite in der Arbeitsspindel und auf einer zweiten Seite in der Gegenspindel erfolgen kann.

Vorzugsweise ist dabei der Werkzeugträgerkopf in Richtung der Querbewegungsachse und der Längsbewegungsachse derart verfahrbar, daß er zur Bearbeitung mindestens eines der Werkstücke zwischen der Arbeitsspindel und der Gegenspindel positionierbar ist.

Noch vorteilhafter ist eine Ausführung der erfindungsgemäßen Lösung, bei welcher sowohl der Arbeitsspindel als auch der Gegenspindel ein erfindungsgemäß angeordneter und ausgebildeter Werkzeugträgerkopf zugeordnet ist.

Ein weiteres Ausführungsbeispiel einer erfindungsgemäßen Drehmaschine sieht als Werkzeugträgerkopf einen einem ersten Arbeitsraum und einer ersten Arbeitsspindel zugeordneten ersten frontseitigen Werkzeugträger vor.

Besonders günstig ist es dabei, wenn der erste frontseitige Werkzeugträger und die zweite Arbeitsspindel in Richtung der Spindelachsen unabhängig voneinander bewegbar sind, so daß bei einer Bearbeitung des ersten und des zweiten Werkstücks die Werkzeuge des ersten frontseitigen Werkzeugträgers und die Werkzeuge des zweiten frontseitigen Werkzeugträgers unabhängig voneinander eingesetzt werden können.

Konstruktiv läßt sich die Bewegbarkeit des ersten frontseitigen Werkzeugträgers in Z-Richtung besonders günstig dadurch realisieren, daß dieser auf einem in Z-Richtung bewegbaren Z-Schlitten sitzt, welcher seinerseits auf dem Querschlitten für den ersten frontseitigen Werkzeugträger sitzt.

Hinsichtlich der Anordnung der Werkzeuge an dem ersten frontseitigen Werkzeugträger wurden bislang keine näheren Angaben gemacht.

Beispielsweise wäre es denkbar, ein einzelnes Werkzeug am ersten frontseitigen Werkzeugträger vorzusehen.

Aus Gründen eines möglichst optimalen Werkzeugeinsatzes für komplexe Bearbeitungen ist es besonders günstig, wenn der erste frontseitige Werkzeugträger eine Reihe von in einer Längsrichtung aufeinanderfolgend angeordneten Werkzeugen aufweist.

Die Längsrichtung einer derartigen Reihe kann unterschiedlich verlaufen. Ein besonders vorteilhaftes Ausführungsbeispiel sieht vor, daß die Längsrichtung ungefähr parallel zur Querrichtung verläuft, so daß durch Bewegen des ersten frontseitigen Werkzeugträgers in der Querrichtung gleichzeitig unterschiedliche Werkzeuge desselben in Einsatz gebracht werden können.

Darüber hinaus läßt sich die Zahl der Werkzeuge noch dadurch vervielfachen, daß der erste frontseitige Werkzeugträger mindestens zwei um eine Schwenkachse im Winkelabstand zueinander angeordnete Werkzeuge aufweist, welche durch Verschwenken des Werkzeugträgers um die Schwenkachse in eine aktive oder inaktive Stellung bringbar sind.

Besonders vorteilhaft ist es, auch beispielsweise die Zahl der in Einsatz bringbaren Reihen von Werkzeugen zu vervielfachen, nämlich dadurch, daß die Schwenkachse parallel zu den jeweiligen Reihen verläuft, so daß durch Schwenken um die Schwenkachse jeweils unterschiedliche Reihen in einer aktiven Stellung stehen.

Hinsichtlich der Ausrichtung der Schwenkachse relativ zu den übrigen Achsen der Drehmaschine hat es sich als besonders günstig erwiesen, wenn die Schwenkachse ungefähr parallel zur Querrichtung verläuft.

Um die Schwenkachse noch zusätzlich zu komplexen Bearbeitungen einsetzen zu können, ist vorzugsweise vorgesehen, daß die Schwenkachse als durch die Maschinensteuerung steuerbare B-Achse ausgebildet ist, so daß die Schwenkachse nicht nur dazu eingesetzt werden kann, die mehreren Werkzeuge in aktive oder inaktive Stellungen zu bringen, sondern auch dazu, die Werkzeuge in gegenüber der ersten Spindelachse geneigte, beispielsweise in einem spitzen Winkel verlaufende Stellungen zu bringen.

Ferner ist bei einer bevorzugten Ausführungsform der erfindungsgemäßen Werkzeugmaschine als Werkzeugträgerkopf ein einem zweiten Arbeitsraum und einer zweiten Arbeitsspindel zugeordneter zweiter frontseitiger Werkzeugträger vorgesehen.

Hinsichtlich der Anordnung der Werkzeuge an dem zweiten frontseitigen Werkzeugträger wurden bislang ebenfalls keine näheren Angaben gemacht. Beispielsweise wäre im einfachsten Fall die Anordnung eines einzelnen Werkzeugs am zweiten frontseitigen Werkzeugträger möglich. Um komplexere Bearbeitungen durchführen zu können, hat es sich als vorteilhaft erwiesen, wenn der zweite frontseitige Werkzeugträger eine Reihe von in einer Längsrichtung aufeinanderfolgend angeordneten Werkzeugen aufweist.

Vorzugsweise kann die Längsrichtung ebenfalls unterschiedlich verlaufen. Als besonders günstig hat es sich jedoch erwiesen, wenn die Längsrichtung ungefähr parallel zur Bewegungsrichtung des zweiten frontseitigen Werkzeugträgers verläuft. Alternativ oder ergänzend zur Anordnung der Werkzeuge in Reihe ist vorzugsweise vorgesehen, daß der zweite frontseitige Werkzeugträger mindestens zwei im Winkelabstand um eine Schwenkachse angeordnete Werkzeuge aufweist, die durch ein Schwenken des zweiten Werkzeugträgers um die Schwenkachse von einer aktiven in eine inaktive Stellung und umgekehrt bewegbar sind.

Insbesondere bei den Ausführungsbeispielen, bei denen die Werkzeugträger in einer Reihe angeordnet sind, ist vorzugsweise vorgesehen, daß die Schwenkachse parallel zu den Reihen verläuft, so daß durch Schwenken um die Schwenkachse unterschiedliche Reihen von Werkzeugen des zweiten frontseitigen Werkzeugträgers zum Einsatz bringbar sind.

Besonders zweckmäßig ist es dabei, wenn die Schwenkachse ungefähr parallel zur Bewegungsrichtung des zweiten frontseitigen Werkzeugträgers verläuft, so daß durch Schwenken der Werkzeuge um die Schwenkachse keine Verlagerung in Richtung der Bewegungsrichtung erfolgt.

Um zusätzlich zum Einsatz unterschiedlicher Werkzeuge auch noch komplexere Bearbeitungen vornehmen zu können, ist vorzugsweise vorgesehen, daß die Schwenkachse für den zweiten frontseitigen Werkzeugträger als durch die Maschinensteuerung steuerbare B-Achse ausgebildet ist, so daß auch noch eine komplette B-Achsenfunktionalität bei dem Verschwenken der Werkzeuge des zweiten frontseitigen Werkzeugträgers realisierbar ist und somit diese Werkzeuge beispielsweise in definierten spitzen Winkeln relativ zur zweiten Spindelachse ausrichtbar sind.

Hinsichtlich der Anordnung der Werkzeuge relativ zu den Schwenkachsen bei den frontseitigen Werkzeugträgern wurden im Zusammenhang mit der bisherigen Erläuterung der einzelnen Ausführungsbeispiele der vorliegenden Erfindung keine näheren Angaben gemacht. Prinzipiell ist es denkbar, die Werkzeuge so anzuordnen, daß die bei der Zerspanung auftretende Kraftrichtung seitlich der Schwenkachsen verläuft, wie dies bei den üblicherweise in Drehmaschinen vorgesehenen Werkzeugträgern mit B-Achse der Fall ist.

Besonders günstig ist es jedoch, wenn die Werkzeuge relativ zu der Schwenkachse so angeordnet sind, daß die beim Zerspanen auf die Werkzeuge wirkende Kraft im wesentlichen in radialer Richtung zur Schwenkachse gerichtet ist, so daß die beim Zerspanen auftretende Kraft ein vernachlässigbares oder zumindest geringes Drehmoment in Richtung der Schwenkachse erzeugt und somit der Schwenkantrieb für die frontseitigen Werkzeugträger keinen großen Momenten Stand halten muß, wodurch bei einfachem mechanischem Aufbau eine ausreichend hohe Steifigkeit erreichbar ist.

Ein weiteres Ausführungsbeispiel einer erfindungsgemäß ausgebildeten Werkzeugmaschine betrifft eine Drehmaschine, umfassend ein Maschinengestell, eine am Maschinengestell gehaltene erste und um eine erste Spindelachse drehbare Arbeitsspindel mit einer ersten Aufnahme für ein erstes Werkstück, mindestens einen ersten Werkzeugträger, welcher zur Bearbeitung des ersten Werkstücks in einer X-Richtung quer zur ersten Spindelachse bewegbar ist, eine zweite und um eine zweite Spindelachse drehbare Arbeitsspindel, welche eine zweite Werkstückaufnahme für ein zweites Werkstück aufweist und welche gegenüber der ersten Arbeitsspindel in einer quer zur X-Richtung und quer zur ersten Spindelachse verlaufenden Querrichtung von einer mit der zweiten Spindelachse zur ersten Spindelachse koaxialen Stellung in eine nicht koaxiale Stellung bringbar ist, in welcher die erste und die zweite Spindelachse im Abstand voneinander angeordnet sind, und einen einem ersten Arbeitsraum zugeordneten ersten frontseitigen Werkzeugträger zur Bearbeitung des ersten Werkstücks, der durch eine Bewegung quer zur X-Richtung mit mindestens einem Werkzeug von einer inaktiven in eine aktive Stellung und umgekehrt bewegbar ist, sowie einen einem zweiten Arbeitsraum zugeordneten zweiten frontseitigen Werkzeugträger zur Bearbeitung des zweiten Werkstücks, der in der Querrichtung gegenüber dem ersten Arbeitsraum versetzt angeordnet ist.

Ist bei derartigen Drehmaschinen der erste frontseitige Werkzeugträger und die zweite Arbeitsspindel gemeinsam in der Querrichtung bewegbar, so ist es erforderlich, die Bearbeitung des ersten Werkstücks mit den im ersten frontseitigen Werkzeugträger angeordneten Werkzeugen und die Bearbeitung des zweiten Werkstücks mit den am zweiten frontseitigen Werkzeugträger angeordneten Werkzeugen exakt aufeinander abzustimmen.

Vorzugsweise ist bei einer derartigen Werkzeugmaschine vorgesehen, daß der erste frontseitige Werkzeugträger und die zweite Arbeitsspindel in der Querrichtung durch die Maschinensteuerung gesteuert relativ zueinander bewegbar sind, so daß die Bewegungen der zweiten Arbeitsspindel und des ersten frontseitigen Werkzeugträgers unabhängig voneinander realisierbar sind.

Dadurch besteht die Möglichkeit, das erste Werkstück und das zweite Werkstück gleichzeitig zu bearbeiten, wobei die Bearbeitungen voneinander entkoppelt ausgeführt werden können.

Unter einem frontseitigen Werkzeugträger ist im Rahmen dieser Anmeldung ein Werkzeugträger zu verstehen, der an eine Frontseite eines Arbeitsraums, insbesondere der Arbeitsspindel gegenüberliegend, angeordnet ist. Dieser frontseitige Werkzeugträger kann dabei Werkzeuge tragen, mit denen eine Frontseite des Werkstücks bearbeitbar ist, aber auch Werkzeuge zur umfangsseitigen Bearbeitung zumindest nahe der Frontseite des Werkstücks.

Die relative Bewegbarkeit der zweiten Arbeitsspindel und des ersten frontseitigen Werkzeugträgers können in unterschiedlichster Art und Weise realisiert werden. So wäre es beispielsweise denkbar, beide auf einem gemeinsamen Schlitten in Querrichtung zu bewegen und auf diesem gemeinsamen Querschlitten noch einen zusätzlichen Querschlitten für die Bewegung entweder der zweiten Arbeitsspindel oder des ersten frontseitigen Werkzeugträgers in der Querrichtung vorzusehen.

Aus Gründen der Steifigkeit der Konstruktion und der Einfachheit der Steuerung ist es jedoch besonders günstig, wenn der erste frontseitige Werkzeugträger und die zweite Arbeitsspindel jeweils auf einem in der Querrichtung bewegbaren Querschlitten sitzen.

Prinzipiell könnte dabei der erste frontseitige Werkzeugträger direkt gegenüber dem Maschinengestell mit dem Querschlitten verfahrbar sein und unabhängig davon auch die zweite Arbeitsspindel mit dem Querschlitten am Maschinengestell verfahrbar angeordnet sein.

Eine konstruktiv aufgrund des Raumbedarfs besonders günstige Lösung sieht dabei vor, daß der erste frontseitige Werkzeugträger auf derselben Konsole sitzt, wie die zweite Arbeitsspindel mit ihrem Querschlitten, so daß über die Konsole dann die Lagerung beider relativ zum Maschinengestell erfolgt.

Damit besteht beispielsweise die Möglichkeit, für den Querschlitten des ersten frontseitigen Werkzeugträgers und den Querschlitten der zweiten Arbeitsspindel gemeinsame Führungen vorzusehen, auf denen beide in der Querrichtung geführt sind.

Um bei der Bearbeitung des ersten Werkstücks mit dem ersten frontseitigen Werkzeugträger eine zusätzliche Bewegungsachse zur Verfügung zu haben, hat es sich als günstig erwiesen, wenn der erste frontseitige Werkzeugträger und die zweite Arbeitsspindel auf einem gemeinsamen, in X-Richtung gegenüber dem Maschinengestell bewegbaren Schlitten sitzen. Ein derartiger Schlitten kann beispielsweise durch die Konsole gebildet sein.

Dieser Schlitten bietet die Möglichkeit, einerseits die Werkzeuge des ersten frontseitigen Werkzeugträgers nicht nur in Querrichtung zu bewegen, sondern auch in der X-Richtung, andererseits eröffnet diese Lösung eine einfache Möglichkeit, die zweite Arbeitsspindel koaxial zur ersten Arbeitsspindel zur Übergabe des ersten bearbeiteten Werkstücks in die zweite Arbeitsspindel zu positionieren.

Hinsichtlich der Bewegbarkeit des zweiten frontseitigen Werkzeugträgers relativ zur zweiten Spindelachse wurden bislang keine näheren Angaben gemacht.

Prinzipiell ist es ausreichend, die Bewegbarkeit der zweiten Arbeitsspindel in der Querrichtung auszunutzen, um das zweite Werkstück relativ zu dem Werkzeug des zweiten frontseitigen Werkzeugträgers zu positionieren.

Ist beispielsweise der zweite frontseitige Werkzeugträger mit einer in der Querrichtung verlaufenden Reihe von Werkzeugen versehen, so können durch Verfahren in der Querrichtung auch unterschiedliche Werkzeuge angefahren werden und durch die Relativposition der zweiten Spindelachse gegenüber dem jeweiligen Werkzeug in der Querrichtung auch Bearbeitungen in unterschiedlichem radialem Abstand von der zweiten Spindelachse vorgenommen werden.

Um jedoch die Baugröße der Drehmaschine in der Querrichtung nicht überhand nehmen zu lassen und somit auch die Steifigkeit der Konstruktion bei der Bearbeitung des zweiten Werkstücks möglichst groß zu halten, ist vorzugsweise vorgesehen, daß der zweite frontseitige Werkzeugträger quer zur zweiten Spindelachse und in einer quer zur Querrichtung verlaufenden Richtung bewegbar ist.

Damit besteht die Möglichkeit, einerseits durch das Verfahren der zweiten Arbeitsspindel in der Querrichtung das zweite Werkstück relativ zu den jeweiligen Werkzeugen des zweiten frontseitigen Werkzeugträgers zu positionieren, gleichzeitig aber auch die Möglichkeit, durch Bewegen des zweiten frontseitigen Werkzeugträgers quer zur Querrichtung, von einem Werkzeug desselben auf das andere Werkzeug zu wechseln und gleichzeitig noch zwei Achsen, nämlich konventionell gesprochen eine X- und eine Y-Achse, zur Bearbeitung des zweiten Werkstücks mit jedem einzelnen Werkzeug des zweiten frontseitigen Werkzeugträgers zur Verfügung zu haben.

Vorzugsweise ist dabei der zweite frontseitige Werkzeugträger ungefähr in X-Richtung bewegbar.

Um einerseits eine möglichst steife Konstruktion zu erhalten und um andererseits den Aufwand zur Steuerung der Bearbeitung des zweiten Werkstücks möglichst gering zu halten, ist vorzugsweise vorgesehen, daß der zweite frontseitige Werkzeugträger an der den Querschlitten für die zweite Arbeitsspindel tragenden Konsole bewegbar geführt ist, so daß die Bewegung des zweiten Werkzeugträgers relativ zu dem den Querschlitten der zweiten Arbeitsspindel tragenden Teil erfolgt und somit keine zusätzlichen Positionsungenauigkeiten die Präzision bei der Bearbeitung des zweiten Werkstücks beeinflussen.

Hinsichtlich der Bewegbarkeit der zweiten Arbeitsspindel wurden bislang keine näheren Angaben gemacht.

So wäre es beispielsweise denkbar, die Übergabe des ersten Werkstücks in die zweite Arbeitsspindel durch die Z-Verschiebbarkeit des ersten Werkstücks aufgrund der Verschiebbarkeit der ersten Arbeitsspindel zu realisieren und die Bearbeitung des zweiten Werkstücks durch eine entsprechende Z-Verschiebbarkeit des zweiten frontseitigen Werkzeugträgers zu realisieren.

Als besonders günstig hat es sich jedoch erwiesen, wenn die zweite Arbeitsspindel in Richtung der zweiten Spindelachse verschiebbar ist.

Vorzugsweise ist hierzu die zweite Arbeitsspindel auf einem Z-Schlitten angeordnet, welcher seinerseits auf dem Querschlitten sitzt.

Damit besteht einerseits die Möglichkeit, in einfacher Weise die Übergabe des ersten Werkstücks in die Arbeitsspindel durch Verschieben derselben zu realisieren, und andererseits die Möglichkeit, die Z-Achsbewegung für die Bearbeitung des zweiten Werkstücks mit den Werkzeugen des zweiten frontseitigen Werkzeugträgers durch Verschieben der Arbeitsspindel zu realisieren.

Um darüber hinaus komplexere Bearbeitungen durchführen zu können, hat es sich als günstig erwiesen, wenn die zweite Arbeitsspindel um eine quer zur zweiten Spindelachse verlaufende Schwenkachse schwenkbar ist.

Diese Schwenkachse könnte prinzipiell in unterschiedlichen Richtungen quer zur zweiten Spindelachse verlaufen. Eine konstruktiv besonders günstige Lösung sieht jedoch vor, daß die Schwenkachse quer zur X-Richtung verläuft.

Besonders günstig ist es, wenn die Schwenkachse ungefähr parallel zur Querrichtung verläuft, so daß durch Verschwenken der zweiten Arbeitsspindel kein Versatz derselben in Querrichtung erfolgt.

Hinsichtlich der Ausbildung des ersten frontseitigen Werkzeugträgers wurden bislang keine näheren Angaben gemacht. Beispielsweise wäre es denkbar, die Werkzeuge des ersten frontseitigen Werkzeugträgers dadurch in Einsatz zu bringen, daß das erste Werkstück durch die Verschiebbarkeit der ersten Arbeitsspindel in Z-Richtung in Richtung der Werkzeuge des ersten frontseitigen Werkzeugträgers bewegt wird, um die erforderliche Z-Achsbewegung zu realisieren.

Als besonders günstig hat es sich erwiesen, wenn der erste frontseitige Werkzeugträger in Richtung parallel zur ersten Spindelachse bewegbar ist.

Damit ist es lediglich notwendig, die Bewegbarkeit des ersten Werkstücks in Z-Richtung mittels der ersten Arbeitsspindel für die Relativpositionierung der Werkzeuge des ersten Werkzeugträgers relativ zum ersten Werkstück in Z-Richtung einzusetzen und unabhängig davon die Werkzeuge des ersten frontseitigen Werkzeugträgers zur Bearbeitung am ersten Werkstück einzusetzen, wobei bei der Z-Achspositionierung des ersten frontseitigen Werkzeugträgers dann die Z-Achspositionen des ersten Werkstücks, bedingt durch die Verschiebung der ersten Arbeitsspindel rechnerisch berücksichtigt werden müssen. Damit besteht jedoch die Möglichkeit, mit den Werkzeugen des ersten frontseitigen Werkzeugträgers unabhängig von den Werkzeugen des ersten Werkzeugträgers zu bearbeiten.

Die erfindungsgemäße Drehmaschine kann bei der Bearbeitung des ersten Werkstücks in unterschiedlichster Weise ausgebildet sein.

Beispielsweise wäre es denkbar, die Drehmaschine als sogenannten Kurzdreher auszubilden und dabei das erste Werkstück ausschließlich durch die erste Arbeitsspindel zu führen.

Vorzugsweise ist dabei vorgesehen, daß die erste Arbeitsspindel in Richtung der ersten Spindelachse verfahrbar am Maschinengestell geführt ist, das heißt in Z-Richtung bewegbar ist, so daß eine vollständige Bearbeitung des Werkstücks durch eine Verfahrbarkeit des ersten Werkzeugträgers in X-Richtung möglich ist.

Es ist aber auch denkbar, den ersten Werkzeugträger noch zusätzlich in Y-Richtung quer zur ersten Spindelachse verfahrbar zu gestalten.

Bei einer anderen bevorzugten Ausführungsform der erfindungsgemäßen Lösung ist vorzugsweise vorgesehen, daß die Führung des ersten Werkstücks bei der Bearbeitung durch eine Langdrehführungsbüchse erfolgt. Damit erfolgt das Bearbeiten des ersten Werkstücks in der Art des Langdrehens, wobei die Führung quer zur Spindelachse durch die Langdrehführungsbüchse möglichst nahe der einwirkenden Werkzeuge erfolgt.

Das Langdrehen kann dabei in unterschiedlichster Art und Weise realisiert werden, wobei stets eine Relativbewegung zwischen der Langdrehführungsbüchse und der Arbeitsspindel erforderlich ist.

Eine besonders günstige Lösung sieht dabei vor, daß die Langdrehführungsbüchse in Richtung der ersten Spindelachse unverschieblich am Maschinengestell gehalten ist, während zweckmäßigerweise die Verschiebbarkeit in Z-Richtung durch Verschieben der ersten Arbeitsspindel relativ zur Langdrehführungsbüchse erfolgt.

Im Zusammenhang mit der bisherigen Erläuterung der einzelnen Ausführungsbeispiele wurde nicht näher darauf eingegangen, wie die Querbewegungsachse liegen soll.

Vorzugsweise ist die Querbewegungsachse so ausgerichtet, daß sie einer X-Achse der Werkzeugmaschine entspricht, wobei die X-Achse gemäß üblichen Definitionen in der Werkzeugmaschinenindustrie, insbesondere der Drehmaschinenindustrie ausgerichtet ist.

Auch hinsichtlich der Längsbewegungsachse wurden bislang keine näheren Angaben gemacht. So ist vorzugsweise vorgesehen, daß die Längsbewegungsachse gemäß einer Z-Achse der Werkzeugmaschine ausgerichtet ist.

Weitere Merkmale und Vorteile der Erfindung sind Gegenstand der nachfolgenden Beschreibung sowie der zeichnerischen Darstellung einiger Ausführungsbeispiele.

### In der Zeichnung zeigen:

- Fig. 1: eine Frontansicht eines ersten Ausführungsbeispiels einer erfindungsgemäßen Werkzeugmaschine mit einem ersten und einem zweiten Werkzeugträger;
- Fig. 2: eine perspektivische Ansicht des Ausführungsbeispiels gemäß Fig. 1 mit Blickrichtung A in Fig. 1 bei nicht dargestelltem zweiten Werkzeugträger in Fig. 1;
- Fig. 3: einen Schnitt längs Linie 3-3 in Fig. 4;
- Fig. 4: einen Schnitt längs Linie 4-4 in Fig. 3;
- Fig. 5: eine Draufsicht auf das erste Ausführungsbeispiel der erfindungsgemäßen Drehmaschine in Richtung des Pfeils B in Fig. 1 bei der allerdings lediglich die Arbeitsspindel und die beiden Werkzeugträger dargestellt sind, bei einer ersten Bearbeitungsmöglichkeit;

- Fig. 6: eine Draufsicht entsprechend Fig. 5 bei einer zweiten Bearbeitungsmöglichkeit;
- Fig. 7: eine Draufsicht entsprechend Fig. 5 bei einer dritten Bearbeitungsmöglichkeit;
- Fig. 8: eine Draufsicht entsprechend Fig. 5 bei einer vierten Bearbeitungsmöglichkeit;
- Fig. 9: eine Draufsicht entsprechend Fig. 5 bei einer fünften Bearbeitungsmöglichkeit;
- Fig. 10: eine Draufsicht entsprechend Fig. 5 bei einer sechsten Bearbeitungsmöglichkeit;
- Fig. 11: eine perspektivische Ansicht ähnlich Fig. 2 eines zweiten Ausführungsbeispiels einer erfindungsgemäßen Werkzeugmaschine;
- Fig. 12: eine Ansicht in Richtung des Pfeils C in Fig. 11 mit Darstellung der Getriebeverbindung zwischen den einzelnen Spindeln des zweiten Ausführungsbeispiels gemäß Fig. 11;
- Fig. 13: eine Darstellung ähnlich Fig. 2 eines dritten Ausführungsbeispiels einer erfindungsgemäßen Werkzeugmaschine;
- Fig. 14: eine Ansicht in Richtung des Pfeils D in Fig. 13;

- Fig. 15: eine Frontansicht ähnlich Fig. 1 eines vierten Ausführungsbeispiels einer erfindungsgemäßen Werkzeugmaschine;
- Fig. 16: eine Darstellung ähnlich Fig. 5 eines fünften Ausführungsbeispiels einer erfindungsgemäßen Werkzeugmaschine mit Bearbeitungsmöglichkeiten;
- Fig. 17: eine Darstellung ähnlich Fig. 5 eines sechsten Ausführungsbeispiels einer erfindungsgemäßen Werkzeugmaschine mit Bearbeitungsmöglichkeiten;
- Fig. 18: eine Darstellung ähnlich Fig. 5 eines siebten Ausführungsbeispiels einer erfindungsgemäßen Werkzeugmaschine mit Bearbeitungsmöglichkeiten und
- Fig. 19: eine Darstellung ähnliche Fig. 5 eines achten Ausführungsbeispiels einer erfindungsgemäßen Werkzeugmaschine mit Bearbeitungsmöglichkeiten.
- Fig. 20: eine perspektivische Ansicht einer Basisversion eines neunten Ausführungsbeispiels einer erfindungsgemäßen Werkzeugmaschine;
- Fig. 21: eine Frontansicht in Richtung des Pfeils F in Fig. 20;

- Fig. 22: eine Draufsicht in Richtung des Pfeils G in Fig. 20 bei einem Betriebszustand, in welchem das fertig bearbeitete erste Werkstück durch die zweite Arbeitsspindel gerade übernommen wurde;
- Fig. 23: eine Darstellung ähnlich Fig. 22, bei welcher gleichzeitig eine Bearbeitung des ersten Werkstücks und des zweiten Werkstücks erfolgt;

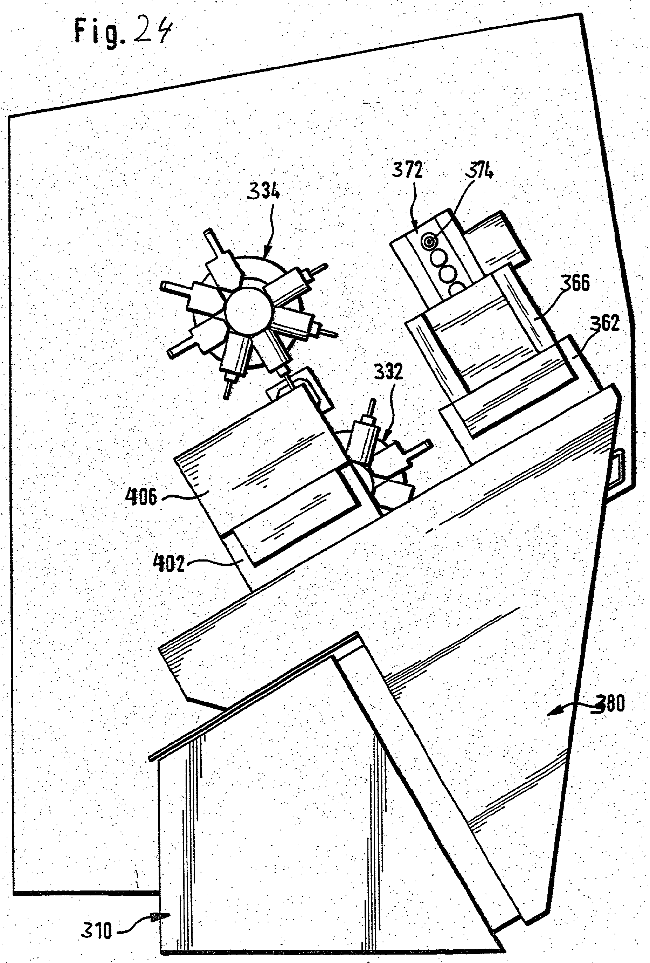

- Fig. 24: eine Ansicht in Richtung des Pfeils H in Fig. 20 bei maximal in Richtung des Maschinenbetts verfahrener Konsole;
- Fig. 25: eine Darstellung ähnlich Fig. 24 bei maximal vom Maschinenbett weg verfahrener Konsole;
- Fig. 26: eine vergrößerte perspektivischer Ansicht ähnlich Fig. 22, welche die Bearbeitung des zweiten Werkstücks mit einem zweiten frontseitigen Werkzeugträger mit einem obersten Werkzeug zeigt;
- Fig. 27: eine Darstellung ähnlich Fig. 26, welche eine Bearbeitung des zweiten Werkstücks mit einem untersten Werkzeug des zweiten frontseitigen Werkzeugträgers zeigt;
- Fig. 28: eine Darstellung ähnlich Fig. 26, in welcher eine Bearbeitung des zweiten Werkstücks ähnlich Fig. 26 erfolgt und Werkzeuge des ersten frontseitigen Werkzeugträgers am ersten Werkstück einsetzbar sind;

- Fig. 29: eine ausschnittsweise perspektivische Darstellung des neunten Ausführungsbeispiels einer erfindungsgemäßen Werkzeugmaschine;
- Fig. 30: eine perspektivische Darstellung des neunten Ausführungsbeispiels gemäß Fig. 29 mit Blickrichtung in Richtung des Pfeiles D in Fig. 29;
- Fig. 31: eine Teilansicht des neunten Ausführungsbeispiels ähnlich Fig. 21 bei in aktiver Stellung stehender erster Reihe von Werkzeugen des ersten frontseitigen Werkzeugträgers und in inaktiver Stellung stehender zweiter Reihe von Werkzeugen;
- Fig. 32: eine Darstellung ähnlich Fig. 31 bei in aktiver Stellung stehender zweiter Reihe von Werkzeugen des ersten frontseitigen Werkzeugträger und in inaktiver Stellung stehender erster Reihe von Werkzeugträgern des ersten frontseitigen Werkzeugträgers;
- Fig. 33: eine Darstellung ähnlich Fig. 31 bei in aktiver Stellung stehender erster Reihe von Werkzeugen, wobei diese in einem spitzen Winkel relativ zur ersten Spindelachse ausgerichtet sind;
- Fig. 34: eine Draufsicht auf das neunte Ausführungsbeispiel ähnlich Fig. 22 mit um 90° geschwenktem zweitem frontseitigen Werkzeugträger.

- Fig. 35: eine ausschnittsweise Darstellung der Konsole des neunten Ausführungsbeispiel der erfindungsgemäßen Drehmaschine mit dem zweiten frontseitigen Werkzeugträger und der zweiten Arbeitsspindel jedoch senkrecht zur Schwenkachse verlaufender zweiter Spindelachse und
- Fig. 36: eine Darstellung ähnlich Fig. 35 mit gegenüber der Schwenkachse des zweiten frontseitigen Werkzeugträgers in einem Winkel von weniger als 90° verlaufender zweiter Spindelachse.

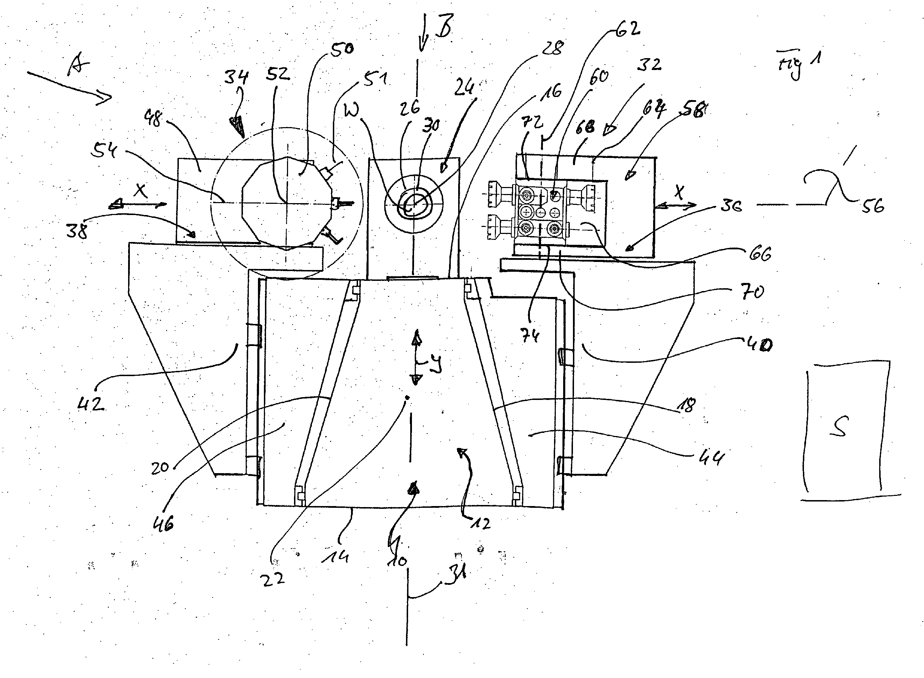

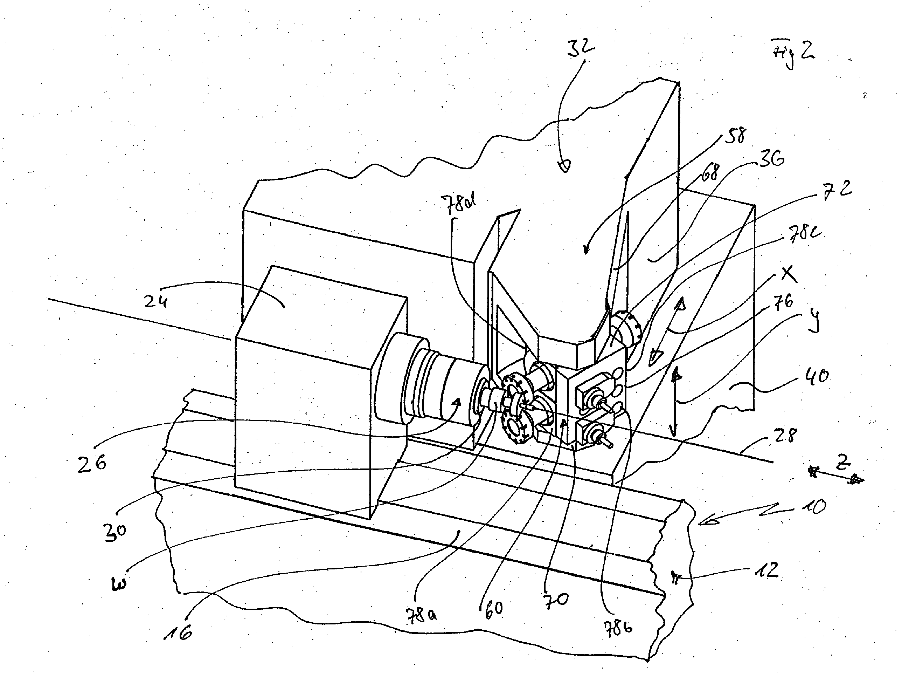

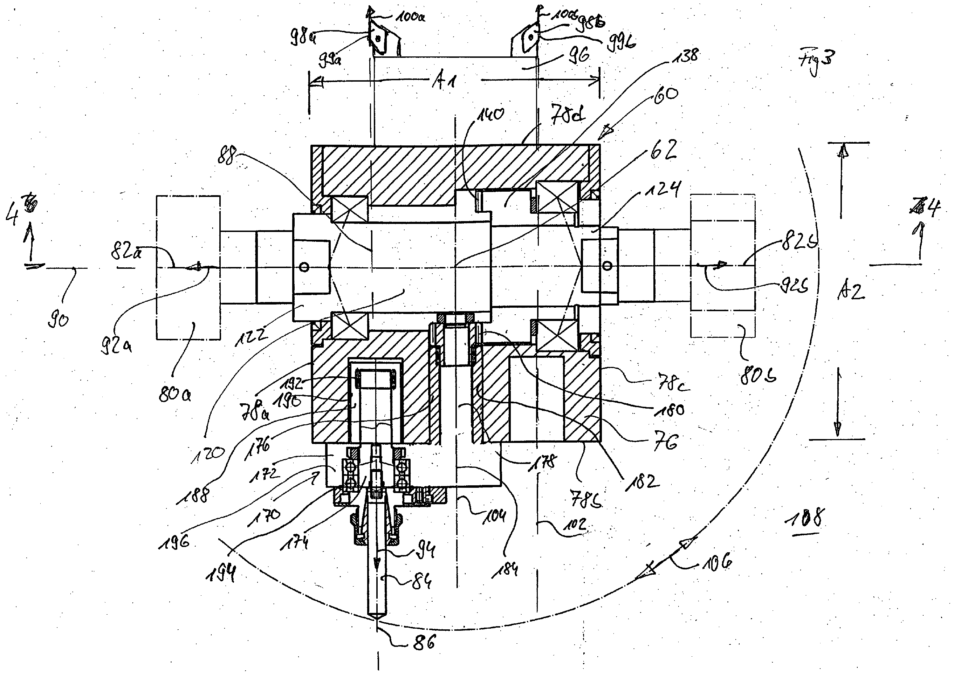

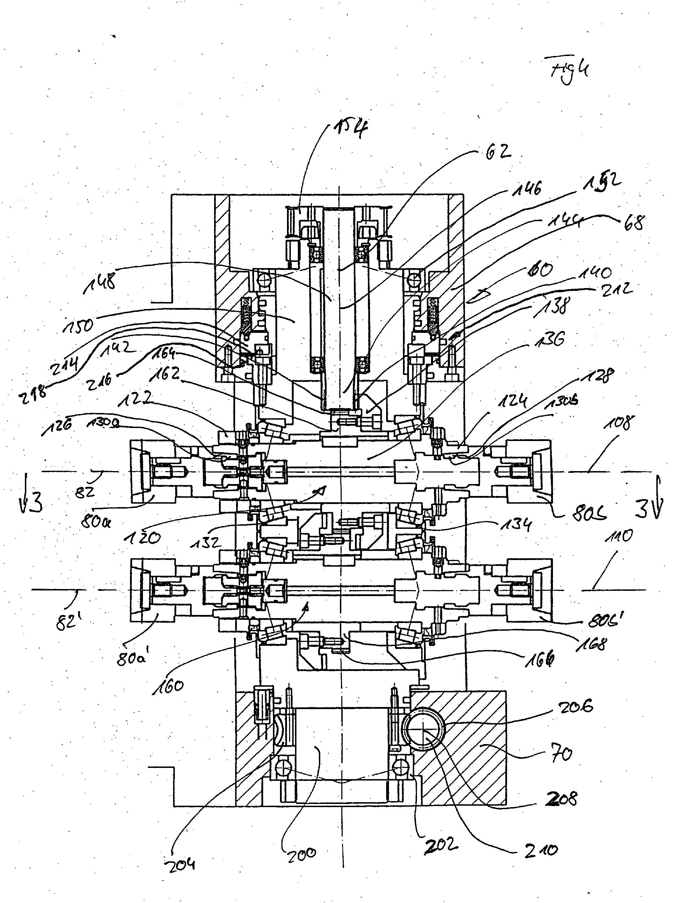

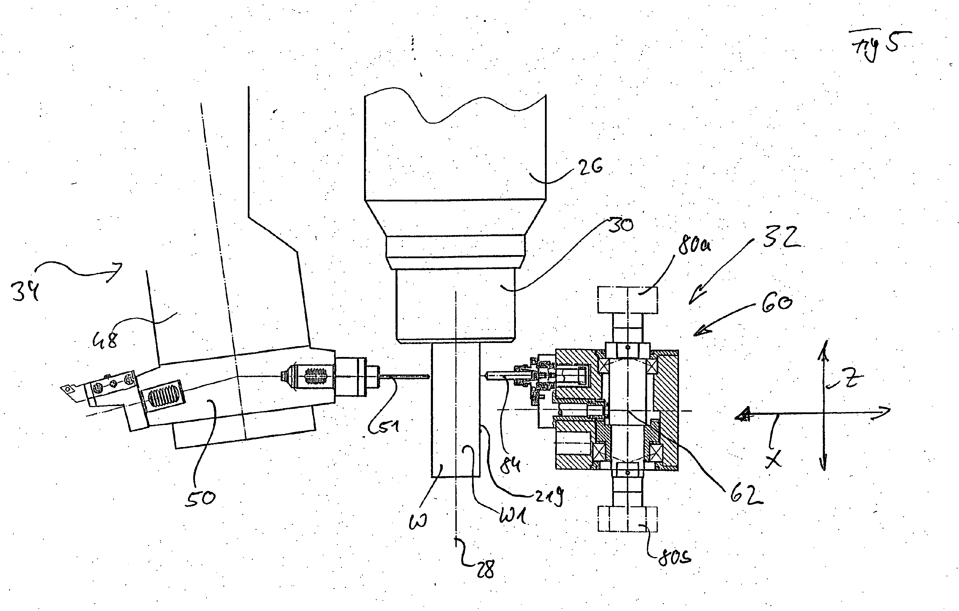

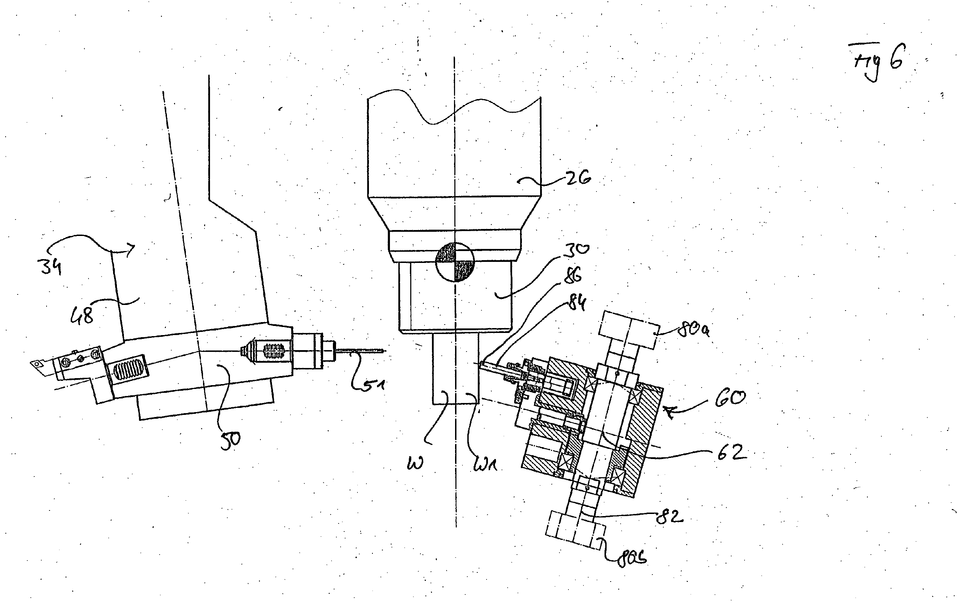

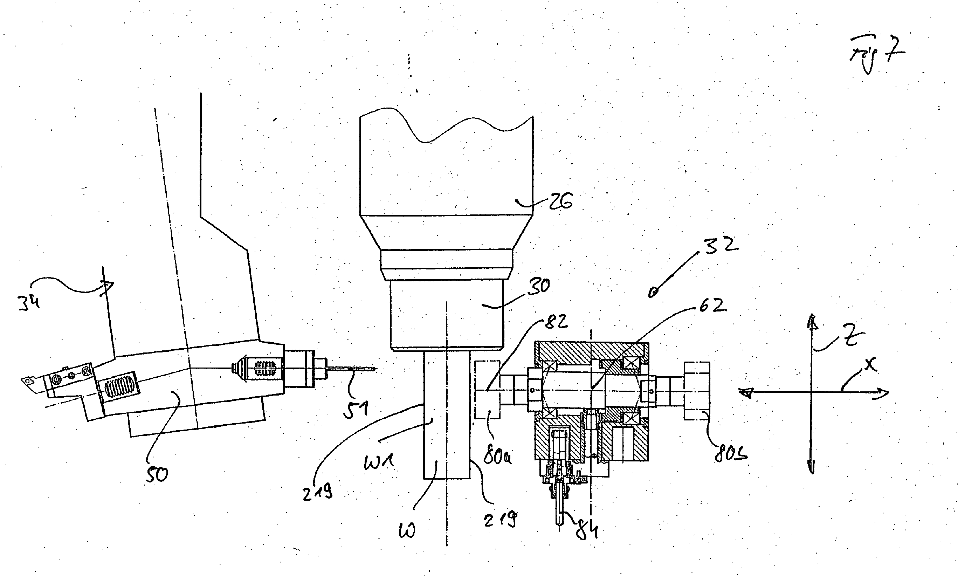

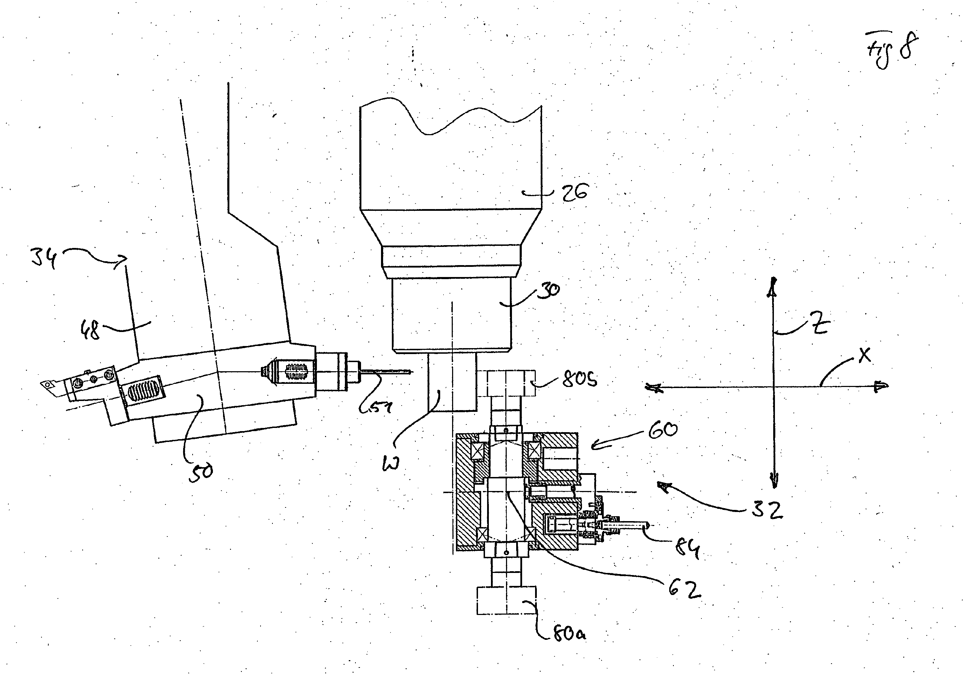

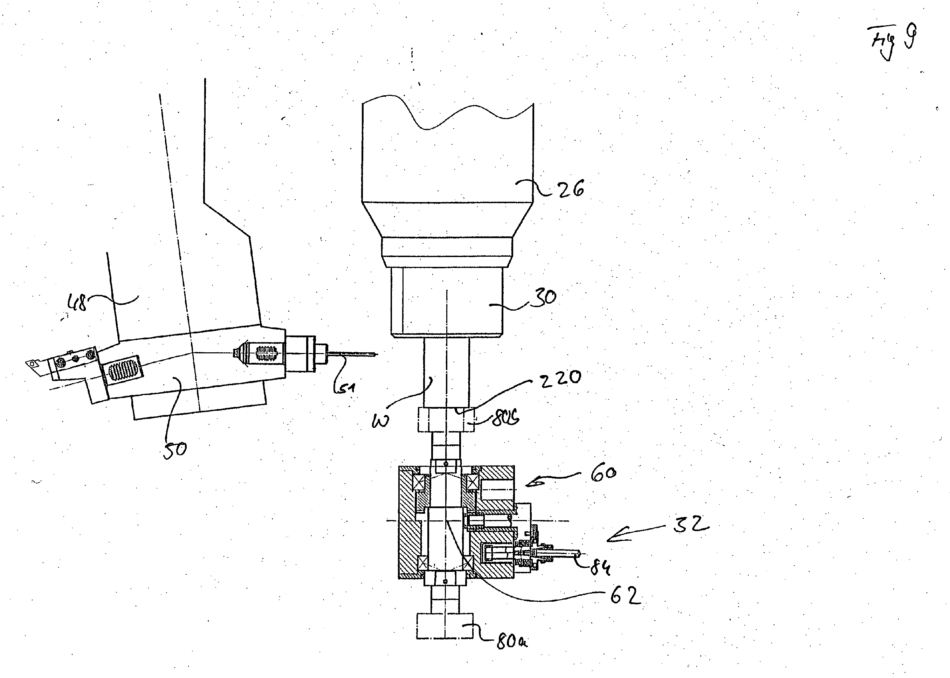

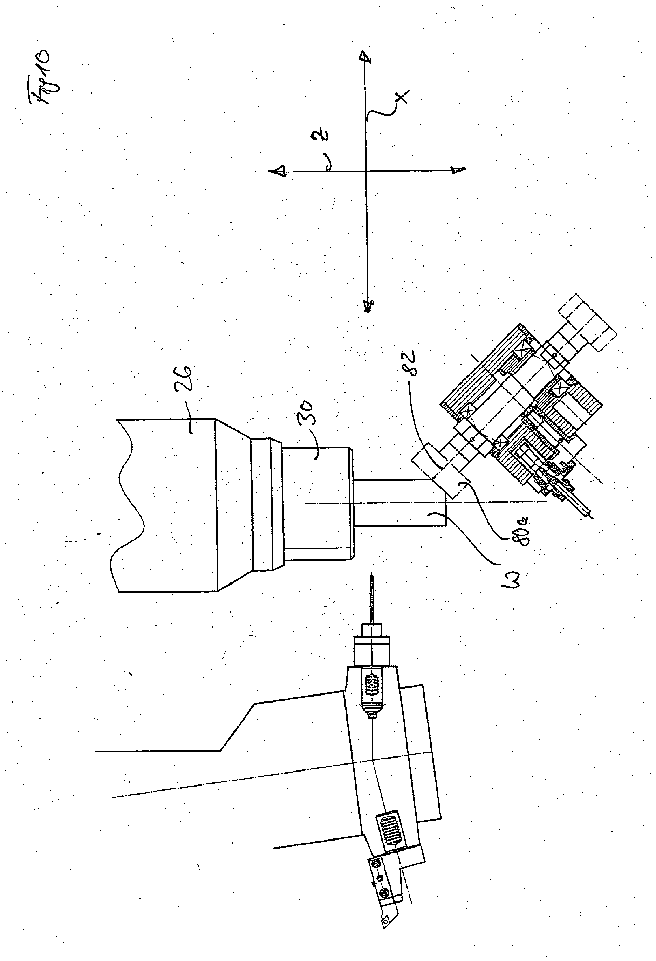

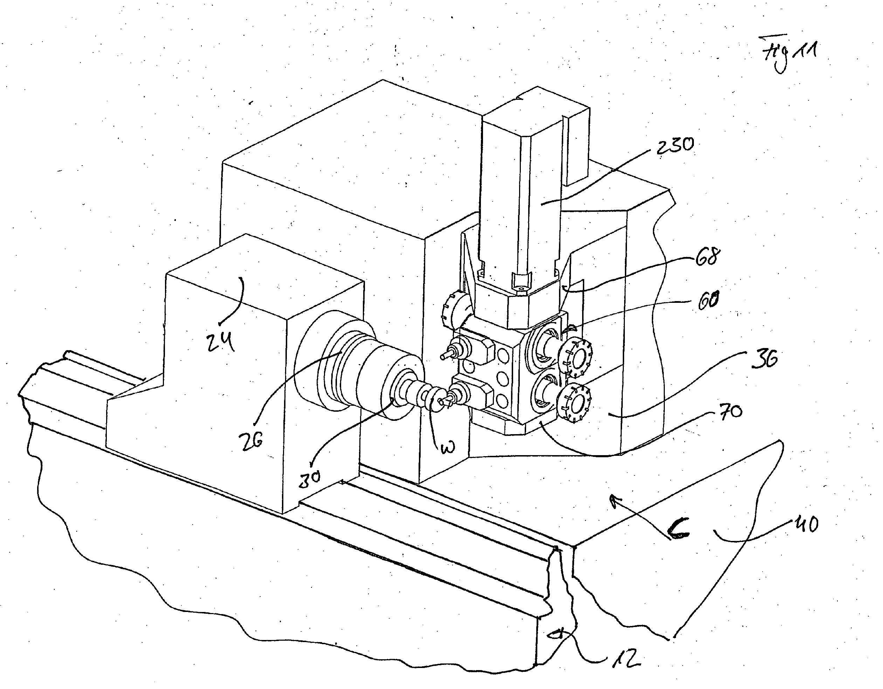

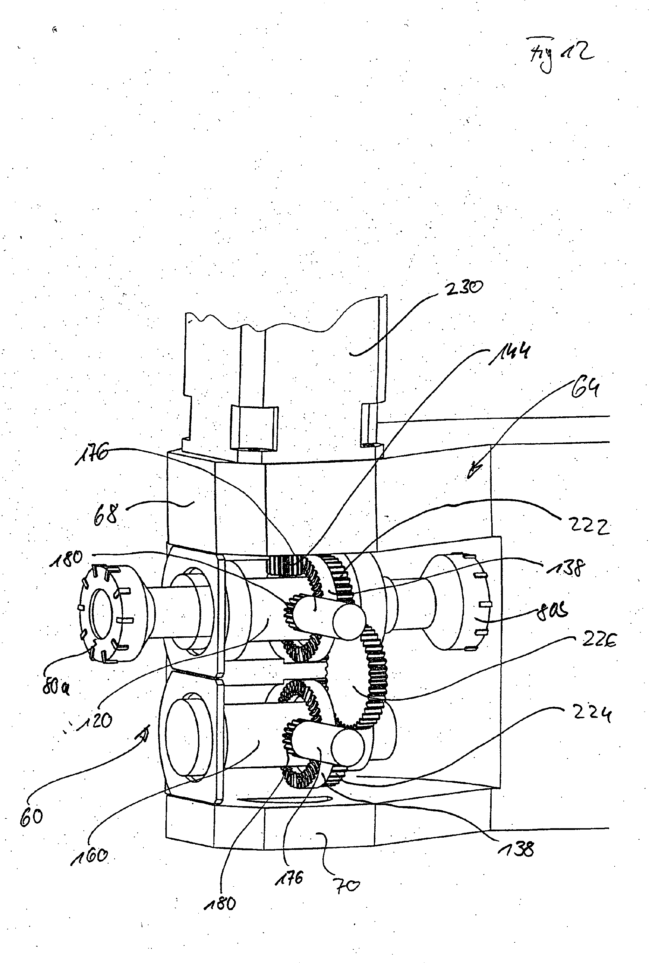

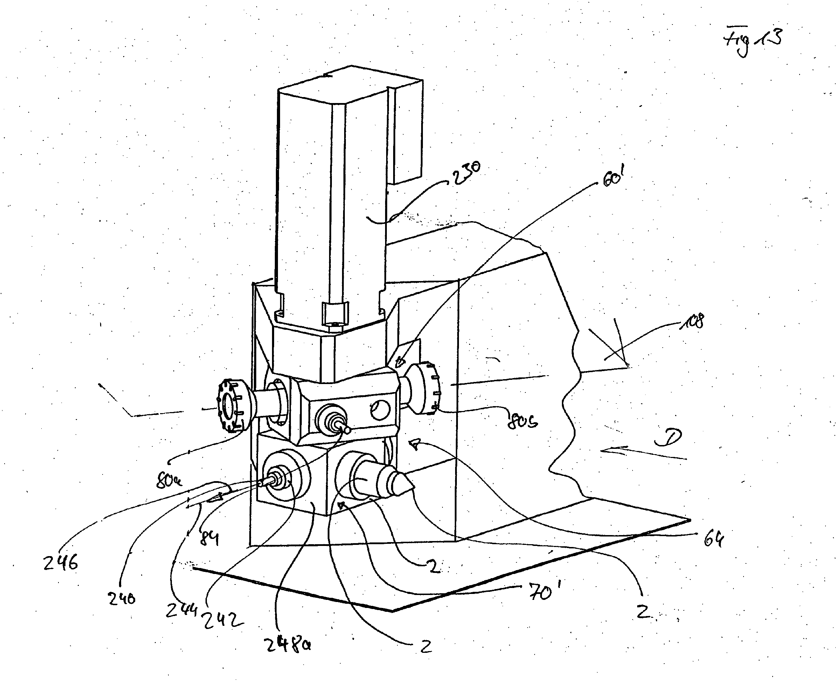

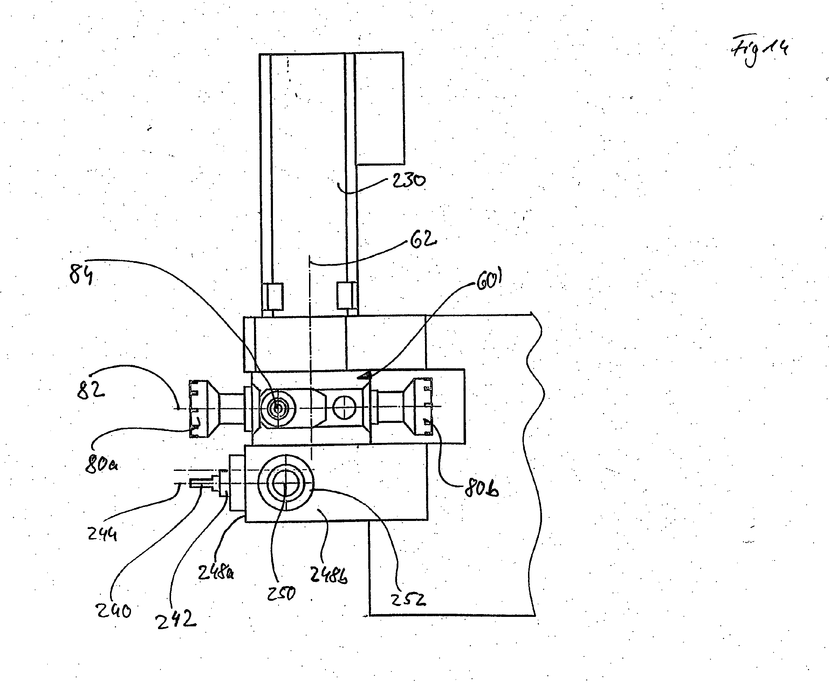

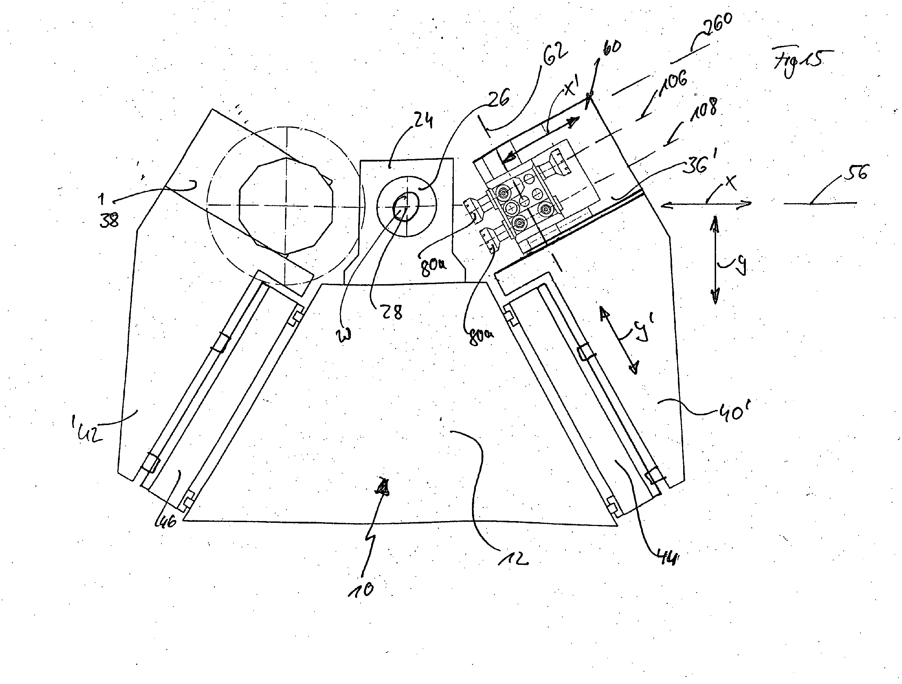

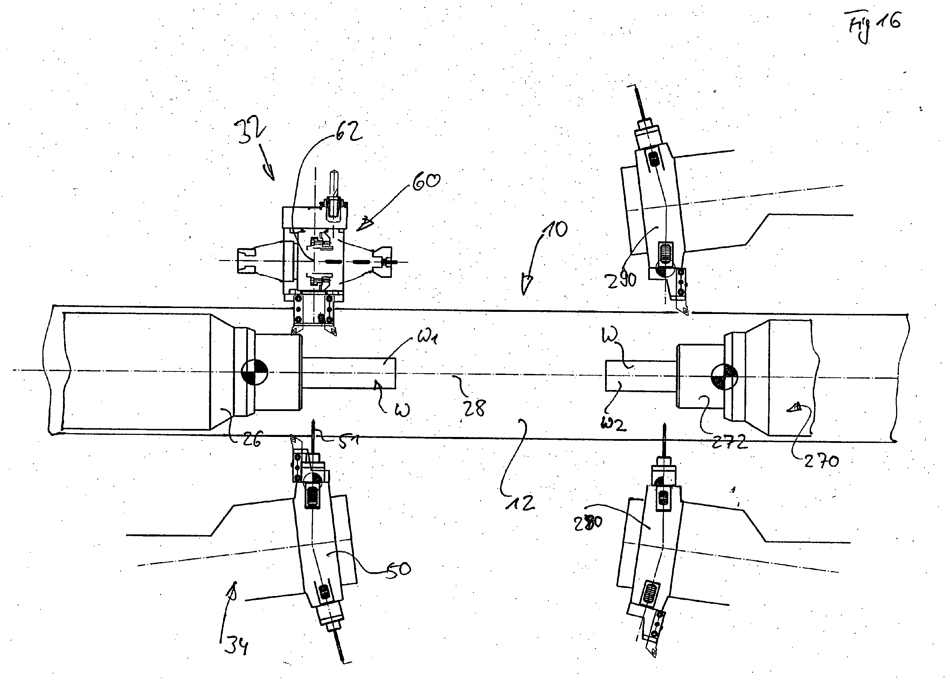

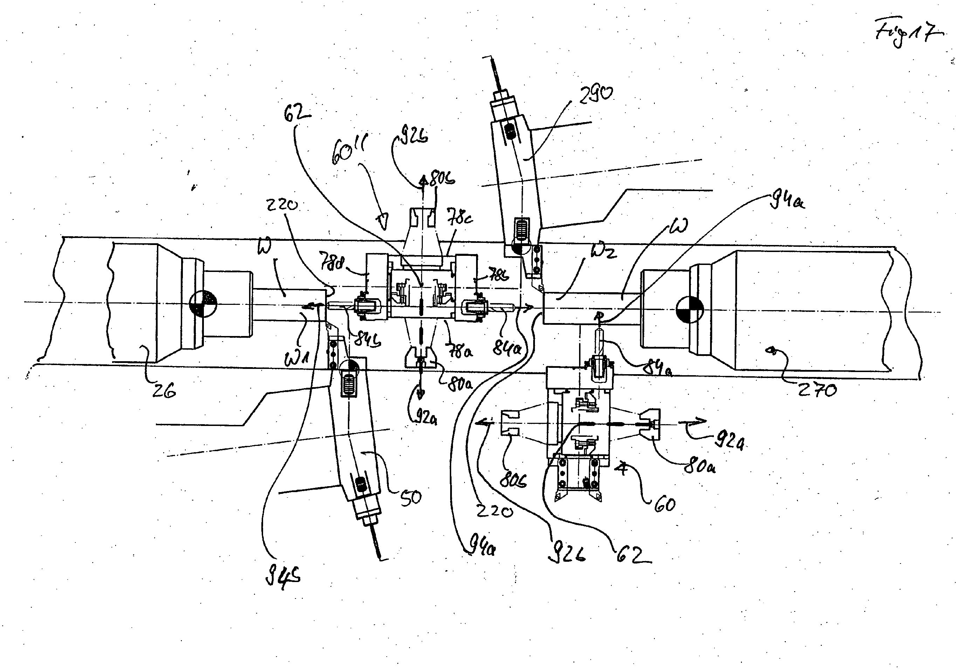

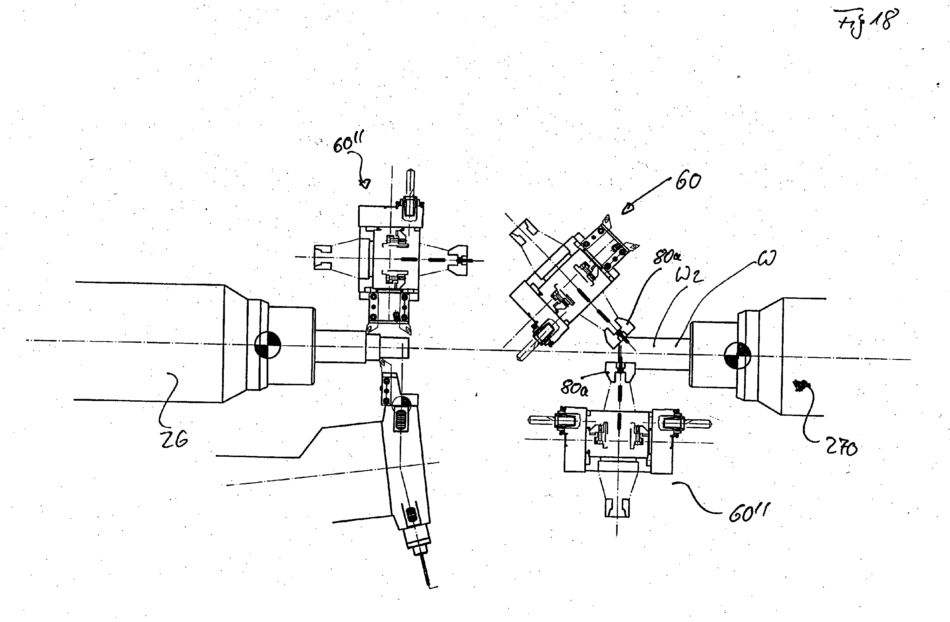

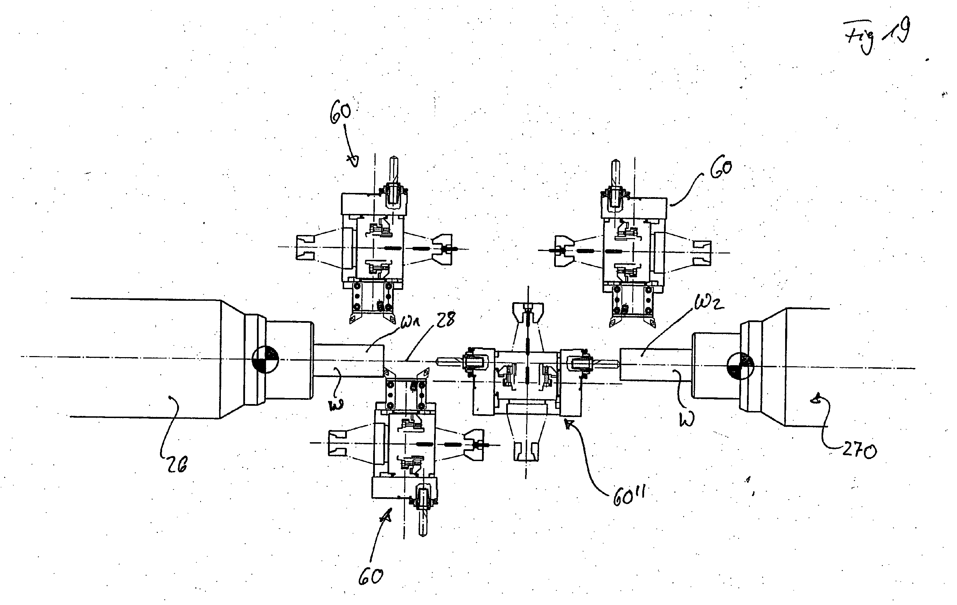

Ein Ausführungsbeispiel einer erfindungsgemäßen Drehmaschine, dargestellt in Fig. 1 und 2, umfaßt ein Maschinengestell 10 mit einem Maschinenbettkörper 12, welcher beispielsweise als langgestreckter Körper ausgebildet ist und insbesondere eine Basisseite 14, eine dieser gegenüberliegende Spindelträgerseite 16 und sich zwischen der Spindelträgerseite 16 und der Basisseite 14 erstreckende Schlittenträgerseiten 18 und 20 aufweist, wobei sich die Basisseite 14, die Spindelträgerseite 16 und die Schlittenträgerseiten 18 und 20 parallel zu einer Längsrichtung 22 des Maschinenbettkörpers 12 erstrecken.

Auf der Spindelträgerseite 16 des Maschinenbettkörpers 12 sitzt ein Spindelgehäuse 24, in welchem eine als Ganzes mit 26 bezeichnete Arbeitsspindel um eine Spindelachse 28 drehbar gelagert und antreibbar ist. An der Arbeitsspindel 26 ist eine Werkstückaufnahme 30 versehen, in welche ein als Ganzes mit W bezeichnetes Werkstück zur Bearbeitung einsetzbar ist.

Zur Bearbeitung des Werkstücks W sind beispielsweise auf einer Seite einer durch die Spindelachse 28 der Arbeitsspindel 26 und parallel zu einer X-Richtung verlaufenden Mittelebene 31 ein erster Werkzeugträger 32 und auf der gegenüberliegenden Seite der Arbeitsspindel 26 ein zweiter Werkzeugträger 34 vorgesehen, wobei vorzugsweise jeder der Werkzeugträger 32, 34 auf einem in X-Richtung senkrecht zur Spindelachse 28 bewegbaren X-Schlitten 36 bzw. 38 sitzt, der seinerseits vorzugsweise jeweils auf einem Y-Schlitten 40 bzw. 42 sitzt, welcher jeweils parallel zu einer Y-Richtung bewegbar ist, die senkrecht zur Spindelachse 28 und senkrecht zur X-Richtung verläuft.

Hierzu sind die Y-Schlitten 40 und 42 entweder direkt am Maschinenbettkörper 12 geführt oder, wie in Fig. 1 dargestellt, jeweils an Z-Schlitten 44 und 46, die ihrerseits an den Schlittenträgerseiten 18 bzw. 20 des Maschinenbettkörpers 12 in der Längsrichtung 22 und außerdem parallel zu einer in Richtung der Spindelachse 28 verlaufenden Z-Richtung verschiebbar geführt sind.

Damit sind die Werkzeugträger 32 und 34 gegenüber dem in der Arbeitsspindel 26 aufgenommenen Werkstück W in X-, Y- und Z-Richtung durch eine programmierbare Steuerung S bewegbar, mit welcher außerdem die Arbeitsspindel 26 um die Spindelachse 28 als gesteuerte C-Achse drehpositionierbar ist.

Für den Fall, daß die Y-Schlitten 40 und 42 unmittelbar am Maschinenbettkörper 12, und zwar ebenfalls an dessen Schlittenträgerseiten 18 bzw. 20 in Y-Richtung geführt sind, besteht auch die Möglichkeit, das Spindelgehäuse 24 seinerseits in Z-Richtung verschiebbar an der Schlittenträgerseite 16 des Maschinenbettkörpers zu führen und somit dadurch die Bewegbarkeit in Z-Richtung sicherzustellen.

Es besteht aber auch die Möglichkeit, sowohl eine Z-Bewegbarkeit der Werkzeugträger 32 und 34 gegenüber dem Maschinenbettkörper 12 als auch eine Z-Bewegbarkeit des Spindelgehäuses 24 gegenüber dem Maschinenbettkörper 12 vorzusehen, um - wie nachfolgend beschrieben - das Werkstück W in eine Gegenspindel übergeben zu können.

Das Grundkonzept der erfindungsgemäßen Werkzeugmaschine ist in der deutschen Patentanmeldung 100 48 291.0-14 offenbart, auf welche hiermit bezüglich der Ausbildung des Maschinenbettkörpers 12 und der Bewegbarkeit der Werkzeugträger 32 und 34 vollinhaltlich Bezug genommen wird.

Ferner ist beispielsweise der Werkzeugträger 34 ein in der genannten Patentanmeldung bereits beschriebener Werkzeugrevolver, umfassend ein Revolvergehäuse 48 und einen Revolverkopf 50 mit Werkzeugen 51, welcher gegenüber dem Revolvergehäuse 48 um eine Revolverachse 52 drehbar ist, wobei die Revolverachse 52 in einer Ebene 54 liegt, die parallel zu einer durch die Z-Richtung und die X-Richtung aufgespannten X-/Z-Ebene 56 verläuft, wobei beide Ebenen sich senkrecht zur Mittelebene 31 erstrecken.

Bei der erfindungsgemäßen Werkzeugmaschine umfaßt der als Kompaktwerkzeugträger ausgebildete Werkzeugträger 32 einen Lagergehäuse 58, an welchem ein Werkzeugträgerkopf 60 um eine Achse 62 drehbar gelagert ist, welche im Gegensatz zum Werkzeugträger 34 quer zur X-/Z-Ebene 56, vorzugsweise senkrecht zu dieser verläuft.

Zur Lagerung des Werkzeugträgerkopfes 60 ist das Lagergehäuse 58 mit einer Haltegabel 64 versehen, die zwei einen Zwischenraum 66 zwischen sich einschließende Arme 68 und 70 aufweist, zwischen denen der Werkzeugträgerkopf 60 gehalten ist.

Vorzugsweise ist dabei der Werkzeugträgerkopf 60 so ausgebildet, daß er eine der Haltegabel 68 zugewandte Oberseite 72 sowie eine der Haltegabel 70 zugewandte Unterseite 74 aufweist, die parallel zueinander und vorzugsweise senkrecht zur Achse 62 verlaufen und Basisflächen eines sich zwischen diesen erstreckenden prismatischen Körpers 76 bilden, der mehrere Seiten, beispielsweise vier Seiten 78a, 78b, 78c und 78d, gebildet durch entsprechende ebene Seitenflächen, aufweist, die vorzugsweise parallel zur Achse 62 verlaufen, wobei vorzugsweise mindestens ein Paar einander gegenüberliegender Seitenflächen, beispielsweise die Seitenflächen 78a und 78c oder die Seitenflächen 78b und 78d, parallel zueinander verlaufen und im Falle eines Quaders als prismatischem Körper 76 paarweise senkrecht zueinander ausgerichtet sind.

Unabhängig von der Form des prismatischen Körpers 76 sind jedoch einander gegenüberliegende Seiten 78, das heißt beispielsweise die Seitenflächen der Seiten 78a und 78c oder die Seitenflächen der Seiten 78b und 78c, des prismatischen Körpers 76 in einem Abstand A1 bzw. A2 voneinander angeordnet, der kleiner ist als das 6-fache eines maximalen Durchmessers der Werkstückaufnahme 30 und somit kleiner als das 6-fache eines maximalen Durchmessers des Werkstücks W in der Arbeitsspindel 26.

Besonders günstig ist es dabei, wenn die Abstände A1, A2 sogar noch kleiner als das 4-fache des maximalen Durchmessers der Werkstückaufnahme 30 und somit des maximalen Durchmessers des Werkstücks W sind.

Vorzugsweise läßt sich die maximale Ausdehnung des prismatischen Körpers quer zur Achse 62 ebenfalls auf Werte eingrenzen, die kleiner als das 8-fache des maximalen Durchmessers der Werkstückaufnahme sind.

Diese Angabe für die Abstände einander gegenüberliegender Seiten 78a und 78c bzw. 78b und 78d und die maximale Ausdehnung gilt nicht nur für die Ausbildung des prismatischen Körpers 76 als Quader sondern auch die Ausbildung des prismatischen Körpers mit jeglicher Form der Unterseite 72 und Oberseite 74, da durch diese Beschränkung der Ausdehnung des prismatischen Körpers 76 quer zur Achse 62 sichergestellt ist, daß der Werkzeugträgerkopf 60 ausreichend kompakt ist.

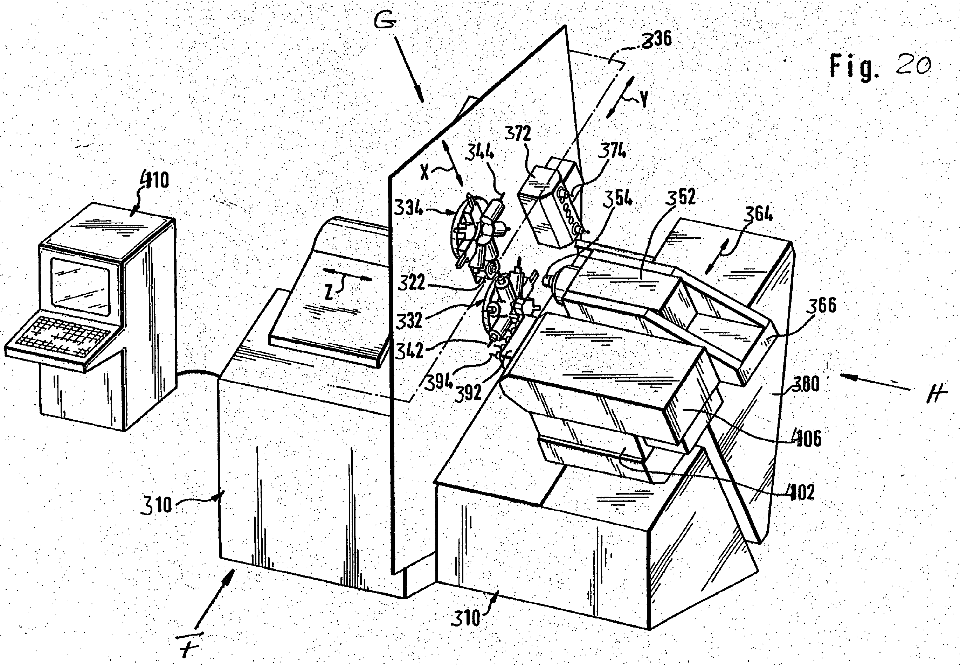

Wie in Fig. 3 dargestellt, können jeder Seitenfläche 78 eines oder mehrere Werkzeuge zugeordnet werden.

Beispielsweise sind der Seiten 78a und 78c Schwerlastwerkzeuge, insbesondere schwere Fräswerkzeuge 80a und 80b zugeordnet, die rotierend angetrieben sind und vorzugsweise um eine gemeinsame Rotationsachse 82 rotieren, wobei zu Aufnahme und Antrieb dieser schweren Fräswerkzeuge 80a und 80b noch weitere Ausführungen folgen.

Vorzugsweise liegt die Rotationsachse 82 so, daß sie die Achse 62 schneidet, um welche der Werkzeugträgerkopf 60 gegenüber dem Lagergehäuse 58 drehbar ist.

Darüber hinaus ist, wie in Fig. 3 beispielhaft dargestellt, der Seiten 78b ein Bohrwerkzeug 84 zugeordnet, welches ebenfalls rotierend angetrieben ist und somit um eine Rotationsachse 86 rotiert.

Allerdings ist dabei die Rotationsachse 86 so angeordnet, daß sie die Achse 62 nicht schneidet, sondern in einer parallel zur Achse 62 verlaufenden Ausrichtebene 88 liegt, die im Abstand von der Achse 62 verläuft.

Insbesondere ist dabei im Fall eines quaderförmigen prismatischen Körpers 76 die Ausrichtebene 88 so gelegt, daß sie senkrecht zur Rotationsachse 82 der schweren Fräswerkzeuge verläuft, und somit senkrecht zu einer Ausrichtebene 90, die durch die Achse 62 hindurch verläuft und in welcher die Rotationsachse 82 liegt.

Bei den rotierend angetriebenen Werkzeugen 80a und 80b sowie 84 ist eine Hauptrichtung durch die Rotationsachse 82 bzw. 86 des jeweiligen Werkzeugs 80a, 80b bzw. 84 festgelegt und fällt somit mit dieser Rotationsachse82a, 82b und 86 zusammen, so daß das Werkzeug 80a die Hauptrichtung 92a, das Werkzeug 80b die Hauptrichtung 92b und das Werkzeug 84 die Hauptrichtung 94 aufweisen.

Vorzugsweise besteht noch die Möglichkeit, auch auf der Seitenfläche 78d Werkzeuge, beispielsweise einen Werkzeughalter 96 für stationäre Werkzeuge in Form von Schneidplatten 98a und 98b, vorzusehen, wobei derartige stationäre Werkzeuge eine durch die Schneidengeometrie definierte Hauptrichtung aufweisen. Beispielsweise weisen die Schneidplatten 98a und 98b Hauptrichtungen 100a und 100b auf, die einerseits parallel zueinander ausgerichtet sind und andererseits beispielsweise so verlaufen, daß die Hauptrichtung 100a in der Ausrichtebene 88 oder einer zu dieser parallelen Ebene liegt und die Hauptrichtung 100b in einer Ausrichtebene 102 die parallel und im Abstand zur Achse 62 und vorzugsweise dann auch parallel zur Ausrichtebene 88 verläuft.

Eine besonders günstige Lösung sieht dabei vor, daß die Ausrichtebenen 88 und 102 symmetrisch zu einer Werkzeugträgerkopfmittelebene 104 verlaufen, die ihrerseits durch die Achse 62 hindurchverläuft und senkrecht auf der Ausrichtebene 90 steht.

Eine hinsichtlich der Ausführung von Bearbeitungszyklen mittels der Steuerung S besonders zweckmäßige Lösung sieht dabei vor, daß die Hauptrichtungen einander gegenüberliegender Werkzeuge, also beispielsweise die Hauptrichtungen 94 und 100a in derselben Ausrichtebene, in diesem Fall der Ausrichtebene 88, liegen.

Bei dem vorliegenden, in Fig. 3 dargestellten Ausführungsbeispiel weisen somit die Hauptrichtungen 92a und 92b sowie 94 und 100a sowie 100b der Werkzeuge 80a, 80b, 84, 98a und 98b, die unterschiedlichen Seiten 78a und 78c sowie 78b und 78d zugeordnet sind, in unterschiedliche Richtungen.

Beispielsweise schließen die Hauptrichtungen 92a und 92b der den Seiten 78a und 78c zugeordneten schweren Fräswerkzeuge 80a und 80b mit den Hauptrichtungen 94 oder 100a oder 100b der den Seiten 78b und 78d zugeordneten Werkzeuge 84, 98a, 98b, einen Winkel von 90° miteinander ein, wodurch vermieden werden kann, daß nicht in Arbeitsstellung stehende Werkzeuge mit dem Werkstück W oder Teilen der Arbeitsspindel 26 kollidieren, wenn eines der Werkzeuge des Werkzeugträgerkopfes 60 am Werkstück W im Einsatz ist.

Die Kollisionsgefahr von nicht im Arbeitseinsatz stehenden Werkzeugen läßt sich insbesondere dann verringern, wenn zwischen dem in Arbeitsstellung stehenden Werkzeug und dem in Azimutalrichtung 106 um die Achse 62 nächstfolgendem nicht im Einsatz befindlichen Werkzeug in Richtung einer Schneidwirkung dieses Werkzeugs ein Winkel von mindestens 60° besteht. Das heißt, daß beispielsweise beim Werkzeug 98a dieser Winkel von > 60° nur in Azimutalrichtung 106 zum Werkzeug 80a bestehen muß, da das Werkzeug 98a mit seiner Schneide 99a nur einseitig spanabhebend wirksam ist, während das in Azimutalrichtung 106 dem Werkzeug 80a gegenüberliegende Werkzeug 99b nicht relevant ist, da das Werkzeug 98a keine spanabhebend wirksame Schneide aufweist, die dem Werkzeug 99b zugewandt ist.

Aus diesem Grund können die Hauptrichtungen 100a und 100b auch parallel zueinander ausgerichtet sein.

Dagegen ist bei einem rotierend angetriebenen Werkzeug, beispielsweise einem der Werkzeuge 80a oder 80b oder 84 davon auszugehen, daß dieses bezogen auf die Azimutalrichtung 106 in beiden einander entgegengesetzten Richtungen spanabhebend wirkt, so daß der Winkel von > 60° zwischen der Hauptrichtung 94 und der Hauptrichtung 92a oder der Hauptrichtung 92b auch in beiden entgegengesetzten Richtungen bestehen sollte.

Um beim Einsatz des erfindungsgemäßen Werkzeugträgerkopfes den Steuerungsaufwand möglichst gering halten zu können, sind die Werkzeuge vorzugsweise so angeordnet, daß deren Hauptrichtungen 92a, b, 94, 100a, b in einer Ebene liegen.

Beispielsweise liegen somit sämtliche in Fig. 3 dargestellten Werkzeuge, das heißt die schweren Fräswerkzeuge 80a und 80b das Bohrwerkzeug 84 und die stationären Werkzeuge 98a und 98b mit ihren Hauptrichtungen 92a und 92b, 94 sowie 100a und 100b in einer gemeinsamen Werkzeugebene 108, die in diesem Fall mit der Zeichenebene identisch ist.

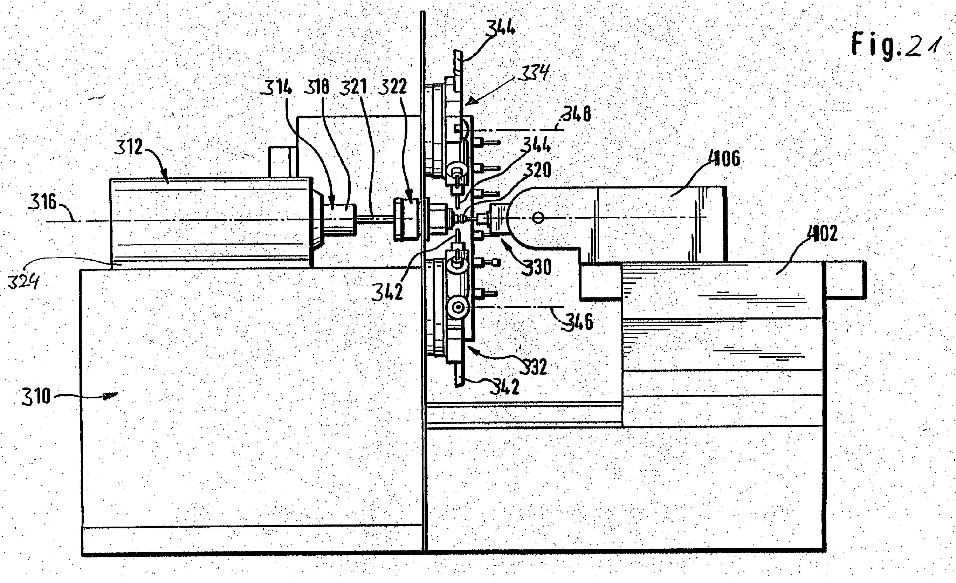

Damit an dem erfindungsgemäßen Werkzeugträgerkopf 60 eine möglichst große Zahl von Werkzeugen zur Verfügung steht, sind vorzugsweise, wie in Fig. 4 dargestellt, zusätzlich zu der einen Werkzeugebene 108 weitere Werkzeugebenen, beispielsweise eine Werkzeugebene 110, mit beispielsweise mit den Werkzeugen 80a, b, 84, 98a, b ähnlich ausgebildeten Werkzeug und ähnlich verlaufenden Hauptrichtungen vorgesehen, wobei jeweils die Werkzeuge am Werkstück W einsetzbar sind, deren Werkzeugebene 108 oder 110 der Spindelachse 28 am nächsten liegt.

Vorzugsweise erfolgt dabei die Anordnung der Werkzeugebenen 108 oder 110 derart, daß auf einer Seite der dem einzusetzenden Werkzeug zugeordneten Werkzeugebene 108 oder 110 die Spindelachse liegt, während die andere Werkzeugebene 110 oder 108 auf der der Spindelachse 28 gegenüberliegenden Seite dieser Werkzeugebene 108 oder 110 verläuft.

Wird somit beispielsweise ein Werkzeug aus der Werkzeugebene 108 eingesetzt, beispielsweise das schwere Fräswerkzeug 80a, so wird der Werkzeugträgerkopf 60 derart positioniert, daß die Spindelachse 28 stets auf der der Werkzeugebene 110 gegenüberliegenden Seite der Werkzeugebene 108 verläuft und so, daß die Spindelachse 28 maximal in der Werkzeugebene 108 selbst verläuft.

Aus diesem Grund sieht eine besonders kompakte Bauform des erfindungsgemäßen Werkzeugträgerkopfes 60 bei möglichst hoher Flexibilität der einzusetzenden Werkzeuge vor, daß auf jeder Seite des Werkzeugträgerkopfes 60 pro Ausrichtebene 88, 90, 102 Werkzeuge höchstens in zwei in Richtung der Achse 62 im Abstand voneinander angeordneten Werkzeugebenen 108 und 110 angeordnet sind.

Zur Aufnahme der beiden, an gegenüberliegenden Seiten 78a und 78c des Werkzeugträgerkopfes 60 vorgesehenen schweren Fräswerkzeuge 80a und 80b ist in dem Werkzeugträgerkopf 60 eine von der Seite 78a bis zur Seite 78c sich erstreckende durchgehende Spindel 120 vorgesehen, welche sich von der Seite 78a bis zur Seite 78c erstreckt und jeweils diese durchsetzt und dabei an jedem ihrer Enden 122 und 124 beispielsweise eine Aufnahmebohrung 126 bzw. 128 als Werkzeugaufnahmen für jeweils einen Schaft 130a bzw. 130b des jeweiligen Fräswerkzeugs 80a bzw. 80b aufweist.

Die Spindel 120 ist dabei vorzugsweise mit nahe deren Enden 122 und 124 angeordneten Drehlagern 132 und 134 in dem Werkzeugträgerkopf 60 drehbar gelagert und trägt jeweils in einem mittigen Bereich 136 ein Kronenrad 138, dessen Verzahnung einer senkrecht zur Rotationsachse 82 liegenden Ebene zugewandt ist, so daß die Verzahnung 140 mit einer umfangsseitigen Verzahnung 142 eines Ritzels 144 in Eingriff stehen kann, dessen Drehachse 146 mit der Achse 62 zusammenfällt.

Dieses Ritzel 144 sitzt dabei auf einer koaxial zur Drehachse 146 angeordneten Antriebswelle 148, die in einem Fortsatz 150 des Werkzeugträgerkopfes 60 gelagert ist, der sich in einen der Arme der Haltegabel 64, beispielsweise den oberen Arm 68 derselben hineinerstreckt und seinerseits mittels eines Drehlagers 100 in diesem um die Achse 62 drehbar gelagert ist.

Zum Antrieb der Antriebswelle 148 ist diese beispielsweise an ihrem dem Ritzel 144 gegenüberliegenden Ende mit einer Zahnriemenscheibe 154 versehen, die über einen zeichnerisch nicht dargestellten Zahnriemen durch einen im Lagergehäuse 58 angeordneten Antriebsmotor antreibbar ist.

Um nicht nur die in der Werkzeugebene 108 liegende Spindel 120 mittels der Antriebswelle 148 antreiben zu können, sondern auch eine in der Werkzeugebene 110 liegende Spindel 160, welche vorzugsweise mit der Spindel 120 ähnlich oder identisch ausgebildet ist, trägt die Spindel 120 in ihrem mittigen Bereich 126 noch ein Zahnrad 162 mit einer umfangsseitigen Verzahnung 164, die gegenüber der Verzahnung 140 radial zur Rotationsachse 82 nach innen versetzt und axial verschoben ist und diese Verzahnung 164 steht im Eingriff mit einer Verzahnung 166 eines auf der Spindel 160 sitzenden Zahnrades 168, das seinerseits fest auf der Spindel 160 sitzt.

Im übrigen ist die Spindel 160 ähnlich oder sogar identisch ausgebildet wie die Spindel 120, so daß hinsichtlich weiterer Details auf die Ausführungen zur Spindel 120 verwiesen werden kann. Folglich können in der Spindel 160 ebenfalls Schwerlastwerkzeuge 80a' und 80b' aufgenommen werden, die um eine gemeinsame Rotationsachse 82' rotierend anteibbar sind.

Um außerdem von einer der Spindeln 120 oder 160 oder von beiden der Spindeln 120 und 160 einen Antrieb für das Bohrwerkzeug 84 ableiten zu können, ist das Bohrwerkzeug 84 in einem Werkzeughalter 170 angeordnet, dessen Werkzeughalterkörper 172 an dem Werkzeugträgerkopf 60 fixierbar ist und in welchem eine das Bohrwerkzeug 84 als Werkzeugaufnahme aufnehmende Spindel 174 drehbar gelagert ist.

Ferner ist der Werkzeughalterkörper 172 noch mit einem Antriebsfinger 176 versehen, in welchem eine Antriebswelle 178 drehbar gelagert ist, wobei die Antriebswelle 178 ein endseitig des Antriebsfingers 176 angeordnetes Antriebsritzel 180 trägt. Der Antriebsfinger 176 ist dabei in eine Aufnahmebohrung 182 des Werkzeugträgerkopfes 60 einsetzbar, die so liegt, daß bei in die Aufnahmebohrung 182 eingesetztem Antriebsfinger 176 das endseitig desselben liegende Antriebsritzel 180 mit der Verzahnung 140 des Kronenrads 138 in Eingriff steht und durch dieses angetrieben werden kann.

Hierzu ist die Drehachse 184 des Antriebsritzels 180 und der Antriebswelle 178 so anzuordnen, daß diese die Rotationsachse 82 der jeweiligen Spindel 120 oder 160 schneidet und vorzugsweise in der jeweiligen Werkzeugebene 108 oder 110 liegt.

Der Werkzeughalter 170 kann dabei entweder so aufgebaut sein, daß die Drehachse 184 und die Rotationsachse 86 des Bohrwerkzeugs 84 miteinander fluchten oder im Abstand voneinander verlaufen, wie in Fig. 3 dargestellt.

In diesem Fall ist zwischen der Antriebswelle 178 und der Spindel 174 ein diese miteinander drehfest verbindendes Übertragungsgetriebe 186 vorgesehen.

Zur sicheren Fixierung des Werkzeughalters 170 ist dessen Werkzeughalterkörper 172 zusätzlich noch mit einem Fortsatz 188 versehen, welcher in eine Aufnahme 190 im Werkzeugträgerkopf 60 einsetzbar und in dieser fixierbar ist.

Vorzugsweise ist dabei der Fortsatz 188 koaxial zur Spindel 174 angeordnet, so daß diese sich in den Fortsatz 188 hineinerstrecken kann und in diesem noch durch ein Drehlager 192 abstützbar ist, das zusätzlich zu einem Drehlager 194 für die Spindel 174 vorgesehen ist, wobei das Drehlager 194 die Spindel 174 in einem auf die Seite 78b aufsetzbaren Aufsetzkörper 196 des Werkzeughalterkörpers 172 lagert, von welchem ausgehend sich der Antriebsfinger 176 und der Fortsatz 188 des Werkzeughalterkörpers 172 erstrecken.

Um den Werkzeugträgerkopf 60 um die Drehachse 62 gesteuert drehen zu können, ist der Werkzeugträgerkopf 60 mit einem Fortsatz 200 versehen, welcher sich in einen Arm, beispielsweise den Arm 70 der Haltegabel 64 hineinerstreckt und in diesem über ein Drehlager 202 drehbar gelagert ist.

Ferner trägt der Fortsatz 200 noch ein Schneckenrad 204, das koaxial zur Achse 62 angeordnet ist und mit einer Schnecke 206 in Eingriff steht, die um eine Achse 208 drehbar ist, welche in einer senkrecht zur Drehachse 62 liegenden Ebene liegt. Die Schnecke 206 sitzt dabei auf einer Schwenkantriebswelle 210, welche sich in dem Arm 70 bis zum Lagergehäuse 58 erstreckt und mit einem im Lagergehäuse 58 angeordneten Antriebsmotor zum Verschwenken des Werkzeugträgerkopfes 60 gekoppelt ist.

Grundsätzlich ist eine sichere Positionierung des Werkzeugträgerkopfes 60 bereits mit einem selbsthemmenden Getriebe, umfassend beispielsweise das Schneckenrad 204 und die Schnecke 206 möglich, insbesondere wenn dieses als spielfreies Getriebe ausgebildet ist. Um jedoch große Drehmomente aufnehmen zu können, ist vorzugsweise eine Festlegung des Werkzeugträgerkopfes 60 in der Haltegabel 64 durch eine Hirth-Verzahnung 212 vorgesehen, umfassend einen hydraulisch in Richtung der Achse 62 bewegbaren Verzahnungsring 214, welcher mit einem koaxial zu diesem angeordneten und fest in dem Arm 68 der Haltegabel 64 vorgesehenen Zahnring 216 und einem ebenfalls koaxial zu diesen angeordneten und fest mit dem Fortsatz 150 verbundenen Zahnring 218 in Eingriff oder außer Eingriff bringbar ist, um somit den Fortsatz 150 relativ zum Arm 68 drehfest festzulegen oder die Festlegung zu lösen.

Vorzugsweise hat dabei die Hirth-Verzahnung 212 eine Teilung, welche eine drehfeste Festlegung des Werkzeugträgerkopfes 60 relativ zur Haltegabel 64 in 1,25° Schritten oder einem ganzzahligen Vielfachen von 1,25° Schritten zuläßt, so daß nicht nur Drehungen des Werkzeugträgerkopfes 60 relativ zur Haltegabel 64 um Winkel möglich sind, die es erlauben, die Hauptrichtung 92a, b, 94, 100a, b jedes der Werkzeuge parallel zur X-Achse oder parallel zur Z-Achse auszurichten, sondern auch Zwischenstellungen zwischen derartigen Ausrichtungen vorzusehen, um komplexe Werkstücke fertig bearbeiten zu können.

Es ist aber auch denkbar, auf die Hirth-Verzahnung 212 zu verzichten und eine durch die Steuerung S ansteuerbare B-Achse zur Drehung des Werkzeugträgerkopfes 60 vorzusehen, die es erlaubt, den Werkzeugträgerkopf 60 relativ zur Haltegabel 64 in beliebigen Winkelstellungen drehfest zu positionieren und somit den höchsten Komplexitätsgrad an Bearbeitungen zu erhalten.

Mit einem derart mit Werkzeugen versehenen und um die Achse 62 drehbaren Werkzeugträgerkopf 60 lassen sich, wie in den Fig. 5 bis 10 dargestellt, unterschiedlichste Bearbeitungen des Werkstücks W durchführen, insbesondere, wenn der Werkzeugträgerkopf 60 in X-Richtung und Z-Richtung so bewegbar ist, daß er mit einer Seite 78 einer Umfangsseite 219 des Werkstücks W zugewandt sein kann (Fig. 5 bis 7) oder mit einer Seite 78 einer Stirnseite 220 des Werkstücks W (Fig. 8, 9) zugewandt sein kann.

Wie beispielsweise in Fig. 5 und 6 dargestellt, kann mit dem Bohrwerkzeug 84 umfangsseitig des Werkstücks W eine Bohrung in beliebiger Ausrichtung zur X-Achse eingebracht werden, das heißt sowohl eine Bohrung mit einer Ausrichtung der Rotationsachse 86 in X-Richtung als auch eine Bohrung mit einer Ausrichtung der Rotationsachse 76 in einem von 0 verschiedenen Winkel zur X-Richtung. Dabei kann der Winkel so weit variiert werden, daß die Rotationsachse 86 parallel zur Z-Richtung ausgerichtet ist, um beispielsweise stirnseitig des Werkstücks W Bohrungen einzubringen.

Wie ferner in den Fig. 7 bis 10 dargestellt, lassen sich beispielsweise auch mit den schweren Fräswerkzeugen 80a und 80b unterschiedlichste Bearbeitungen des Werkstücks W durchführen, beispielsweise umfangsseitige Bearbeitungen mit einer Ausrichtung der Rotationsachse 82 parallel zur X-Richtung, wie in Fig. 7 dargestellt oder parallel zur Z-Richtung, wie in Fig. 8 dargestellt. Oder stirnseitige Bearbeitungen des Werkstücks W über dessen gesamte Stirnseite 220, wie in Fig. 9 dargestellt, oder Bearbeitungen des Werkstücks W mit einer Ausrichtung der Rotationsachse 82 in spitzen Winkeln zur X-Richtung und Z-Richtung, wie in Fig. 10 dargestellt.

Darüber hinaus ist in den Fig. 5 bis 10 ebenfalls noch ersichtlich, daß gleichzeitig mit der Bearbeitung des Werkstücks W durch eines der Werkzeuge 80 oder 84 des Werkzeugträgerkopfes noch eine Bearbeitung des Werkstücks W durch Werkzeuge 51 des Revolverkopfes 50 erfolgen kann, ohne daß eine Kollision mit den Werkzeugen 80a, b, 84, 98 des Werkzeugträgerkopfes 60 erfolgt.

Bei einem zweiten Ausführungsbeispiel einer erfindungsgemäßen Werkzeugmaschine, dargestellt in den Fig. 11 und 12 ist der Antrieb der Spindeln 120 und 160 gegenüber dem ersten Ausführungsbeispiel modifiziert.

Bei dem ersten Ausführungsbeispiel kämmen zum Koppeln des Antriebs der Spindeln 120 und 160 die auf den Spindeln 120, 160 sitzenden Zahnräder 162 und 168 miteinander, so daß die Drehrichtung der einen Spindel 120, 160 entgegengesetzt zur Drehrichtung der anderen Spindel 160, 120 ist.

Bei dem zweiten Ausführungsbeispiel erfolgt der gekoppelte Antrieb der Spindeln 120 und 160 zwar ebenfalls über auf den Spindeln 120 und 160 sitzende Zahnräder 222 und 224, diese sind jedoch mit einem Zwischenrad 226 in Eingriff, so daß die beiden Spindeln 120 und 160 bei dieser Lösung mit derselben Drehrichtung angetrieben sind.

Das Zwischenrad 226 erlaubt es auch ferner noch, den Abstand der Spindeln 120 und 160 in vorteilhafter Weise zu vergrößern, ohne daß der Durchmesser der Zahnräder 222 und 224 größer werden muß.

Darüber hinaus ist bei dem zweiten Ausführungsbeispiel das Ritzel 144 direkt auf einer Motorwelle eines Antriebsmotors 230 angeordnet, wobei der Antriebsmotor 230 vorzugsweise auf einer dem Werkzeugträgerkopf 60 abgewandten Seite des Arms 68 der Haltegabel 64 sitzt.

Ferner besteht die Möglichkeit, mittels der Kronenräder 138 Antriebsritzel 180 von Antriebsfingern 176 anzutreiben, um auch einen Antrieb für weitere angetriebene Werkzeuge beispielsweise Bohrwerkzeuge 84 vorzusehen, deren Rotationsachse 86 sich - wie im Zusammenhang mit dem ersten Ausführungsbeispiel beschrieben - quer zu der Rotationsachse 82 der schweren Fräswerkzeuge 80 erstreckt.

Durch die direkte Kopplung mit dem Antriebsmotor 230 besteht bei dem zweiten Ausführungsbeispiel die Möglichkeit, große Antriebsleistungen zum Antrieb der schweren Fräswerkzeuge 80 einzusetzen, wobei zum Antrieb derselben eine Untersetzung von 1:4 erfolgt, während zum Antrieb beispielsweise der Bohrwerkzeuge 84 eine geringere Untersetzung im Verhältnis 1:2 gewählt wird, wobei die Antriebsmotoren 230 üblicherweise mit Drehzahl von 3000 bis 6000 U/min arbeiten.

Bei einem dritten Ausführungsbeispiel, dargestellt in den Fig. 13 und 14, umfaßt einen Werkzeugträgerkopf 60', nur in einer Werkzeugebene 108 mit ihren Hauptrichtungen 92, 94 liegende Werkzeuge, beispielsweise die schweren Fräswerkzeuge 80a und 80b und zusätzlich das Bohrwerkzeug 84 vorhanden sind.

Der Antrieb der Werkzeuge 80a, b, 84 und das Schwenken des Werkzeugträgerkopfes 60' erfolgen in gleicher Weise wie im Zusammenhang mit den ersten beiden Ausführungsbeispielen beschrieben.

Ergänzend hierzu ist allerdings der untere Arm 70' der Haltegabel 64' zur Führung des Werkzeugträgerkopfes 60' ebenfalls seinerseits noch als Werkzeugträger ausgebildet und trägt eine zur Aufnahme eines rotierend angetriebenen Werkzeugs 240 ausgebildete Spindel 242, wobei das rotierend angetriebene Werkzeug 240 um eine Rotationsachse 244 rotierend antreibbar ist und insbesondere die mit der Rotationsachse 244 zusammenfallende Hauptrichtung 246 parallel zur X-Richtung verläuft.

Zweckmäßigerweise steht dabei das rotierend angetriebene Werkzeug 240 über eine Seite 248a des Haltearms 70' über.

Ferner ist vorzugsweise noch einer weiteren Seite 248b des Haltearms 70' ein stationäres Werkzeug 250 zugeordnet, welches mit einem Werkzeughalter 252 gehalten ist.

Das stationäre Werkzeug 250 kann ein beliebiges Werkzeug sein. Eine bevorzugte Lösung sieht vor, daß dieses eine Reitstockspitze für ein in einer Gegenspindel gehaltenes Werkstück darstellt.

Bei einem vierten Ausführungsbeispiel einer erfindungsgemäßen Werkzeugmaschine, dargestellt in Fig. 15, sind diejenigen Teile, die mit dem ersten Ausführungsbeispiel identisch sind, mit denselben Bezugszeichen versehen, so daß hinsichtlich der Beschreibung derselben vollinhaltlich auf das erste Ausführungsbeispiel Bezug genommen werden kann.

Im Gegensatz zum ersten Ausführungsbeispiel sind die Schlitten 40' und 42' nicht in einer senkrecht zur X-/Z-Ebene stehenden Y-Richtung bewegbar, sondern in einer Y'-Richtung, die gegenüber der X/Z-Ebene geneigt ist.

Darüber hinaus sind auch die Schlitten 36' und 38' nicht in X-Richtung parallel zur X/Z-Ebene bewegbar, sondern in einer X'-Richtung, die gegenüber der X/Z-Ebene geneigt verläuft.

Dies hat zur Konsequenz, daß auch die Achse 62, um die der Werkzeugträgerkopf 60 drehbar ist, nicht senkrecht auf der X/Z-Ebene 56 steht, sondern in einem Winkel zu dieser verläuft, jedoch sich nach wie vor quer zur X/Z-Ebene erstreckt.

Dies hat zur Folge, daß beim Einsatz der Werkzeuge, beispielsweise der Werkzeuge 80a in den einzelnen Werkzeugebenen 106 und 108 eine Interpolation dergestalt erfolgen muß, daß zur Bearbeitung des Werkstücks W mit dem rotierenden Werkzeug 80a eine Bearbeitung bezüglich einer X'/Z-Ebene 260 erfolgen muß und das Werkstück W durch die C-Achse der Arbeitsspindel 26 entsprechend gedreht werden muß.

Bei einem fünften Ausführungsbeispiel einer erfindungsgemäßen Werkzeugmaschine ist auf dem Maschinenbettkörper 12 nicht nur die Arbeitsspindel 26 vorgesehen, sondern vorzugsweise auf demselben Maschinenbettkörper 12 und auf dessen Spindelträgerseite eine mit der Arbeitsspindel fluchtend positionierte oder positionierbare Gegenspindel 270, in deren Werkzeugaufnahme 272 das Werkstück W mit einer in der Arbeitsspindel 26 bearbeiteten ersten Seite W1 aufnehmbar ist, zur Bearbeitung einer zweiten Seite W2.

Dabei sind wie bei den bislang beschriebenen Ausführungsbeispielen der Arbeitsspindel 26 auf einer Seite der Spindelachse 28 der erste Werkzeugträger 32 mit dem Werkzeugträgerkopf 60 und auf der gegenüberliegenden Seite der zweite Werkzeugträger 34 mit dem Revolverkopf 50 in der beschriebenen Art und Weise zugeordnet. Gleichzeitig sind der Gegenspindel 270 ebenfalls auf gegenüberliegenden Seiten der Spindelachse 28 ein dritter Werkzeugträger mit einem Revolverkopf 280 und ein vierter Werkzeugträger mit einem Revolverkopf 290 angeordnet, so daß auch in der Gegenspindel 270 das Werkstück W auf der Seite W2 mit den Werkzeugen der beiden Revolverköpfe 280 und 290 bearbeitbar ist.

Dabei sind bei dem in Fig. 16 dargestellten fünften Ausführungsbeispiel die Revolverköpfe 50, 280 und 290 vorzugsweise identisch ausgebildet.

Bei einem in Fig. 17 dargestellten sechsten Ausführungsbeispiel ist der Werkzeugträgerkopf 60" nicht nur auf den einander gegenüberliegenden Seiten 78a und 78c mit rotierend angetriebenen Werkzeugen 80 versehen, sondern auch auf den einander gegenüberliegenden Seiten 78b und 78d, wobei es sich beispielsweise um Bohrwerkzeuge 84a und 84b handelt.

Dabei kann der Werkzeugträgerkopf 60" so zwischen die Spindel 26 und die Gegenspindel 270 eingefahren werden, daß das in der Arbeitsspindel 26 aufgenommene Werkstück W auf seiner ersten Seite W1 auf seiner gesamten Stirnseite 220 mit dem in Arbeitsstellung stehenden Werkzeug, also beispielsweise mit dem Bohrwerkzeug 84b, bearbeitet werden kann und das in der Gegenspindel 270 aufgenommene Werkstück W auf seiner zweiten Seite W2 ebenfalls auf seiner gesamten Stirnseite 220 mit dem gegenüberliegenden Werkzeug, als beispielsweise dem Bohrwerkzeug 84a, gebohrt werden kann, wobei diese Bearbeitung möglich ist, ohne eine Kollision mit den Revolverköpfen 50 und 290 herbeizuführen.

Darüber hinaus ist vorteilhafterweise der Revolverkopf 280 ebenfalls ersetzt durch einen Werkzeugträgerkopf 60, welcher beispielsweise so ausgebildet ist, wie der Werkzeugträgerkopf 60 des ersten Ausführungsbeispiels.

Jeder der Werkzeugträgerköpfe 60 und 60" ist um seine Achse 62 so drehbar, daß entweder die Werkzeuge 80a, b, 84a, b mit ihren Hauptrichtungen 92a, b, 94a, b quer zur Z-Achse ausgerichtet oder quer zur X-Achse ausgerichtet zur Bearbeitung des Werkstücks W auf der ersten W1 oder der zweiten Seite W2 entweder am Umfang 219 oder an der Stirnseite 220 einsetzbar sind.

Bei einem siebten Ausführungsbeispiel, dargestellt in Fig. 18, sind die beiden Revolverköpfe 280 und 290 durch Werkzeugträgerköpfe 60 und 60" ersetzt, die der Gegenspindel 270 zugeordnet sind, während der Arbeitsspindel 26 ebenfalls ein Werkzeugträgerkopf 60" zugeordnet ist.

Ferner ist die zweite Seite W2 des in der Gegenspindel 270 aufgenommenen Werkstücks W damit beispielsweise durch zwei schwere Fräswerkzeuge 80a der Werkzeugträgerköpfe 60' und 60", die der Gegenspindel 270 zugeordnet sind, bearbeitbar.

Bei einem achten Ausführungsbeispiel, dargestellt in Fig. 19 sind der Arbeitsspindel 26 auf gegenüberliegenden Seiten der Spindelachse 28 zwei Werkzeugträgerköpfe 60 zugeordnet und der Gegenspindel 270 sind ein Werkzeugträgerkopf 60 und ein Werkzeugträgerkopf 60" zugeordnet, so daß mittels des Werkzeugträgerkopfes 60' ebenfalls die Möglichkeit besteht, sowohl auf der ersten Seite W1 des in der Arbeitsspindel 26 gehaltenen Werkstücks W als auch auf der Stirnseite der zweiten Seite W2 des in der Gegenspindel 270 gehaltenen Werkzeugs W Bearbeitungen durchzuführen.

Eine Basisversion eines neunten Ausführungsbeispiels einer erfindungsgemäßen Werkzeugmaschine, insbesondere einer Drehmaschine, dargestellt in Fig. 20, umfaßt ein als Ganzes mit 310 bezeichnetes Maschinengestell, an welchem ein erstes Spindelgehäuse 312 gelagert ist, in welchem eine erste Arbeitsspindel 314 um eine erste Spindelachse 316 drehbar gelagert ist.

Die erste Arbeitsspindel 314 ist dabei mit einer ersten Aufnahme 318 für ein erstes Werkstück 320 versehen, welches im dargestellten Fall als durch ein Endstück einer Materialstange 321 gebildet ist.

Die Materialstange 321 verläuft durch die erste Arbeitsspindel 314 hindurch und darüber hinaus von der ersten Aufnahme 318 bis zu einer Langdrehführungsbüchse 322, welche stationär am Maschinengestell 310 gehalten ist.

Um Die Materialstange 321 in die Langdrehführungsbüchse 322 einschieben und durch diese hindurchschieben zu können, ist das erste Spindelgehäuse 312 an einem Schlitten 324 gehalten, welcher in einer parallel zur ersten Spindelachse 316 verlaufenden Z-Richtung gegenüber dem Maschinengestell 310 verschiebbar ist.

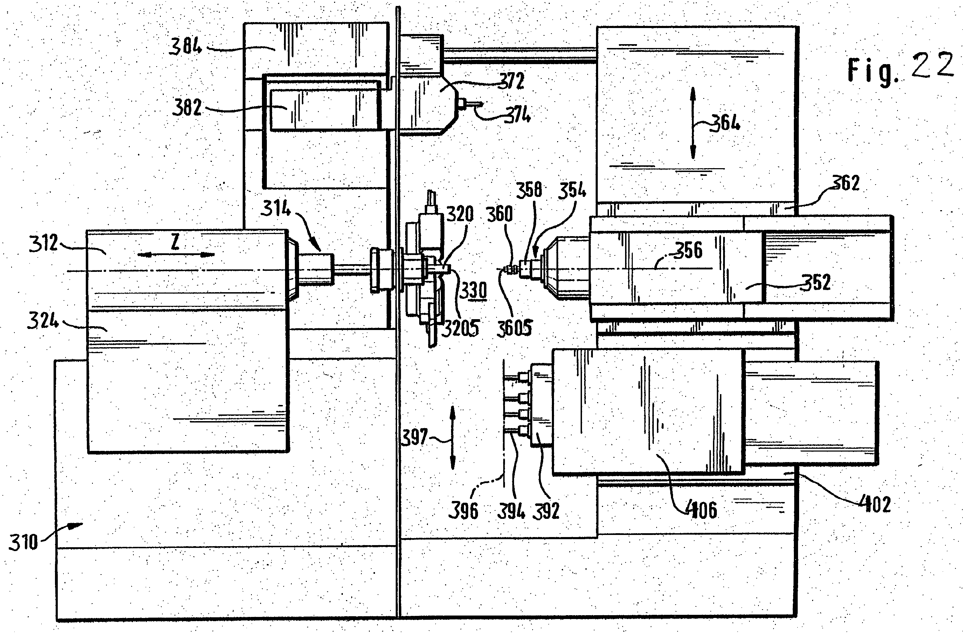

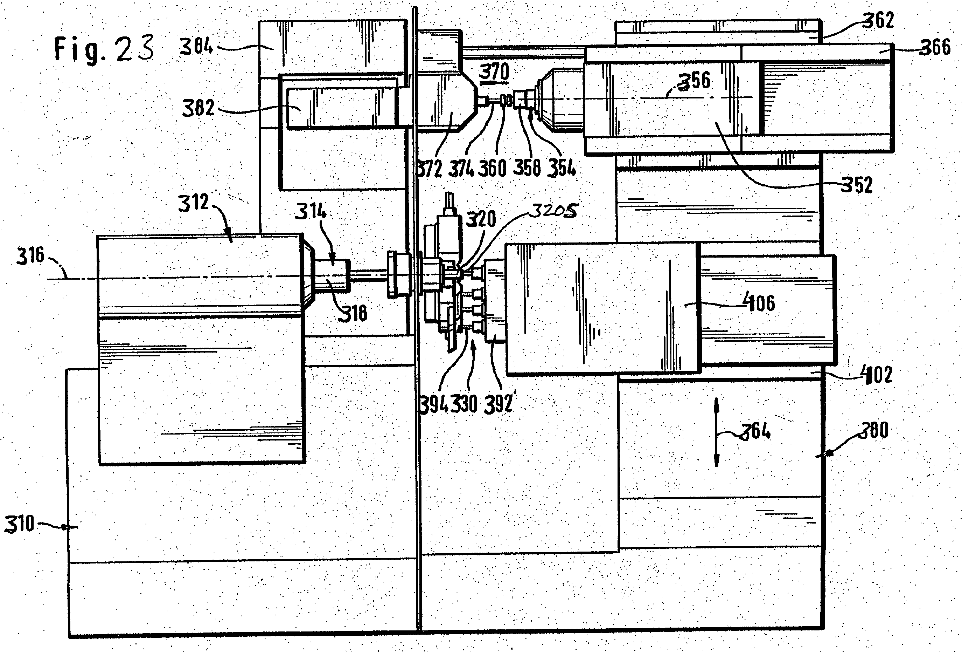

Auf einer der ersten Arbeitsspindel 314 gegenüberliegenden Seite der Langdrehführungsbüchse 322 ragt das Werkstück 320 in einen ersten Arbeitsraum 330 hinein, in welchem, wie in den Figuren 20 bis 23 dargestellt, eine Bearbeitung des Werkstücks 320 mit zwei Werkzeugträgern 332 und 334 möglich ist, die auf gegenüberliegenden Seiten einer durch die erste Spindelachse 316 hindurch verlaufenden Ebene 336 angeordnet sind und parallel zu einer senkrecht auf der Ebene 336 stehenden X-Richtung in Richtung des Werkstücks 320 bewegbar sind. Je nach Ausführungsform ist es auch noch möglich, einen oder beide Werkzeugträger 332, 334 zusätzlich in Y-Richtung, das heißt parallel zur Ebene 336 bewegbar auszuführen

Vorzugsweise sind die Werkzeugträger 332 und 334 als Werkzeugrevolver ausgebildet, die mit einer Vielzahl von Werkzeugen 342 und 344 bestückbar sind, wobei die Werkzeugrevolver 332, 334 um Revolverachsen 346 bzw. 348 drehbar sind, welche vorzugsweise parallel zur ersten Spindelachse 316 verlaufen, wodurch die einzelnen Werkzeuge 342 bzw. 344 in ihre dem Werkstück 320 jeweils zugewandte Arbeitsstellung bringbar sind.

Die Bearbeitung des aus der Langdrehführungsbüchse 322 heraus in den ersten Arbeitsraum 330 hineinragenden Werkstücks 320 erfolgt einerseits durch Vorschub der Werkzeuge 342 bzw. 344 in X-Richtung und andererseits durch Verschieben des Werkstücks 320 in Z-Richtung durch Verschieben der Arbeitsspindel 314 in Z-Richtung mittels des Z-Schlittens 324, wobei die Arbeitsspindel 314 das Werkstück 320 mit der Aufnahme 318 festgespannt hält und drehend um die erste Spindelachse 316 antreibt, während die Langdrehführungsbüchse 322 das erste Werkstück 320 nur nahe des ersten Arbeitsraums 330 in radialer Richtung zur ersten Spindelachse 316 präzise führt und die Zerspanungskräfte aufnimmt.

Um das erste Werkstück 320 nicht nur mittels der Werkzeugträger 332 und 334 mit den Werkzeugen 342 bzw. 344 bearbeiten zu können, sondern eine Komplettbearbeitung des Werkstücks 320 durchführen zu können, ist am Maschinengestell 310 zusätzlich zur Arbeitsspindel 314 eine in einem zweiten Spindelgehäuse 352 drehbar gelagerte zweite Arbeitsspindel 354 vorgesehen, welche um eine vorzugsweise parallel zur ersten Spindelachse 316 ausgerichtete zweite Spindelachse 356 drehbar ist. Die zweite Arbeitsspindel 352 ist dabei so angeordnet, daß sie auf einer der Langdrehführungsbüchse 322 gegenüberliegenden Seite des ersten Arbeitsraums 330 positionierbar ist.

Die zweite Arbeitsspindel 354 ist dabei ebenfalls mit einer zweiten Aufnahme 358 zum Spannen eines Werkstücks 360 versehen, wobei das zweite Werkstück 360 durch Abstechen des ersten Werkstücks 320 von der Materialstange 321 erzeugbar ist.

Das zweite Spindelgehäuse 352 sitzt auf einem als Ganzes mit 362 bezeichneten Querschlitten, welcher in einer Querrichtung 364, die auch als Y-Richtung bezeichnet werden könnte, quer zur zweiten Spindelachse 356 und quer zur X-Richtung relativ zum Maschinengestell 310 bewegbar ist, wobei die Bewegbarkeit des Querschlittens 362 in der Querrichtung 364 die Möglichkeit umfaßt, die zweite Arbeitsspindel 354 mit der zweiten Spindelachse 356 koaxial zur ersten Spindelachse 316 auszurichten und somit das Werkstück 320 von der ersten Aufnahme 318 zu übernehmen.

Hierzu ist zusätzlich das zweite Spindelgehäuse 352 auf einem Z-Schlitten 366 angeordnet, welcher auf dem Querschlitten 362 sitzt und eine Bewegbarkeit des zweiten Spindelgehäuses 352 relativ zum Querschlitten 362 in Richtung parallel zur ersten Spindelachse 316 und zur zweiten Spindelachse 356 erlaubt.

Dadurch besteht die Möglichkeit, das Werkstück 320 durch Zusammenwirken der ersten Arbeitsspindel 314 und der zweiten Arbeitsspindel 354 bei koaxialer Ausrichtung der Spindelachsen 316 und 356 in einer Übergabestellung unter Zuhilfenahme von einem der Werkzeuge 342 oder 344 abzustechen und dann als zweites Werkstück 360 fertig zu bearbeiten, wobei hierzu die zweite Arbeitsspindel 354 mittels des Querschlittens 362 in der Querrichtung 344 aus dem ersten Arbeitsraum 330 heraus soweit verfahren wird, bis das zweite Werkstück 360 in einem zweiten Arbeitsraum 370 einem als Werkzeugträgerkopf eingesetzten zweiten frontseitigen Werkzeugträger 372 zugewandt ist, dessen Werkzeuge 374 in ihrer Arbeitsstellung in Richtung des Werkstücks 360 weisen.

Durch die Verschiebbarkeit der zweiten Arbeitsspindel 354 von ihrer Übergabestellung in die Arbeitsstellung besteht die Möglichkeit, das von der Stange abgestochene zweite Werkstück 316 aus dem ersten Arbeitsraum 330 heraus in den zweiten Arbeitsraum 370 mittels der zweiten Arbeitsspindel 354 zu bewegen, wobei der zweite Arbeitsraum 370 neben dem ersten Arbeitsraum 330, beispielsweise die in der Querrichtung 364 seitlich versetzt angeordnet ist.

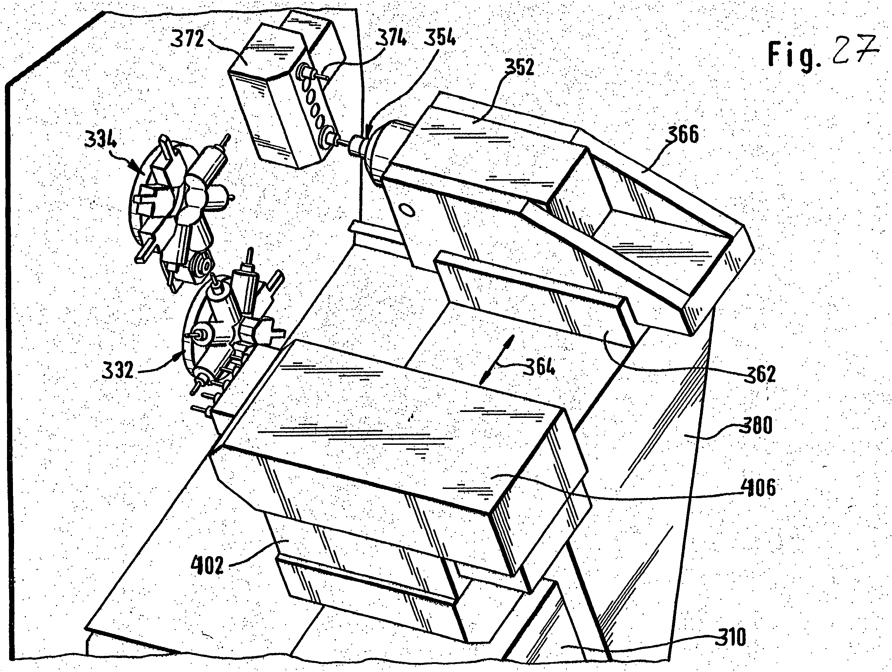

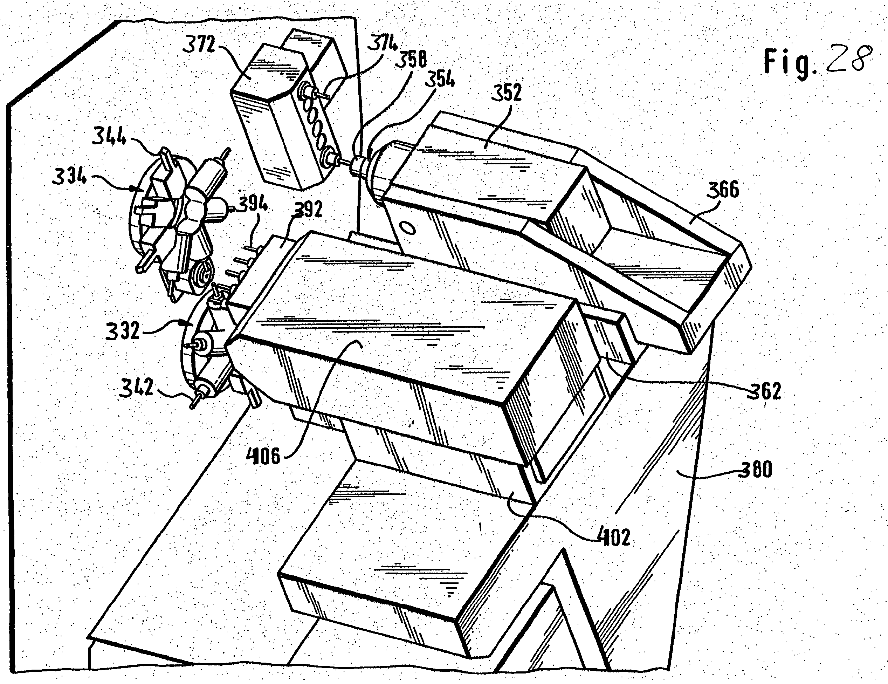

Vorzugsweise ist dabei der zweite frontseitige Werkzeugträger 372 auf einer der zweiten Arbeitsspindel 354 in ihrer Arbeitsstellung gegenüberliegenden Seite des zweiten Arbeitsraums 370 angeordnet, wobei sich beispielsweise die Werkzeuge 374 parallel zur zweiten Spindelachse 356 erstrecken und vorzugsweise, wie in Fig. 20 sowie 26 bis 28 dargestellt, als Reihe 376 entlang einer Längsrichtung 377 angeordnet, sind, die vorzugsweise parallel zur X-Richtung verläuft.

Um nun alle in der Längsrichtung 377 aufeinanderfolgend angeordneten Werkzeuge 374 mit dem in der zweiten Arbeitsspindel 354 gehaltenen zweiten Werkstück 360 erreichen zu können, ist der Werkzeugträger 372 selbst gegenüber einer den Querschlitten 362 für die zweite Arbeitsspindel 354 tragenden Konsole 380 mittels eines X-Schlittens 382 bewegbar, wobei der X-Schlitten 382 vorzugsweise an einer sich in X-Richtung erstreckenden Wange 384 der Konsole 380 geführt ist.

Um zusätzliche Möglichkeiten bei der Bearbeitung des ersten Werkstücks 320 zu haben, ist ein als Werkzeugträgerkopf eingesetzter erster frontseitiger Werkzeugträger 392 vorgesehen, welcher auf einer dem Arbeitsraum 330 gegenüberliegenden Seite der Langdrehführungsbüchse 322 angeordnet ist und Werkzeuge 394 trägt, die am ersten Werkstück 320, beispielsweise zur Bearbeitung von dessen Stirnseite 320S, einsetzbar sind.

Der Werkzeugträger 392 sitzt dabei auf einem Querschlitten 402, welcher gegenüber der Konsole 380 in der Querrichtung 364 bewegbar ist und auf diesem Querschlitten 402 sitzt ein Z-Schlitten 406, der dann seinerseits dem Werkzeugträger 392 trägt.

Der Querschlitten 402 ist dabei erfindungsgemäß unabhängig von dem Querschlitten 362 für die zweite Arbeitsspindel 354 in der Querrichtung 364 gegenüber der Konsole 380 bewegbar, so daß die Bearbeitung des ersten Werkstücks 320, geführt in der Langdrehführungsbüchse 322 mittels der Werkzeuge 394 sowohl in der Querrichtung 364 als auch der Z-Richtung unabhängig von der Bearbeitung des zweiten Werkstücks 316 mittels der Werkzeuge 374 erfolgen kann.

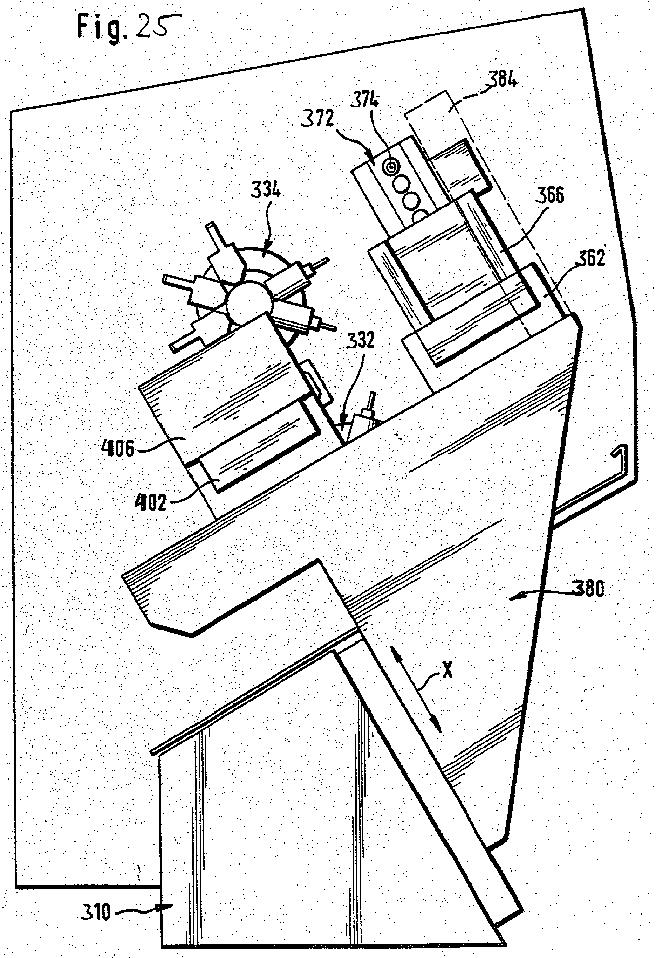

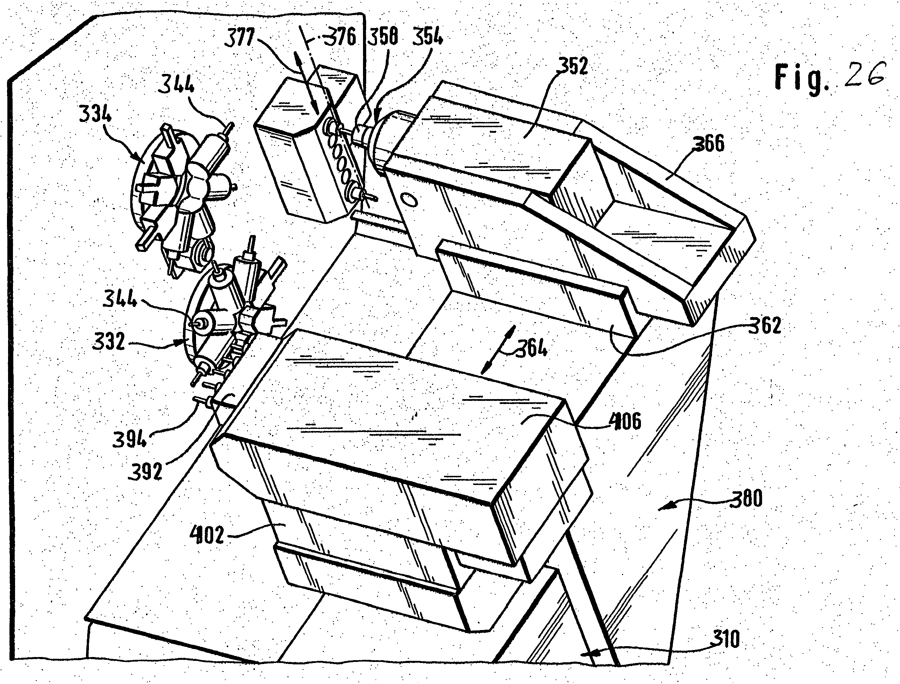

Um das erste in der Langdrehführungsbüchse 322 gehaltene Werkstück 320 mittels der Werkzeuge 94 dreiachsig bearbeiten zu können, das heißt durch eine Achsbewegung in Richtung parallel zur ersten Arbeitsspindel 316, in diesem Fall in Richtung der Z-Achse, durch Bewegen in Richtung der X-Achse als auch durch Bewegen in Richtung der Querachse 354, ist die gesamte Konsole 380 als X-Schlitten ausgebildet und als solcher relativ zum Maschinengestell 310 parallel zur X-Richtung bewegbar, wie in den Fig. 25 und 26 dargestellt.

Somit besteht mit der Basisversion des neunten Ausführungsbeispiels der Drehmaschine die Möglichkeit, das Teil der Materialstange 321 bildende erste Werkstück 320, welches über die Langdrehführungsbüchse 322 in den ersten Arbeitsraum 330 übersteht, mittels der Werkzeuge 342 und 344 der Werkzeugträger 332 und 334 und außerdem mittels den Werkzeugen 394 des ersten frontseitigen Werkzeugträgers 392 zu bearbeiten, wobei die Werkzeuge 394 vorzugsweise als Reihe 396 in der Längsrichtung 397 aufeinanderfolgend angeordnet sind, wobei die Reihe 396 parallel zur Ebene 336 verläuft, so daß zumindest dann, wenn mit den Werkzeugen 394 eine Bearbeitung der Stirnseite 320S des Werkstücks 320 erfolgt, eine Kollision zwischen den Werkzeugen 342 und 344 sowie 394 vermieden werden kann.

Dabei kann - wie bereits dargelegt - die Bearbeitung der Stirnseite 320S des Werkstücks 320 durch Bewegung der Werkzeuge 394 in drei verschiedenen Achsrichtungen, das heißt in Richtung der X-Achse, in Richtung der Querachse 364 und in Richtung der Z-Achse, welche parallel zur ersten Spindelachse 316 verläuft, erfolgen.

Ferner ist nach Bearbeitung des ersten Werkstücks 320 ein Übergeben desselben in die zweite Arbeitsspindel 354 möglich, wobei hierzu die zweite Arbeitsspindel 354 mit ihrer zweiten Spindelachse 356 koaxial zur ersten Spindelachse 316 ausgerichtet und in Richtung des ersten Werkstücks 320 soweit verschoben wird, daß mit der zweiten Aufnahme 358 das erste Werkstück 320 nahe der Stirnseite 320S gespannt werden kann. Nachfolgend erfolgt ein Abstechen des ersten Werkstücks 320 von der Materialstange 321 mit einem der Werkzeuge 342 oder 344.

Das abgestochene und nunmehr in der zweiten Aufnahme 358 gehaltene Werkstück stellt sodann ein zweites Werkstück 360 dar, welches durch Verfahren der zweiten Arbeitsspindel 354 in der Querrichtung 364 durch die Werkzeuge 374 des Werkzeugträgers 372 im zweiten Arbeitsraum 370 weiter bearbeitet werden kann, wobei primär eine Bearbeitung des zweiten Werkstücks 360 im Bereich seiner Stirnseite 360S in dem zweiten Arbeitsraum 370 neben dem ersten Arbeitsraum 330 erfolgen kann.

Diese Bearbeitung des zweiten Werkstücks 360 mittels der Werkzeuge 374 ist völlig unabhängig von der Position der Konsole 380 in X-Richtung, da der Werkzeugträger 372 an dem X-Schlitten 382 gehalten ist, welcher seinerseits an der Wange 384 der Konsole 380 in X-Richtung verschiebbar geführt ist, so daß der Werkzeugträger 372 dadurch stets Relativbewegungen zur Konsole 380 und somit Relativbewegungen auch zur zweiten Spindelachse 56 in X-Richtung durchführt, die in X-Richtung unverschieblich relativ zur Konsole 380 angeordnet ist, so daß die Positionen der Konsole 380 in X-Richtung sich lediglich auf die Relativpositionen der Werkzeuge 394 des ersten frontseitigen Werkzeugträgers 392 zur Bearbeitung des ersten Werkstücks 320 in der bereits beschriebenen Art und Weise auswirken.

Vorzugsweise erfolgt die Bearbeitung der ersten Werkstücke 320 und der zweiten Werkstücke 360 derart, daß während einer Fertigbearbeitung eines zweiten Werkstücks 360 mittels der Werkzeuge 374 im zweiten Arbeitsraum 370 gleichzeitig eine Bearbeitung des nachfolgenden ersten Werkstücks 320 im ersten Arbeitsraum 330 mittels der Werkzeuge 342, 344 und/oder gegebenenfalls der Werkzeuge 394 erfolgt, wobei der Wechsel zwischen unterschiedlichen Werkzeugen 394 des ersten frontseitigen Werkzeugträgers 392 durch Verschieben des Querschlittens 402 in der Querrichtung 364 relativ zum jeweiligen ersten Werkstück 320 erfolgen kann.

Zur Durchführung der Bearbeitungen ist eine Maschinensteuerung 410 vorgesehen, welche sämtliche Achsbewegungen positionsgenau steuert, also insbesondere die Bewegungen des Z-Schlittens 324 für die erste Arbeitsspindel 14, der Werkzeugträger 332 und 334 für die Werkzeuge 342 und 344, des Querschlittens 402 und des Z-Schlittens 406 sowie des X-Schlittens 380 für den ersten frontseitigen Werkzeugträger 392 mit den Werkzeugen 394, des Querschlittens 362 und des Z-Schlittens 366 für die zweite Arbeitsspindel 354 und des X-Schlittens 382 für den zweiten frontseitigen Werkzeugträger 372 mit den Werkzeugen 374.

Außerdem sind vorzugsweise auch noch die Arbeitsspindeln 314 und 354 nicht nur antreibbar, sondern auch als C-Achsen mittels der/Maschinensteuerung 410 winkelgenau steuerbar.

Besonders vorteilhaft läßt sich die erfindungsgemäße Drehmaschine dadurch steuern, daß die Achsbewegungen für die Bearbeitung des zweiten Werkstücks 360 mittels den Werkzeugen 374, nämlich die Bewegungen des zweiten frontseitigen Werkzeugträgers 372 längs der X-Achse, die Bewegungen der zweiten Arbeitsspindel 354 in Richtung der Querachse 364, die auch als Y-Achse bezeichnet werden könnte, und in Richtung der Z-Achse sowie die Drehung des zweiten Werkstücks 360 durch die zweite Arbeitsspindel 354 um eine C-Achse bereits aufgrund der Konstruktion der Drehmaschine völlig unabhängig sind, von den Achsbewegungen zur Bearbeitung des ersten Werkstücks 320, nämlich die Bewegung des ersten Werkstücks 320 in Z-Richtung durch Verschieben der ersten Arbeitsspindel 314, die Bewegung der Werkzeuge 342 und 344 in X-Richtung, die Bewegung der Werkzeuge 394 in X-Richtung durch Verschieben der Konsole 380, in Querrichtung durch Verfahren des Querschlittens 402 und in Z-Richtung durch Verfahren des Querschlittens 406 sowie um die C-Achse durch geeignetes gesteuertes Drehen der Arbeitsspindel 314.

Darüber hinaus ist durch das Vorsehen der Bewegbarkeit des zweiten frontseitigen Werkzeugträgers 372 relativ zur Konsole 380 ein Maximum an Steifigkeit hinsichtlich der Führung der Werkzeuge 374 relativ zum zweiten Werkstück 360 bei minimaler thermischer Verlagerung erreicht.

Darüber hinaus bringt die Verschiebbarkeit der Konsole 380 in X-Richtung noch den Vorteil, daß eine zweiachsige Bewegung der zweiten Arbeitsspindel 354 zum koaxialen Positionieren der zweiten Spindelachse 356 relativ zur ersten Spindelachse 316, nämlich längs der Querachse 364 und der X-Achse zur Verfügung steht.

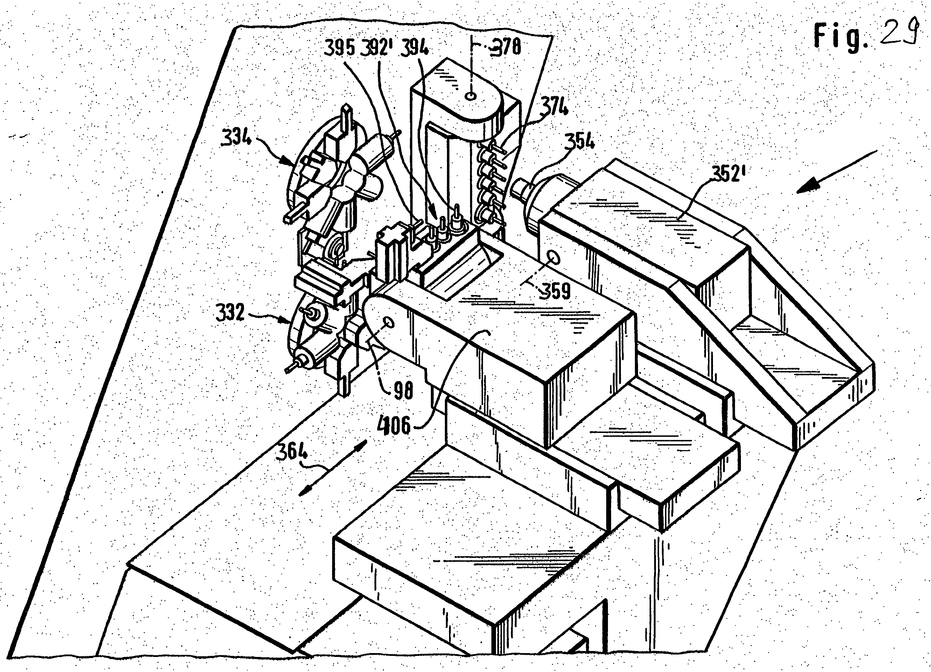

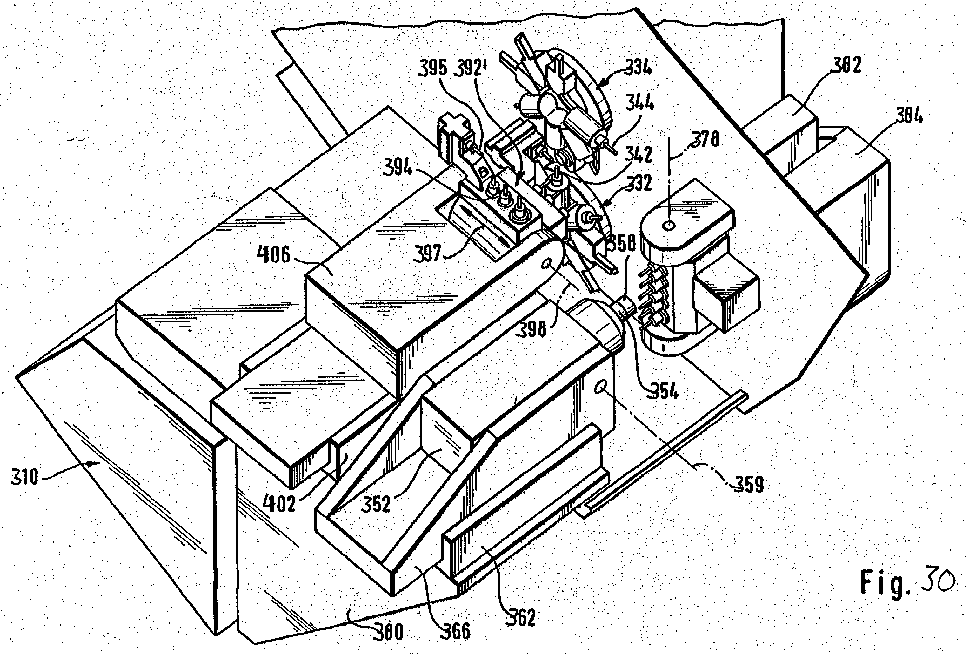

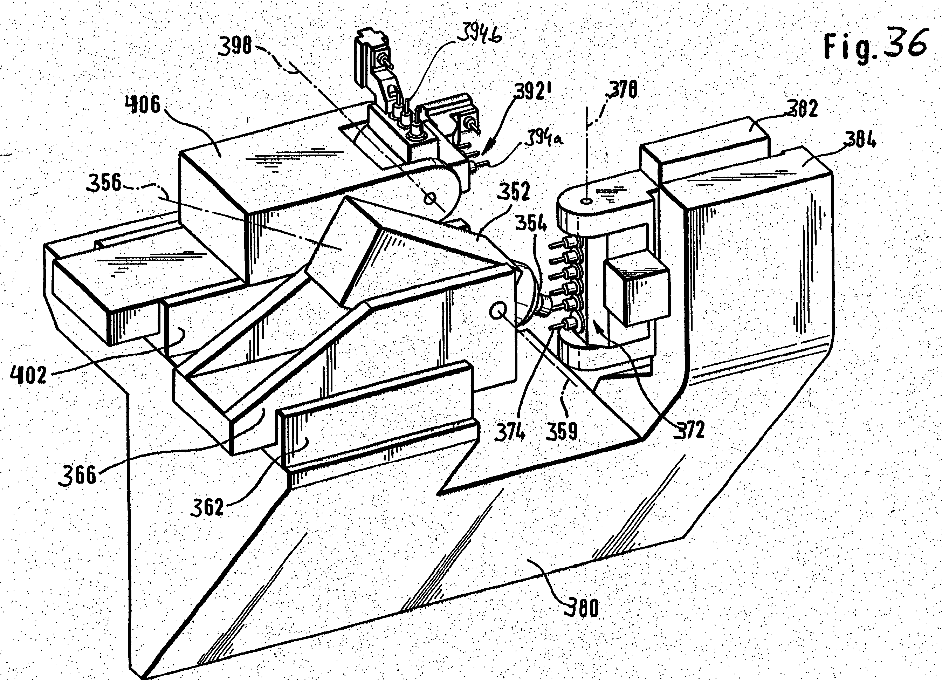

Bei dem neunten Ausführungsbeispiel der erfindungsgemäßen Drehmaschine, dargestellt in den Fig. 29 bis 36, sind diejenigen Teile, die mit denen des ersten Ausführungsbeispiels identisch sind, mit denselben Bezugszeichen versehen, so daß vollinhaltlich auf die Ausführungen zum ersten Ausführungsbeispiel Bezug genommen werden kann.

Wie in Fig. 29 bis 33 dargestellt, ist im Gegensatz zum ersten Ausführungsbeispiel der der Stirnseite 320S des ersten Werkstücks zugewandte erste frontseitige Werkzeugträger 392' nicht als fest mit dem Z-Schlitten 406 verbundener Werkzeugträger ausgebildet, sondern als ein gegenüber dem Z-Schlitten 406 um eine Achse 398 schwenkbarer Werkzeugträger 392', welcher zwei Reihen 396a und 396b von Werkzeugen 394a bzw. 394b aufweist, die durch Schwenken des ersten frontseitigen Werkzeugträgers 392' um die Schwenkachse 398 jeweils in eine aktive Stellung oder eine inaktive Stellung bringbar sind.

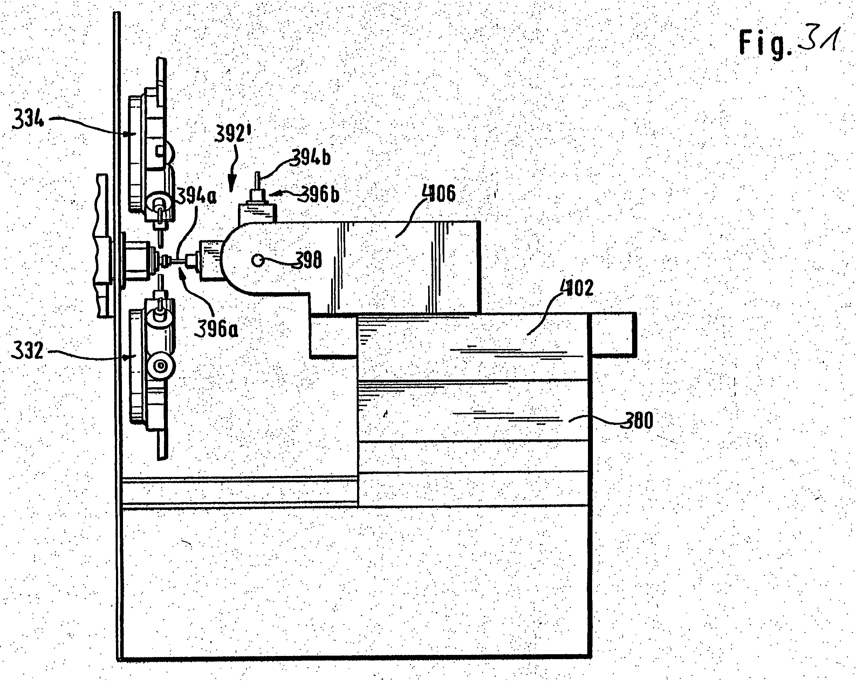

So ist beispielsweise, wie in Fig. 29 und 31 dargestellt, die Reihe 396a von Werkzeugen 394a in der aktiven Stellung, während die Reihe 396b von Werkzeugen 394b in der inaktiven Stellung steht.

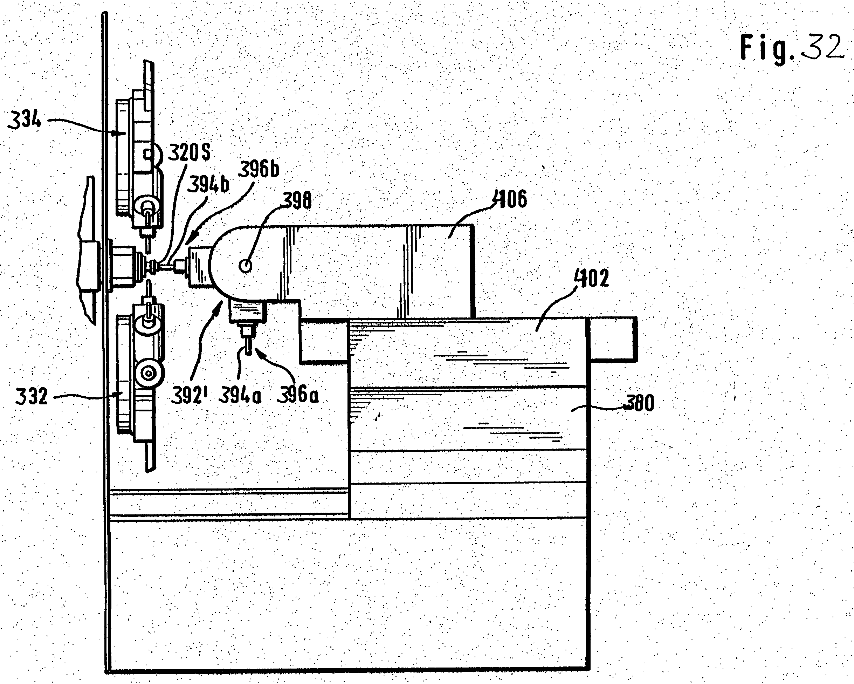

Durch Schwenken ist andererseits, wie in Fig. 32 dargestellt, die Reihe 396b von Werkzeugen 394b in die aktive Stellung bringbar, während die Reihe 936a von Werkzeugen 394a in der inaktiven Stellung steht.

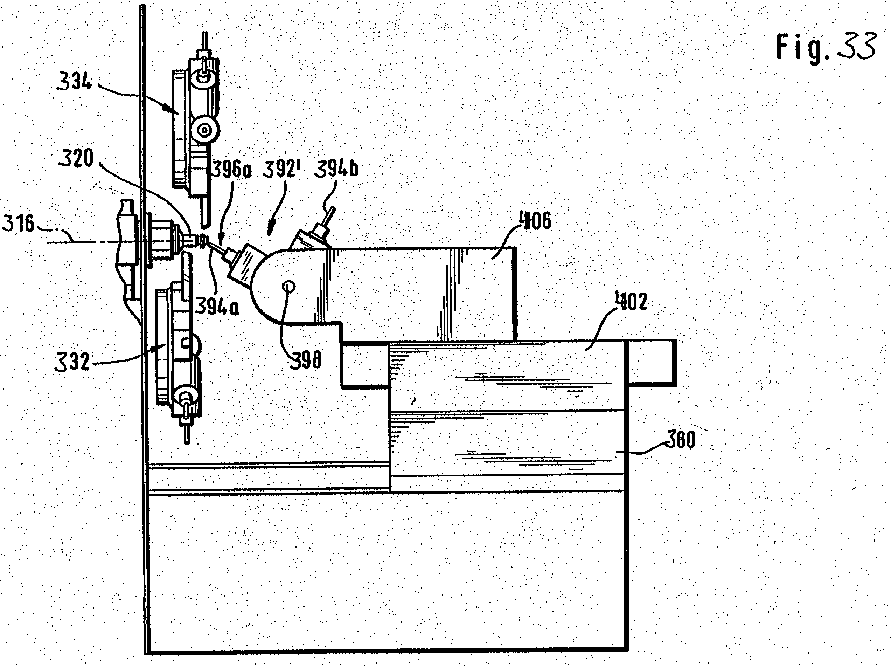

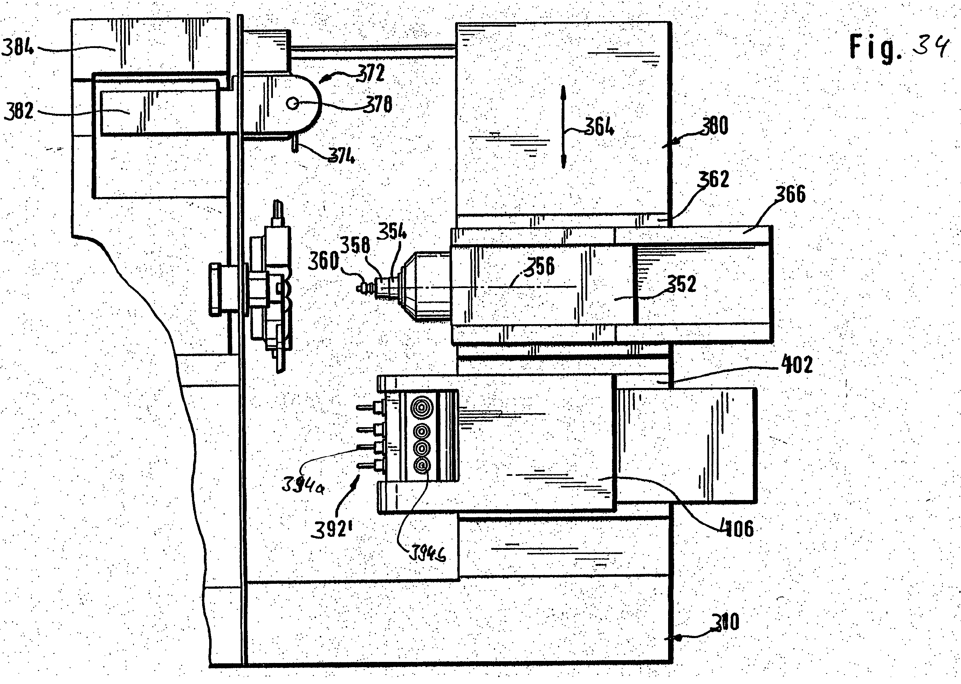

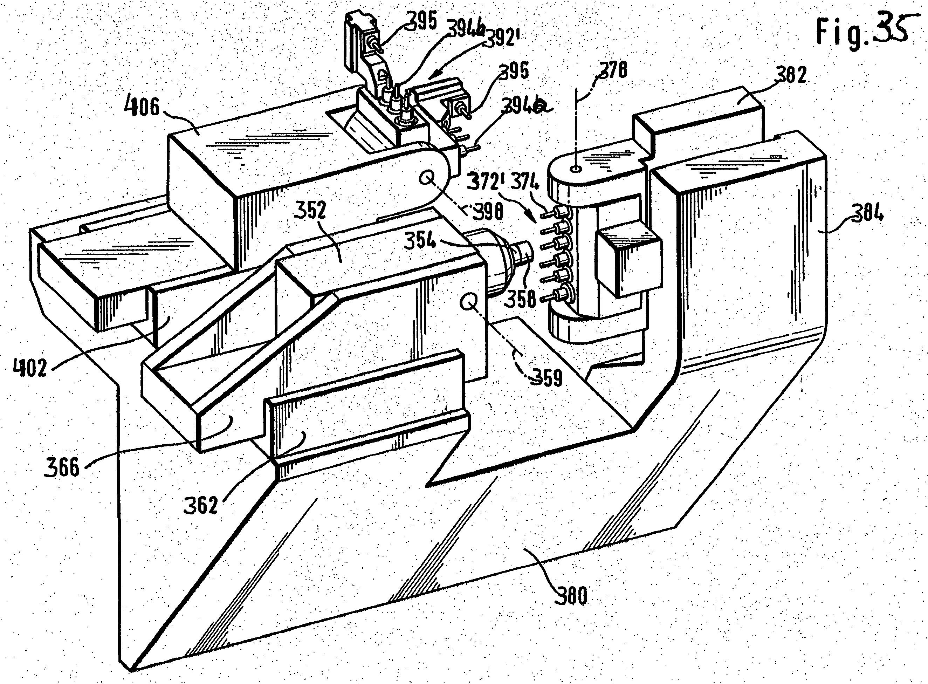

Darüber hinaus besteht auch noch bei Ausbildung der Schwenkachse 398 als durch die Maschinensteuerung 410 steuerbare B-Achse, wie in Fig. 33 dargestellt, die Möglichkeit, die Werkzeuge, beispielsweise die Werkzeuge 394a der Reihe 396a in eine gegenüber der ersten Spindelachse 316 im Winkel verlaufende Position zu bringen, so daß schräg zur ersten Spindelachse 316 gerichtete Bearbeitungen des ersten Werkstücks 320, beispielsweise Bohrungen, realisierbar sind.

Vorzugsweise verlaufen die Werkzeuge 394a, 394b in radialer Richtung zur Schwenkachse 398, so daß die Zerspanungskräfte ein minimales Drehmoment bezüglich der Schwenkachse 398 bewirken.

Ferner besteht nicht nur die Möglichkeit, in dem Werkzeugträger 392' radial zur Schwenkachse 398 gerichtete Werkzeuge 394 einzusetzen, sondern es besteht auch die Möglichkeit, durch geeignete Werkzeughalter Werkzeuge 395 einzusetzen, die parallel zur Schwenkachse 398 ausgerichtet sind, und somit die Möglichkeit einer mantelseitigen Bearbeitung des Werkstücks 320, also auch eine Bearbeitung des Werkstücks 320 in einem sich an die Stirnseite 320S anschließenden Bereich, eröffnen.

Vorzugsweise ist die Schwenkachse 398 so ausgerichtet, daß sie parallel zu der Längsrichtung 397 der Reihen 396a und 396b verläuft und außerdem vorzugsweise parallel zur Ebene 336, so daß eine möglichst kollisionsfreie Bearbeitung des ersten Werkstücks 320 mit Werkzeugen 394 und 395 des Werkzeugträgers 392 ergänzend zu den Werkzeugen 342 und 344 realisierbar ist.

Darüber hinaus ist, wie insbesondere in den Figuren 29, 30, 34 bis 36 dargestellt, auch der dem zweiten Arbeitsraum 370 zugeordnete zweite frontseitige Werkzeugträger 372' um eine Schwenkachse 378 gegenüber dem X-Schlitten 382 verschwenkbar, so daß die Möglichkeit besteht, die Werkzeuge 374 nicht nur parallel zur zweiten Arbeitsspindel 356 auszurichten, sondern bei Ausbildung der Schwenkachse 378 als durch die Maschinensteuerung 410 steuerbare B-Achse auch in beliebigen Winkeln relativ zu dieser.

Im Extremfall besteht die Möglichkeit, wie in Fig. 34 dargestellt, das Werkzeug 374 des Werkzeugträgers 372 durch Drehung um die Schwenkachse 378 um ungefähr 90° so weit zu drehen, daß dieses quer zur zweiten Spindelachse 356 der zweiten Arbeitsspindel 354 verläuft.

Vorzugsweise ist die Schwenkachse 378 so ausgerichtet, daß sie parallel zur Längsrichtung 377 verläuft, längs welcher die die Reihe 376 bildenden Werkzeuge 374 ausgerichtet sind und außerdem vorzugsweise parallel zur X-Richtung, so daß sich durch Schwenken der Werkzeuge 374 um die Schwenkachse 378 deren Position in X-Richtung relativ zur zweiten Arbeitsspindel 354 nicht ändert.

Zur Minimierung des auf die Schwenkachse 378 bei der Zerspanung wirkenden Drehmoments sind die Werkzeuge 374 vorzugsweise so ausgerichtet, daß sie radial zur Schwenkachse 378 verlaufen.

Darüber hinaus ist bei dem zweiten Ausführungsbeispiel das Spindelgehäuse 352' der zweiten Arbeitsspindel 354 um eine ebenfalls durch die Maschinensteuerung 410 steuerbare Schwenkachse 359 schwenkbar, welche vorzugsweise quer zur Schwenkachse 378 verläuft, so daß damit insgesamt die zweite Spindelachse 356 aus ihrer Orientierung parallel zur Ebene 336 heraus bewegbar ist und somit in beliebigen Winkelstellungen, beispielsweise in einem spitzen Winkel zur Ebene 336, positionierbar ist, um beispielsweise mit den Werkzeugen 374, die vorzugsweise alle parallel zur Ebene 336 orientiert sind, Bearbeitungen schräg zur zweiten Spindelachse 356 vornehmen zu können.

Ergänzend hat das neunte Ausführungsbeispiel noch die zusätzlichen Vorteile, daß durch die Schwenkachse 378 für den zweiten frontseitigen Werkzeugträger 372, insbesondere deren Steuerung als B-Achse mittels der Maschinensteuerung 410, zusammen mit der Steuerung der zweiten Arbeitsspindel 354 als C-Achse, alle üblichen Bearbeitungen des zweiten Werkstücks 360 durch eine B-Achse einer Drehmaschine realisierbar sind.

Darüber hinaus läßt sich die konstruktive Lösung noch besonders stabil dadurch gestalten, daß die Werkzeuge 374 des zweiten Werkzeugträgers sich vorzugsweise radial zur Schwenkachse 378 erstrecken, so daß die auf diese wirkenden Zerspanungskräfte ein geringes, wenn nicht verschwindendes Drehmoment auf die Schwenkachse 378 ausüben, so daß diese mit mechanisch begrenztem Aufwand ausreichend steif realisierbar ist.

Vorzugsweise wird die Schwenkachse 378 so realisiert, daß mindestens eine Schwenkbewegung des zweiten frontseitigen Werkzeugträgers 392' um einen Winkel von 90° realisierbar ist.

Das neunte Ausführungsbeispiel hat darüber hinaus durch das Vorsehen der Schwenkachse 398 für den ersten frontseitigen Werkzeugträger 392 den Vorteil, daß sich die Zahl der einsetzbaren Werkzeuge durch das Vorsehen der zwei Reihen 396a und 396b von Werkzeugen 394a bzw. 394b vervielfachen läßt.

Ferner sind durch Steuerung der Schwenkbewegung des ersten frontseitigen Werkzeugträgers 392 um die durch die Maschinensteuerung 410 als B-Achse ausgebildete Schwenkachse 398 übliche B-Achsbearbeitungen am ersten Werkstück 320 realisierbar.

Auch der erste frontseitige Werkzeugträger 392' ist vorzugsweise um die Schwenkachse 398 mit einem Winkel von mindestens 90° schwenkbar.

Schließlich schafft auch die Schwenkachse 359 für die zweite Arbeitsspindel 314 noch den Vorteil, der Einstellung einer weiteren Neigung zwischen den Werkzeugen 374 des zweiten frontseitigen Werkzeugträgers 372 und dem zweiten Werkstück 360, so daß zum Fertigbearbeiten der zweiten Werkstücke 360 auch hochkomplexe Bearbeitungen möglich sind.

## Patentansprüche

1. Werkzeugmaschine umfassend
ein Maschinengestell (10)
eine an dem Maschinengestell (10) gehaltene und um eine Spindelachse (28) drehbare Arbeitsspindel (26), zur Aufnahme eines Werkstücks (W), einen ersten Werkzeugträger (32) mit einem um eine Achse (62) gegenüber einem Lagergehäuse (58) drehbaren Werkzeugträgerkopf (62), wobei die Arbeitsspindel (26) und der Werkzeugträgerkopf (62) relativ zueinander mittels einer Steuerung mindestens in Richtung einer quer zur Spindelachse (28) verlaufenden Querbewegungsachse und einer parallel zur Spindelachse (28) verlaufenden Längsbewegungsachse gesteuert bewegbar sind und die Arbeitsspindel (26) um die Spindelachse (28) als gesteuerte C-Achse drehpositionierbar ist,
**dadurch gekennzeichnet, daß**
die Achse (62) quer zu einer durch die Querbewegungsachse und die Längsbewegungsachse aufgespannten Ebene (56) verläuft und daß der Werkzeugträgerkopf (60) mehrere Werkzeuge (80, 84, 98) aufweist, die durch Drehen des Werkzeugträgerkopfes (60) um die Achse (62) relativ zum in der Arbeitsspindel (26) aufgenommenen Werkstück (W) in eine Arbeitsstellung bringbar sind.

2. Werkzeugmaschine nach Anspruch 1, **dadurch gekennzeichnet, daß** der Werkzeugträgerkopf (60) auf mindestens zwei unterschiedlichen Seiten (78a, 78c) Werkzeugaufnahmen (126, 128) für Werkzeuge (80) trägt.

3. Werkzeugmaschine nach Anspruch 2, **dadurch gekennzeichnet, daß** der Werkzeugträgerkopf (60) auf mindestens drei unterschiedlichen Seiten (78a, b, c) Werkzeugaufnahmen (126, 174, 128) für Werkzeuge (80a, 84, 80b) trägt.

4. Werkzeugmaschine nach Anspruch 3, **dadurch gekennzeichnet, daß** der Werkzeugträgerkopf (60) auf mindestens vier unterschiedlichen Seiten (78a, b, c, d) Werkzeugaufnahmen (126, 174, 128, 96) für Werkzeuge (80a, 84, 80b, 98) trägt.

5. Werkzeugmaschine nach einem der voranstehenden Ansprüche, **dadurch gekennzeichnet, daß** der Werkzeugträgerkopf (60) als prismatischer Körper (76) ausgebildet ist und die Achse (62) den prismatischen Körper (76) parallel zu einer Seitenfläche verlaufend durchsetzt.

6. Werkzeugmaschine nach Anspruch 5, **dadurch gekennzeichnet, daß** der prismatische Körper (76) als Grundfläche ein Vieleck aufweist.

7. Werkzeugmaschine nach einem der voranstehenden Ansprüche, **dadurch gekennzeichnet, daß** der Werkzeugträgerkopf (60) quer zu der Achse (62) eine maximale Ausdehnung aufweist, welche höchstens dem 8-fachen eines maximalen Werkstückdurchmessers entspricht.

8. Werkzeugmaschine nach einem der voranstehenden Ansprüche, **dadurch gekennzeichnet, daß** der Werkzeugträgerkopf (60) Seitenflächen (78) aufweist, die in einem Abstand von der Achse (62) angeordnet sind, welcher maximal dem 3-fachen des maximalen Werkstückdurchmessers entspricht.

9. Werkzeugmaschine nach einem der voranstehenden Ansprüche, **dadurch gekennzeichnet, daß** der Werkzeugträgerkopf (60) einander gegenüberliegende Seitenflächen (78a, c, 78b, d) aufweist und daß die einander gegenüberliegenden Seitenflächen (78) jeweils einen maximalen Abstand (A) voneinander aufweisen, der höchstens dem 6-fachen des maximalen Werkstückdurchmessers entspricht.

10. Werkzeugmaschine nach einem der voranstehenden Ansprüche, **dadurch gekennzeichnet, daß** der Werkzeugträgerkopf (60) in Richtung der Achse (62) eine Ausdehnung aufweist, welche mindestens dem 6-fachen des maximalen Werkstückdurchmessers entspricht.

11. Werkzeugmaschine nach einem der voranstehenden Ansprüche, **dadurch gekennzeichnet, daß** der Werkzeugträgerkopf (60) um die Achse (62) um mindestens 270° drehbar ist.

12. Werkzeugmaschine nach Anspruch 11, **dadurch gekennzeichnet, daß** der Werkzeugträgerkopf (60) um die Achse (62) um mindestens 360° drehbar ist.

13. Werkzeugmaschine nach einem der voranstehenden Ansprüche, **dadurch gekennzeichnet, daß** der Werkzeugträgerkopf (60) um die Achse (62) in diskrete Drehstellungen drehbar ist.

14. Werkzeugmaschine nach Anspruch 13, **dadurch gekennzeichnet, daß** der Werkzeugträgerkopf (60) mehr diskrete Drehstellungen aufweist als Hauptrichtungen (92a, 94, 92b, 100a, 100b), in welche sich in die Werkzeugaufnahmen (126, 174, 128, 96) am Werkzeugträgerkopf (60) einsetzbare Werkzeuge (80a, 84, 80b, 98a, b) erstrecken können.

15. Werkzeugmaschine nach Anspruch 14, **dadurch gekennzeichnet, daß** Winkelabstände zwischen den diskreten Drehstellungen des Werkzeugträgerkopfes (60) kleiner als 10° sind.

16. Werkzeugmaschine nach Anspruch 15, **dadurch gekennzeichnet, daß** die Winkelabstände ein ganzzahliges Vielfaches von 1,25° betragen.

17. Werkzeugmaschine nach einem der voranstehenden Ansprüche, **dadurch gekennzeichnet, daß** der Werkzeugträgerkopf (60) um die Achse (62) als durch die Steuerung numerisch gesteuerte B-Achse drehbar ist.

18. Werkzeugmaschine nach einem der voranstehenden Ansprüche, **dadurch gekennzeichnet, daß** der Werkzeugträgerkopf (60) zwischen Armen (68, 70) einer Haltegabel (64) um die Achse (62) drehbar gelagert ist.

19. Werkzeugmaschine nach Anspruch 18, **dadurch gekennzeichnet, daß** der Werkzeugträgerkopf (60) mit montierten Werkzeugen (80, 84, 98) kollisionsfrei gegenüber der Haltegabel (64) drehbar ist.

20. Werkzeugmaschine nach einem der voranstehenden Ansprüche, **dadurch gekennzeichnet, daß** der Werkzeugträgerkopf (60) mindestens zwei Werkzeugaufnahmen (126, 174, 128, 96) für Werkzeuge (80, 84, 98) trägt, die mit ihren Hauptrichtungen (92a, 94, 92b, 100a, b) in einer gemeinsamen, sich senkrecht zur Achse (62) erstreckenden Werkzeugebene (108, 110) liegen.

21. Werkzeugmaschine nach Anspruch 20, **dadurch gekennzeichnet, daß** der Werkzeugträgerkopf (60) mindestens zwei, in Richtung der Achse (62) im Abstand voneinander angeordnete Werkzeugebenen (108, 110) aufweist, in welchen sich jeweils die Hauptrichtungen (92a, 94, 92b, 100a, b) von in die mehreren Werkzeugaufnahmen (126, 174, 128, 96) eingesetzten Werkzeugen (80a, 84, 80b, 98a, b) erstrecken.

22. Werkzeugmaschine nach Anspruch 20 oder 21, **dadurch gekennzeichnet, daß** der Werkzeugträgerkopf (60) pro Werkzeugebene (108. 110) mindestens auf gegenüberliegenden Seiten der Achse (62) angeordnete Werkzeugaufnahmen (126, 174, 128, 96) aufweist.

23. Werkzeugmaschine nach einem der Ansprüche 20 bis 22, **dadurch gekennzeichnet, daß** der Werkzeugträgerkopf (60) derart angeordnete Werkzeugaufnahmen (126, 174, 128, 96) aufweist, daß in diesen eingesetzte Werkzeuge (80a, 84, 80b, 98a,b) in Hauptrichtungen (92a, 94, 92b, 100a, b) weisen, die in der jeweiligen Werkzeugebene (108, 110) in der Richtung, in der sie zerspanend wirken, einen Winkelabstand bezüglich der Achse (62) von mindestens 60° voneinander aufweisen.

24. Werkzeugmaschine nach Anspruch 23, **dadurch gekennzeichnet, daß** die Werkzeuge (80a, 84, 80b, 98a, b) derart am Werkzeugträgerkopf (60) angeordnet sind, daß die Hauptrichtungen 92a, 94, 92b, 100a, b) in der jeweiligen Werkzeugebene (108, 110) in der Richtung, in der die Werkzeuge zerspanend wirken, ein Winkelabstand von mindestens 90° voneinander aufweisen.

25. Werkzeugmaschine nach einem der voranstehenden Ansprüche, **dadurch gekennzeichnet, daß** der Werkzeugträgerkopf (60) mehrere Werkzeugaufnahmen (120, 174, 128, 96) aufweist, die so angeordnet sind, daß Hauptrichtungen (92a, 94, 92b, 100a, 100b) von in diese eingesetzten Werkzeugen (80a, 84, 80b, 98a, b) in einer sich parallel zu der Achse (62) erstreckenden Ausrichtebene (88, 90, 102) liegen.

26. Werkzeugmaschine nach Anspruch 25, **dadurch gekennzeichnet, daß** die Ausrichtebene (90) durch die Achse (62) hindurch verläuft.

27. Werkzeugmaschine nach Anspruch 25, **dadurch gekennzeichnet, daß** die Ausrichtebene (90) gegenüber der Achse (62) seitlich versetzt verläuft.

28. Werkzeugmaschine nach einem der Ansprüche 25 bis 27, **dadurch gekennzeichnet, daß** der Werkzeugträgerkopf (60) Werkzeugaufnahmen (126, 128, 174, 96) aufweist, die so angeordnet sind, daß Hauptrichtungen (92a, b, 94, 100a) von in diese eingesetzten Werkzeugen (80a, b, 84, 98a) in zwei parallel zur Achse (62) und quer zueinander verlaufenden Ausrichtebenen (90, 88) liegen.

29. Werkzeugmaschine nach einem der Ansprüche 25 bis 28, **dadurch gekennzeichnet, daß** eine erste parallel zu der Achse (62) verlaufende Ausrichtebene (90) durch diese hindurch verläuft und mindestens eine zweite, parallel zu der Achse (62) verlaufende Ausrichtebene (88, 102) quer zu dieser und im Abstand von der Achse (62) verläuft.

30. Werkzeugmaschine nach Anspruch 29, **dadurch gekennzeichnet, daß** die zweite Ausrichtebene (88, 102) senkrecht zur ersten Ausrichtebene (90) verläuft.

31. Werkzeugmaschine nach einem der voranstehenden Ansprüche, **dadurch gekennzeichnet, daß** der Werkzeugträgerkopf (60) mit mindestens einer Werkzeugaufnahme (126, 128, 174) für ein rotierend angetriebenes Werkzeug (80a, b, 84) versehen ist.

32. Werkzeugmaschine nach Anspruch 31, **dadurch gekennzeichnet, daß** eine Rotationsachse (82a, b, 84) der Werkzeugaufnahme (126, 128, 174) für das rotierend angetriebene Werkzeug (80a, b, 84) in der Arbeitsstellung sich parallel zu der von der Querbewegungsachse und der Längsbewegungsachse aufgespannten Ebene (56) erstreckt.

33. Werkzeugmaschine nach Anspruch 31 oder 32, **dadurch gekennzeichnet, daß** die Rotationsachse (82a, b, 84) in einer Werkzeugebene (108, 110) liegt.

34. Werkzeugmaschine nach einem der Ansprüche 31 bis 33, **dadurch gekennzeichnet, daß** mindestens eine der rotierend antreibbaren Werkzeugaufnahmen (124, 126) als Werkzeugaufnahme für dein Schwerlastwerkzeug (80a, b) ausgebildet ist.

35. Werkzeugmaschine nach einem der Ansprüche 30 bis 34, **dadurch gekennzeichnet, daß** der Werkzeugträgerkopf (60) eine diesen quer zu der Achse (62) durchsetzende Werkzeugspindel (120, 160) mit mindestens einer Werkzeugaufnahme (126, 128) aufweist.

36. Werkzeugmaschine nach Anspruch 35, **dadurch gekennzeichnet, daß** die Werkzeugspindel (120, 160) an beiden gegenüberliegenden Enden jeweils eine Werkzeugaufnahme (126, 128) aufweist.

37. Werkzeugmaschine nach einem der Ansprüche 31 bis 36, **dadurch gekennzeichnet, daß** der Werkzeugträgerkopf (60) mehrere Werkzeugaufnahmen (126, 174, 128) für rotierend angetriebene Werkzeuge (80a, 84, 80b) aufweist.

38. Werkzeugmaschine nach einem der Ansprüche 31 bis 37, **dadurch gekennzeichnet, daß** die mehreren Werkzeugaufnahmen für rotierend angetriebene Werkzeuge durch einen gemeinsamen Antrieb antreibbar sind.

39. Werkzeugmaschine nach Anspruch 38, **dadurch gekennzeichnet, daß** durch den gemeinsamen Antrieb mindestens eine der Werkzeugaufnahmen (126, 128) mit größerer Untersetzung antreibbar ist als mindestens eine andere der Werkzeugaufnahmen (174).

40. Werkzeugmaschine nach einem der Ansprüche 37 bis 39, **dadurch gekennzeichnet, daß** ein Antriebsmotor (230) des gemeinsamen Antriebs an dem Lagergehäuse (58) angeordnet ist.

41. Werkzeugmaschine nach einem der voranstehenden Ansprüche, **dadurch gekennzeichnet, daß** der Werkzeugträgerkopf (60) relativ zur Arbeitsspindel (26) derart bewegbar ist, daß in einer Arbeitsstellung von einem der Werkzeuge (80a, b, 84a, b) die diesem zugeordnete Seite (78) des Werkzeugträgerkopfes (60) einer Umfangsseite (219) des Werkstücks (W) zugewandt ist und daß in einer weiteren Arbeitsstellung eines der Werkzeuge (80a, b, 84a, b) die diesem zugeordnete Seite des Werkzeugträgerkopfes (60) einer Stirnseite (220) des Werkstücks (W) zugewandt ist.

42. Werkzeugmaschine nach einem der voranstehenden Ansprüche, **dadurch gekennzeichnet, daß** der Werkzeugträgerkopf (60) relativ zur Arbeitsspindel (26) derart bewegbar ist, daß in einer Arbeitsstellung von einem der Werkzeuge (80a, b, 84a, b) mit quer zur Längsbewegungsachse verlaufender Hauptrichtung (92a, b, 94a, b) das Werkstück (W) umfangsseitig bearbeitet werden kann und daß in einer Arbeitsstellung von einem der Werkzeuge (80a, b, 84a, b) mit quer zur Querbewegungsachse verlaufender Hauptrichtung (92a, b, 94a, b) das Werkstück (W) stirnseitig bearbeitet werden kann.

43. Werkzeugmaschine nach einem der voranstehenden Ansprüche, **dadurch gekennzeichnet, daß** der Werkzeugträgerkopf (60) über eine der Spindelachse (28) zugewandte Seite des Lagergehäuses (58) überstehend am Lagerkörper (58) angeordnet ist.

44. Werkzeugmaschine nach einem der voranstehenden Ansprüche, **dadurch gekennzeichnet, daß** der Werkzeugträgerkopf (60) über eine in dieselbe Richtung wie das Werkstück (W) mit seiner Stirnseite (220) weisende Seite des Lagergehäuses (58) überstehend angeordnet ist.

45. Werkzeugmaschine nach einem der voranstehenden Ansprüche, **dadurch gekennzeichnet, daß** das Lagergehäuse (58) in allen möglichen Stellungen des Werkzeugträgerkopfes (60) relativ zur Arbeitsspindel (26) stets auf derselben Seite einer durch die Spindelachse (28) hindurch und quer zu der durch die Querbewegungsachse und die Längsbewegungsachse aufgespannten Ebene (56) verlaufenden Mittelebene (31) angeordnet ist.

46. Werkzeugmaschine nach einem der voranstehenden Ansprüche, **dadurch gekennzeichnet, daß** in allen möglichen Stellungen des Werkzeugträgerkopfes (60) ein den ersten Werkzeugträger (32) tragendes Schlittensystem (36, 40, 44) auf derselben Seite einer durch die Spindelachse (28) hindurch und quer zu der durch die Querbewegungsachse und die Längsbewegungsachse aufgespannten Ebene (56) verlaufenden Mittelebene (31) angeordnet ist.

47. Werkzeugmaschine nach einem der voranstehenden Ansprüche, **dadurch gekennzeichnet, daß** das Lagergehäuse (58) des ersten Werkzeugträgers (32) und ein Lagergehäuse (48) eines zweiten Werkzeugträgers (34) auf einander gegenüberliegenden Seiten einer durch die Spindelachse (28) und parallel zur X/Z-Ebene (56) verlaufenden Mittelebene (31) angeordnet sind.

48. Werkzeugmaschine nach einem der voranstehenden Ansprüche, **dadurch gekennzeichnet, daß** das Maschinengestell (10) einen Maschinenbettkörper (12) umfaßt, an dessen einer Seite die Arbeitsspindel (26) angeordnet ist und an dessen weiterer Seite ein Schlittensystem (36, 40, 44) angeordnet ist, welches den ersten Werkzeugträger (32) mit dem um die Achse (62) drehbaren Werkzeugträgerkopf (60) trägt.

49. Werkzeugmaschine nach einem der voranstehenden Ansprüche, **dadurch gekennzeichnet, daß** ein die Arbeitsspindel (26) aufnehmendes Spindelgehäuse (24) stationär oder nur in Richtung der Längsbewegungsachse bewegbar am Maschinengestell (10) angeordnet ist.

50. Werkzeugmaschine nach einem der voranstehenden Ansprüche, **dadurch gekennzeichnet, daß** als Werkzeugträgerkopf ein einem ersten Arbeitsraum (330) und einer ersten Arbeitsspindel (314) zugeordneter erster frontseitiger Werkzeugträger (392) vorgesehen ist.

51. Drehmaschine nach Anspruch 50, **dadurch gekennzeichnet, daß** der erste frontseitige Werkzeugträger (392) eine Reihe (396) von in einer Längsrichtung (397) aufeinanderfolgend angeordneten Werkzeugen (394) aufweist.

52. Drehmaschine nach Anspruch 51, **dadurch gekennzeichnet, daß** die Längsrichtung (397) ungefähr parallel zur Querrichtung (364) verläuft.

53. Drehmaschine nach einem der voranstehenden Ansprüche 50 bis 52, **dadurch gekennzeichnet, daß** der erste frontseitige Werkzeugträger (392') mindestens zwei um eine Schwenkachse (398) im Winkelabstand zueinander angeordnete Werkzeuge (394a, b) aufweist, welche durch Verschwenken des Werkzeugträgers (392') um die Schwenkachse (398) in eine aktive oder inaktive Stellung bringbar sind.

54. Drehmaschine nach Anspruch 53, **dadurch gekennzeichnet, daß** die Schwenkachse (398) als durch die Maschinensteuerung (410) steuerbare B-Achse ausgebildet ist.

55. Werkzeugmaschine nach einem der voranstehenden Ansprüche, **dadurch gekennzeichnet, daß** als Werkzeugträgerkopf ein einem zweiten Arbeitsraum (370) und einer zweiten Arbeitsspindel (354) zugeordneter zweiter frontseitiger Werkzeugträger (372) vorgesehen ist.

56. Drehmaschine nach Anspruch 55, **dadurch gekennzeichnet, daß** der zweite frontseitige Werkzeugträger (372) eine Reihe (376) von in einer Längsrichtung (377) aufeinanderfolgend angeordneten Werkzeugen (374) aufweist.

57. Drehmaschine nach Anspruch 56, **dadurch gekennzeichnet, daß** die Längsrichtung (377) ungefähr parallel zur Bewegungsrichtung (X) des zweiten frontseitigen Werkzeugträger (372) verläuft.

58. Drehmaschine nach einem der Ansprüche 55 bis 57, **dadurch gekennzeichnet, daß** der zweite frontseitige Werkzeugträger (372') mindestens zwei im Winkelabstand um eine Schwenkachse (378) angeordnete Werkzeuge (374) aufweist, die durch ein Schwenken des zweiten Werkzeugträgers (372) um die Schwenkachse (378) von einer aktiven in eine inaktive Stellung und umgekehrt bewegbar sind.

59. Drehmaschine nach Anspruch 58, **dadurch gekennzeichnet, daß** die Schwenkachse (378) als von der Maschinensteuerung (410) steuerbare B-Achse ausgebildet ist.

60. Drehmaschine nach einem der Ansprüche 50 bis 59, **dadurch gekennzeichnet, daß** die Werkzeuge (374, 394) der frontseitigen Werkzeugträger (372, 392) so relativ zur Schwenkachse (378, 398) angeordnet sind, daß die beim Zerspanen auf die Werkzeuge (374, 394) wirkende Kraft im wesentlichen in radialer Richtung zur Schwenkachse (378, 398) gerichtet ist.

61. Werkzeugmaschine nach einem der voranstehenden Ansprüche, **dadurch gekennzeichnet, daß** die Querbewegungsachse einer X-Achse (X) der Werkzeugmaschine entspricht.

62. Werkzeugmaschine nach einem der voranstehenden Ansprüche, **dadurch gekennzeichnet, daß** die Längsbewegungsachse einer Z-Achse (Z) der Werkzeugmaschine entspricht.
